# EUROPÄISCHE PATENTSCHRIFT

(11) **EP 3 380 567 B1**
(45) Veröffentlichungstag und Bekanntmachung des Hinweises auf die Patenterteilung: **28.09.2022**
(21) Anmeldenummer: 16729820.7
(22) Anmeldetag: 03.06.2016
(51) Int. Cl.: C09D 5/00, B05D 7/16

(54) **VERFAHREN ZUR HERSTELLUNG EINER MEHRSCHICHTLACKIERUNG**
METHOD FOR PRODUCING A MULTILAYER COATING
PROCEDE DE FABRICATION D'UNE PEINTURE MULTICOUCHES

(30) Priorität: 26.11.2015 EP 15196416
(43) Veröffentlichungstag der Anmeldung: 03.10.2018
(73) Patentinhaber: BASF Coatings GmbH, 48165 Münster (DE)
(72) Erfinder: CORTEN, Cathrin, 59423 Unna (DE); EIERHOFF, Dirk, 48163 Münster (DE); WILM, Patrick, 59227 Ahlen (DE); SCHNIEDERS, Britta, 49716 Meppen (DE); FREITAG, Nicole, 48163 Münster (DE); GRUMPE, Heinz-Ulrich, 48151 Münster (DE); SCHWARZ, Jörg, 48163 Münster (DE)
(74) Vertreter: BASF IP Association
(86) Internationale Anmeldenummer: PCT/EP2016/062586
(87) Internationale Veröffentlichungsnummer: WO 2017/088988

(56) Entgegenhaltungen:
- WO-A1-01/25307
- WO-A1-98/23390
- WO-A1-2015/090799
- WO-A1-2015/091204

## Beschreibung

Die vorliegende Erfindung betrifft ein Verfahren zur Herstellung einer Mehrschichtlackierung bei dem eine Basislackschicht oder mehrere direkt aufeinander folgende Basislackschichten direkt auf einem mit einer gehärteten Elektrotauchlackierung beschichteten metallischen Substrat hergestellt werden, direkt auf der einen oder der obersten der mehreren Basislackschichten eine Klarlackschicht hergestellt wird und anschließend die eine oder die mehreren Basislackschichten und die Klarlackschicht gemeinsam gehärtet werden. Zudem betrifft die vorliegende Erfindung eine Mehrschichtlackierung, die nach dem erfindungsgemäßen Verfahren hergestellt wurde.

### Stand der Technik

Mehrschichtlackierungen auf metallischen Substraten, beispielsweise Mehrschichtlackierungen im Bereich der Automobilindustrie, sind bekannt. In der Regel umfassen solche Mehrschichtlackierungen, vom metallischen Substrat aus betrachtet, eine Elektrotauchlackschicht, eine direkt auf die Elektrotauchlackschicht aufgebrachte, meist als Füllerschicht bezeichnete Schicht, mindestens eine Farb- und/oder Effektpigmente enthaltende und in der Regel als Basislackschicht bezeichnete Schicht sowie eine Klarlackschicht.

Die grundsätzlichen Zusammensetzungen und Funktionen der genannten Schichten und der zum Aufbau diese Schichten notwendigen Beschichtungsmittel, das heißt Elektrotauchlacke, so genannte Füller, als Basislacke bekannte Farb- und/oder Effektpigmente enthaltende Beschichtungsmittel und Klarlacke, sind bekannt. So dient beispielsweise die elektrophoretisch aufgebrachte Elektrotauchlackschicht grundsätzlich dem Korrosionsschutz des Substrats. Die Füllerschicht dient hauptsächlich dem Schutz vor mechanischer Beanspruchung wie beispielsweise Steinschlag und zudem dem Ausfüllen von Unebenheiten des Substrats. Die nächste, als Basislackschicht bezeichnete Schicht ist hauptverantwortlich für die Erzeugung von ästhetischen Eigenschaften wie der Farbe und/oder Effekten wie dem Flop, während die dann folgende Klarlackschicht insbesondere der Kratzfestigkeit sowie dem Glanz der Mehrschichtlackierung dient.

Die Herstellung dieser Mehrschichtlackierungen erfolgt im Stand der Technik so, dass zunächst ein Elektrotauchlack, insbesondere ein kathodischer Elektrotauchlack elektrophoretisch auf dem metallischen Substrat, beispielsweise einer Automobilkarosserie, aufgebracht beziehungsweise abgeschieden wird. Das metallische Substrat kann vor der Abscheidung des Elektrotauchlacks unterschiedlich vorbehandelt werden, beispielsweise können bekannte Konversionsbeschichtungen wie Phosphatschichten, insbesondere Zinkphosphatschichten, aufgebracht werden. Der Abscheideprozess des Elektrotauchlacks findet in der Regel in entsprechenden Elektrotauchlackbecken statt. Nach dem Auftrag wird das beschichtete Substrat aus dem Becken entfernt, gegebenenfalls gespült und abgelüftet und/oder zwischengetrocknet, und schließlich wird der aufgetragene Elektrotauchlack gehärtet. Dabei werden Schichtdicken von etwa 15 bis 25 Mikrometer angestrebt. Anschließend wird der so genannte Füller direkt auf die gehärtete Elektrotauchlackschicht aufgetragen, gegebenenfalls abgelüftet und/oder zwischengetrocknet und anschließend gehärtet. Damit die gehärtete Füllerschicht die oben genannten Aufgaben erfüllen kann, werden Schichtdicken von beispielsweise 25 bis 45 Mikrometern angestrebt. Direkt auf die gehärtete Füllerschicht wird anschließend ein so genannter Farb- und/oder Effektpigmente enthaltener Basislack aufgebracht, dieser gegebenenfalls abgelüftet und/oder zwischengetrocknet und auf die so hergestellte Basislackschicht ohne separate Härtung direkt ein Klarlack aufgebracht. Anschließend werden die Basislackschicht und die gegebenenfalls zuvor ebenfalls abgelüftete und/oder zwischengetrocknete Klarlackschicht gemeinsam gehärtet (nass-in-nass-Verfahren). Während die gehärtete Basislackschicht grundsätzlich vergleichsweise geringe Schichtdicken von beispielsweise 10 bis 20 Mikrometern aufweist, werden für die gehärtete Klarlackschicht Schichtdicken von beispielsweise 30 bis 60 Mikrometer angestrebt, um die beschriebenen anwendungstechnologischen Eigenschaften zu erreichen. Das Aufbringen von Füller, Basislack und Klarlack kann beispielsweise über die dem Fachmann bekannten Applikationsmethoden der pneumatischen und/oder elektrostatischen Sprühapplikation erfolgen. Füller und Basislack werden heutzutage schon aus ökologischen Gründen vermehrt als wässrige Beschichtungsstoffe eingesetzt.

Solche Mehrschichtlackierungen sowie Verfahren zu deren Herstellung werden beispielsweise in DE 199 48 004 A1, Seite 17, Zeile 37, bis Seite 19, Zeile 22, oder auch in DE 100 43 405 C1, Spalte 3, Absatz [0018], und Spalte 8, Absatz [0052] bis Spalte 9, Absatz [0057], in Verbindung mit Spalte 6, Absatz [0039] bis Spalte 8, Absatz [0050] beschrieben.

Auch wenn die so hergestellten Mehrschichtlackierungen die von der Automobilindustrie gestellten Anforderungen an anwendungstechnologische Eigenschaften und ästhetisches Profil in der Regel erfüllen können, rückt aus ökologischen und ökonomischen Motiven heutzutage immer mehr die Vereinfachung des beschriebenen und vergleichsweise komplexen Herstellprozesses in den Fokus der Automobilhersteller.

So gibt es Ansätze, bei denen versucht wird, auf den separaten Härtungsschritt des direkt auf die gehärtete Elektrotauchlackschicht aufgebrachten Beschichtungsmittels (des im Rahmen des oben beschriebenen Standardverfahrens als Füller bezeichneten Beschichtungsmittels) zu verzichten, gegebenenfalls dabei auch die Schichtdicke der aus diesem Beschichtungsmittel hergestellten Beschichtungsschicht herabzusetzen. In der Fachwelt wird diese also nicht separat gehärtete Beschichtungsschicht dann häufig als Basislackschicht (und nicht mehr als Füllerschicht) bezeichnet beziehungsweise in Abgrenzung zu einer darauf aufgebrachten zweiten Basislackschicht als erste Basislackschicht bezeichnet. Teilweise wird sogar versucht, vollständig auf diese Beschichtungsschicht zu verzichten (wobei dann also lediglich eine so genannte Basislackschicht direkt auf der Elektrotauchlackschicht hergestellt wird, welche ohne separaten Härtungsschritt mit einem Klarlack überschichtet wird, letztlich also ebenfalls auf einen separaten Härtungsschritt verzichtet wird). Anstelle des separaten Härtungsschritts und eines zusätzlichen abschließenden Härtungsschritts soll also lediglich ein abschließender Härtungsschritt nach Applikation aller auf der Elektrotauchlackschicht aufgebrachten Beschichtungsschichten erfolgen.

Das Verzichten eines separaten Härtungsschritts des direkt auf die Elektrotauchlackschicht aufgebrachten Beschichtungsmittels ist unter ökologischen und ökonomischen Gesichtspunkten sehr vorteilhaft. Denn dies führt zu Energieeinsparung und der gesamte Herstellungsprozess kann selbstverständlich wesentlich stringenter ablaufen.

Statt des separaten Härtungsschritts ist es also von Vorteil, dass die direkt auf der Elektrotauchlackschicht hergestellte Beschichtungsschicht lediglich bei Raumtemperatur abgelüftet und/oder bei erhöhten Temperaturen zwischengetrocknet wird, ohne dabei eine Härtung, die bekanntermaßen regelmäßig erhöhte Härtungstemperaturen und/oder lange Härtungszeiten benötigt, durchzuführen.

Problematisch ist jedoch, dass bei dieser Form der Herstellung heutzutage oft nicht die geforderten anwendungstechnologischen und ästhetischen Eigenschaften erlangt werden können.

So können durch den Verzicht auf die separate Härtung der direkt auf die Elektrotauchlackschicht aufgebrachten Beschichtungsschicht, beispielsweise der ersten Basislackschicht, vor der Applikation von weiteren Beschichtungsmitteln, beispielsweise einem zweiten Basislack und einem Klarlack, ungewünschte Luft-, Lösemittel- und/oder Feuchtigkeitseinschlüsse entstehen, die sich in Form von Blasen unterhalb der Oberfläche der Gesamtlackierung bemerkbar machen können und bei der abschließenden Härtung aufbrechen können. Die dadurch entstehenden Löcher in der Lackierung, auch Nadelstiche und Kocher genannt, führen zu einem nachteilhaften optischen Erscheinungsbild. Die durch den Gesamtaufbau von erster Basislackschicht, zweiter Basislackschicht und Klarlack anfallende organische Lösemittelbeziehungsweise Wassermenge sowie die durch die Applikation eingetragene Luftmenge ist zu groß, als dass die gesamte Menge innerhalb eines abschließenden Härtungsschritts ohne die Erzeugung von Fehlstellen aus der Mehrschichtlackierung entweichen kann. Im Falle eines wie oben beschriebenen konventionellen Herstellprozesses, bei dem die so genannte Füllerschicht vor der Herstellung einer meist vergleichsweise dünnen (und damit nur vergleichsweise wenig Luft, organische Lösemittel und/oder Wasser enthaltende) Basislackschicht separat eingebrannt wird, ist die Lösung dieses Problems selbstverständlich deutlich weniger anspruchsvoll.

Aber auch bei der Herstellung von Mehrschichtlackierungen, bei denen auf den Einsatz des im Standardprozess als Füller bezeichneten Beschichtungsmittels vollständig verzichtet wird, das heißt also Systemen, in denen also nur ein so genannter Basislack direkt auf die gehärtete Elektrotauchlackschicht aufgebracht wird, stößt man häufig auf die beschriebenen Probleme mit Nadelstichen und Kochern. Denn je nach Anwendung und Gebrauch der herzustellenden Mehrschichtlackierung wird bei vollständigem Verzicht auf die im Standardprozess als Füllerschicht bezeichnete Beschichtung in der Regel eine im Vergleich zu den Standardsystemen dickere Basislackschicht benötigt, um die gewünschten Eigenschaften zu erhalten. Damit ist auch in diesem Fall die Gesamtschichtdicke von Beschichtungsschichten, die im abschließenden Härtungsschritt gehärtet werden müssen, wesentlich höher als im Standardprozess.

Auch weitere relevante Eigenschaften werden beim Aufbau von Mehrschichtlackierungen über das beschriebene Verfahren nicht immer in zufriedenstellendem Maße erreicht. So stellt beispielsweise das Erreichen eines hochwertigen optischen Gesamteindrucks (Appearance), welcher insbesondere von einem guten Verlauf der eingesetzten Beschichtungsmittel beeinflusst wird, eine Herausforderung dar. Die rheologischen Eigenschaften der Beschichtungsmittel müssen hierbei angemessen auf die beschriebene Prozessführung abgestimmt sein. Ähnliches gilt für den Erhalt einer angemessenen Läuferstabilität. Weiterhin ist es schwierig, eine ausreichende Haftung zu erzielen.

Von Vorteil wäre demnach ein Verfahren zur Herstellung von Mehrschichtlackierungen, bei dem auf einen wie oben beschriebenen separaten Härtungsschritt des direkt auf die Elektrotauchlackschicht aufgebrachten Beschichtungsmittels verzichtet werden kann und die hergestellte Mehrschichtlackierung trotzdem ausgezeichnete anwendungstechnologische, insbesondere ästhetische Eigenschaften aufweist.

### Aufgabe

Aufgabe der vorliegenden Erfindung war es demzufolge, ein Verfahren zur Herstellung einer Mehrschichtlackierung auf metallischen Substraten zu finden, bei dem das direkt auf die Elektrotauchlackierung aufgebrachte Beschichtungsmittel nicht separat gehärtet wird, sondern bei dem dieses Beschichtungsmittel stattdessen in einem gemeinsamen Härtungsschritt mit weiteren danach aufgebrachten Beschichtungsschichten gehärtet wird. Trotz dieser Verfahrensvereinfachung sollten die resultierenden Mehrschichtlackierungen hervorragende anwendungstechnologische, insbesondere ästhetische Eigenschaften und Haftungseigenschaften aufweisen. Zudem sollte es auf diese Weise möglich sein, je nach Anforderungen und individuellem Einsatzgebiet, Mehrschichtlackierungen bereitzustellen, in denen die eine oder die mehreren zwischen Elektrotauchlackschicht und Klarlackschicht angeordnete(n) Beschichtungsschicht(en) variable Schichtdicken haben können und in denen insbesondere auch bei höheren Schichtdicken keine Probleme mit Nadelstichen auftreten.

### Technische Lösung

Es wurde gefunden, dass die genannten Aufgaben gelöst werden konnten durch ein neues Verfahren zur Herstellung einer Mehrschichtlackierung (M) auf einem metallischen Substrat (S) umfassend
(1) Herstellung einer gehärteten Elektrotauchlackschicht (E.1) auf dem metallischen Substrat (S) durch elektrophoretisches Aufbringen eines Elektrotauchlacks (e.1) auf das Substrat (S) und anschließende Härtung des Elektrotauchlacks (e.1),
(2) Herstellung (2.1) einer Basislackschicht (B.2.1) oder (2.2) mehrerer direkt aufeinander folgender Basislackschichten (B.2.2.x) direkt auf der gehärteten Elektrotauchlackschicht (E.1) durch (2.1) Aufbringen eines wässrigen Basislacks (b.2.1) direkt auf die Elektrotauchlackschicht (E.1) oder (2.2) direkt aufeinanderfolgendes Aufbringen von mehreren Basislacken (b.2.2.x) auf die Elektrotauchlackschicht (E.1),
(3) Herstellung einer Klarlackschicht (K) direkt auf (3.1) der Basislackschicht (B.2.1) oder (3.2) der obersten Basislackschicht (B.2.2.x) durch Aufbringen eines Klarlacks (k) direkt auf (3.1) die Basislackschicht (B.2.1) oder (3.2) die oberste Basislackschicht (B.2.2.x),
(4) gemeinsame Härtung der (4.1) Basislackschicht (B.2.1) und der Klarlackschicht (K) oder (4.2) der Basislackschichten (B.2.2.x) und der Klarlackschicht (K),
   dadurch gekennzeichnet, dass
   der Basislack (b.2.1) oder mindestens einer der Basislacke (b.2.2.x) mindestens eine wässrige Dispersion (wD) umfasst,
   wobei die Dispersion (wD) mindestens ein Polymerisat mit einer Teilchengröße von 100 bis 500 nm umfasst, dessen Herstellung die aufeinanderfolgende radikalische Emulsionspolymerisation von drei Mischungen (A), (B) und (C) von olefinisch ungesättigten Monomeren umfasst,
   wobei
      - die Mischung (A) mindestens 50 Gew.-% von Monomeren mit einer Löslichkeit in Wasser von kleiner 0,5 g/l bei 25°C enthält und ein Polymer, welches aus der Mischung (A) hergestellt wird, eine Glasübergangstemperatur von 10 bis 65°C besitzt,
      - die Mischung (B) mindestens ein mehrfach ungesättigtes Monomer enthält und ein Polymer, welches aus der Mischung (B) hergestellt wird, eine Glasübergangstemperatur von -35 bis 15°C besitzt,
         und
      - ein Polymer, welches aus der Mischung (C) hergestellt wird, eine Glasübergangstemperatur von -50 bis 15°C besitzt,
         und wobei

      i. zunächst die Mischung (A) polymerisiert wird,
      ii. dann die Mischung (B) in Gegenwart des unter i. hergestellten Polymerisats polymerisiert wird,
         und
      iii. danach die Mischung (C) in Gegenwart des unter ii. hergestellten Polymerisats polymerisiert wird.

Das oben genannte Verfahren wird in der Folge auch als erfindungsgemäßes Verfahren bezeichnet und ist dementsprechend Gegenstand der vorliegenden Erfindung. Bevorzugte Ausführungsformen des erfindungsgemäßen Verfahrens sind der weiter unten folgenden Beschreibung sowie den Unteransprüchen zu entnehmen.

Weiterhin Gegenstand der vorliegenden Erfindung ist eine Mehrschichtlackierung, die anhand des erfindungsgemäßen Verfahrens hergestellt wurde.

Das erfindungsgemäße Verfahren erlaubt die Herstellung von Mehrschichtlackierungen unter Verzicht auf einen separaten Härtungsschritt der direkt auf der Elektrotauchlackschicht hergestellten Beschichtungsschicht. Der besseren Übersichtlichkeit halber wird diese Beschichtungsschicht im Rahmen der vorliegenden Erfindung als Basislackschicht bezeichnet. Statt separater Härtung wird diese Basislackschicht zusammen mit gegebenenfalls weiteren Basislackschichten unterhalb der Klarlackschicht und der Klarlackschicht gemeinsam gehärtet. Trotzdem resultieren durch die Anwendung des erfindungsgemäßen Verfahrens Mehrschichtlackierungen, die hervorragende anwendungstechnologische, insbesondere ästhetische Eigenschaften aufweisen.

### Ausführliche Beschreibung

Zunächst seien einige im Rahmen der vorliegenden Erfindung verwendeten Begriffe erläutert.

Das Aufbringen eines Beschichtungsmittels auf ein Substrat beziehungsweise das Herstellen einer Beschichtungsschicht auf einem Substrat verstehen sich wie folgt. Das jeweilige Beschichtungsmittel wird so aufgebracht, dass die daraus hergestellte Beschichtungsschicht auf dem Substrat angeordnet ist, jedoch nicht zwangsläufig in direktem Kontakt mit dem Substrat stehen muss. Zwischen der Beschichtungsschicht und dem Substrat können beispielsweise noch andere Schichten angeordnet sein. Beispielsweise wird in Stufe (1) die gehärtete Elektrotauchlackschicht (E.1) auf dem metallischen Substrat (S) hergestellt, jedoch kann zwischen dem Substrat und der Elektrotauchlackschicht noch eine wie weiter unten beschriebene Konversionsbeschichtung wie eine Zinkphosphatierung angeordnet sein.

Dasselbe Prinzip gilt für das Aufbringen eines Beschichtungsmittels (b) auf eine mittels eines anderen Beschichtungsmittels (a) hergestellte Beschichtungsschicht (A) beziehungsweise die Herstellung einer Beschichtungsschicht (B) auf einer anderen Beschichtungsschicht (A). Die Beschichtungsschicht (B) muss nicht zwangsläufig mit der Beschichtungsschicht (A) in Kontakt stehen, sie muss lediglich darüber, das heißt auf der dem Substrat abgewandten Seite der Beschichtungsschicht (A) angeordnet sein.

Im Unterschied dazu versteht sich das Aufbringen eines Beschichtungsmittels direkt auf ein Substrat beziehungsweise das Herstellen einer Beschichtungsschicht direkt auf einem Substrat wie folgt. Das jeweilige Beschichtungsmittel wird so aufgebracht, dass die daraus hergestellte Beschichtungsschicht auf dem Substrat angeordnet ist und in direktem Kontakt mit dem Substrat steht. Zwischen Beschichtungsschicht und Substrat ist also insbesondere keine andere Schicht angeordnet.

Selbiges gilt selbstverständlich für das Aufbringen eines Beschichtungsmittels (b) direkt auf eine mittels eines anderen Beschichtungsmittels (a) hergestellte Beschichtungsschicht (A) beziehungsweise die Herstellung einer Beschichtungsschicht (B) direkt auf einer anderen Beschichtungsschicht (A). In diesem Fall stehen die beiden Beschichtungsschichten in direktem Kontakt, sind also direkt aufeinander angeordnet. Insbesondere befindet sich keine weitere Schicht zwischen den Beschichtungsschichten (A) und (B). Dasselbe Prinzip gilt selbstverständlich für ein direkt aufeinanderfolgendes Aufbringen von Beschichtungsmitteln beziehungsweise die Herstellung von direkt aufeinanderfolgenden Beschichtungsschichten.

Unter Ablüften, Zwischentrocknen und Härten werden im Rahmen der vorliegenden Erfindung die dem Fachmann im Zusammenhang mit Verfahren zur Herstellung von Mehrschichtlackierungen geläufigen Begriffsinhalte verstanden.

Somit versteht sich der Begriff Ablüften grundsätzlich als Bezeichnung für das Verdunsten beziehungsweise Verdunsten lassen von organischen Lösemitteln und/oder Wasser eines im Rahmen der Herstellung einer Lackierung aufgebrachten Beschichtungsmittels bei meist Umgebungstemperatur (das heißt Raumtemperatur), beispielsweise 15 bis 35°C für eine Dauer von beispielsweise 0,5 bis 30 min. Während des Ablüftens verdunsten also organische Lösemittel und/oder Wasser, die in dem aufgebrachten Beschichtungsmittel enthalten sind. Da das Beschichtungsmittel jedenfalls direkt nach dem Auftragen und zu Beginn des Ablüftens noch fließfähig ist, kann es während des Ablüftens verlaufen. Denn zumindest ein durch Spritzapplikation aufgetragenes Beschichtungsmittel wird in der Regel tröpfchenförmig und nicht in homogener Dicke aufgetragen. Es ist aber durch die enthaltenen organischen Lösemittel und/oder Wasser fließfähig und kann somit durch das Verlaufen einen homogenen, glatten Beschichtungsfilm bilden. Gleichzeitig verdunsten organische Lösemittel und/oder Wasser sukzessive, sodass nach der Ablüftphase eine vergleichsweise glatte Beschichtungsschicht entstanden ist, die im Vergleich zum aufgebrachten Beschichtungsmittel weniger Wasser und/oder Lösemittel enthält. Die Beschichtungsschicht liegt nach dem Ablüften aber noch nicht im gebrauchsfertigen Zustand vor. Sie ist zwar beispielsweise nicht mehr fließfähig, aber noch weich beziehungsweise klebrig, gegebenenfalls lediglich angetrocknet. Insbesondere ist die Beschichtungsschicht noch nicht wie weiter unten beschrieben gehärtet.

Unter Zwischentrocknen versteht man somit ebenfalls das Verdunsten beziehungsweise Verdunsten lassen von organischen Lösemitteln und/oder Wasser eines im Rahmen der Herstellung einer Lackierung aufgebrachten Beschichtungsmittels, meist bei gegenüber der Umgebungstemperatur erhöhter Temperatur von beispielsweise 40 bis 90°C, für eine Dauer von beispielsweise 1 bis 60 min. Auch beim Zwischentrocknen wird damit das aufgetragene Beschichtungsmittel einen Anteil von organischen Lösemitteln und/oder Wasser verlieren. Bezogen auf ein bestimmtes Beschichtungsmittel gilt in der Regel, dass das Zwischentrocknen im Vergleich zum Ablüften bei beispielsweise höheren Temperaturen und/oder für einen längeren Zeitraum von statten geht, sodass im Vergleich zum Ablüften auch ein höherer Anteil von organischen Lösemitteln und/oder Wasser aus der aufgebrachten Beschichtungsschicht entweicht. Aber auch durch das Zwischentrocknen erhält man keine Beschichtungsschicht im gebrauchsfertigen Zustand, das heißt keine wie weiter unten beschrieben gehärtete Beschichtungsschicht. Eine typische Abfolge von Ablüften und Zwischentrocken wäre beispielsweise, eine aufgebrachte Beschichtungsschicht für 3 min bei Umgebungstemperatur abzulüften und dann bei 60°C für 10 min zwischenzutrocken. Eine abschließende Abgrenzung beider Begriffe voneinander ist jedoch weder notwendig noch gewollt. Der reinen Übersichtlichkeit halber werden diese Begriffe verwendet, um deutlich zu machen, dass eine der unten beschriebenen Härtung vorausgehende, variable und sequenzielle Konditionierung einer Beschichtungsschicht stattfinden kann. Dabei können, abhängig vom Beschichtungsmittel, der Abdunsttemperatur und Abdunstdauer, mehr oder weniger hohe Anteile der im Beschichtungsmittel enthaltenen organischen Lösemittel und/oder Wasser abdunsten. Gegebenenfalls kann dabei sogar bereits ein Anteil der in den Beschichtungsmittel enthaltenen Polymere als Bindemittel wie unten beschrieben miteinander vernetzen oder verschlaufen. Sowohl beim Ablüften als auch beim Zwischentrocknen wird aber keine gebrauchsfertige Beschichtungsschicht erhalten, wie dies bei der unten beschriebenen Härtung der Fall ist. Demzufolge ist die Härtung eindeutig vom Ablüften und Zwischentrocknen abgegrenzt.

Demnach versteht sich unter Härtung einer Beschichtungsschicht die Überführung einer solchen Schicht in den gebrauchsfertigen Zustand, das heißt also in einen Zustand, in der das mit der jeweiligen Beschichtungsschicht ausgestattete Substrat transportiert, gelagert und bestimmungsgemäß verwendet werden kann. Eine gehärtete Beschichtungsschicht ist also insbesondere nicht mehr weich oder klebrig, sondern als fester Beschichtungsfilm konditioniert, der auch bei weiterer Aussetzung mit wie weiter unten beschriebenen Härtungsbedingungen seine Eigenschaften wie Härte oder Haftung auf dem Untergrund nicht mehr wesentlich ändert.

Bekanntermaßen können Beschichtungsmittel grundsätzlich physikalisch und/oder chemisch gehärtet werden, je nach enthaltenen Komponenten wie Bindemitteln und Vernetzungsmitteln. Bei der chemischen Härtung kommen die thermisch-chemische Härtung und die aktinisch-chemische Härtung in Betracht. Ein Beschichtungsmittel kann, beispielsweise sofern es thermisch-chemisch härtbar ist, selbst- und/oder fremdvernetzend sein. Unter der Angabe, dass ein Beschichtungsmittel selbst- und/oder fremdvernetzend ist, ist im Rahmen der vorliegenden Erfindung zu verstehen, dass dieses Beschichtungsmittel Polymere (auch genannt Polymerisate) als Bindemittel und gegebenenfalls Vernetzungsmittel enthält, die entsprechend miteinander vernetzen können. Die zugrunde liegenden Mechanismen sowie einsetzbaren Bindemittel und Vernetzungsmittel (filmbildende Komponenten) werden weiter unten beschrieben.

Im Rahmen der vorliegenden Erfindung bedeutet "physikalisch härtbar" beziehungsweise der Begriff "physikalische Härtung" die Bildung einer gehärteten Beschichtungsschicht durch Abgabe von Lösemittel aus Polymerlösungen oder Polymerdispersionen, wobei die Härtung durch eine Verschlaufung von Polymerketten erreicht wird. Solche Beschichtungsmittel werden in der Regel als Einkomponenten-Beschichtungsmittel formuliert.

Im Rahmen der vorliegenden Erfindung bedeutet "thermisch-chemisch härtbar" beziehungsweise der Begriff "thermisch-chemische Härtung" die durch chemische Reaktion von reaktiven funktionellen Gruppen initiierte Vernetzung einer Lackschicht (Bildung einer gehärteten Beschichtungsschicht), wobei die energetische Aktivierung dieser chemischen Reaktion durch thermische Energie möglich ist. Dabei können unterschiedliche funktionelle Gruppen, die zueinander komplementär sind, miteinander reagieren (komplementäre funktionelle Gruppen) und/oder die Bildung der gehärteten Schicht beruht auf der Reaktion von autoreaktiven Gruppen, das heißt also funktionellen Gruppen, die untereinander mit Gruppen ihrer Art reagieren. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeile 24, bekannt.

Bei dieser Vernetzung kann es sich um eine Selbstvernetzung und/oder eine Fremdvernetzung handeln. Sind beispielsweise die komplementären reaktiven funktionellen Gruppen bereits in einem als Bindemittel eingesetzten organischen Polymer, beispielsweise einem Polyester, einem Polyurethan oder einen Poly(meth)acrylat vorhanden, liegt eine Selbstvernetzung vor. Eine Fremdvernetzung liegt beispielsweise vor, wenn ein (erstes) organisches Polymer enthaltend bestimmte funktionelle Gruppen, beispielsweise Hydroxylgruppen, mit einem an sich bekannten Vernetzungsmittel, beispielsweise einem Polyisocyanat und/oder einem Melaminharz, reagiert. Das Vernetzungsmittel enthält also reaktive funktionelle Gruppen, die zu den in dem als Bindemittel eingesetzten (ersten) organischen Polymer vorhandenen reaktiven funktionellen Gruppen komplementär sind.

Insbesondere im Fall der Fremdvernetzung kommen die an sich bekannten Einkomponenten- und Mehrkomponentensysteme, insbesondere Zweikomponenten-systeme in Betracht.

In thermisch-chemisch härtbaren Einkomponenten-Systemen liegen die zu vernetzenden Komponenten, beispielsweise organische Polymere als Bindemittel und Vernetzungsmittel, nebeneinander, das heißt in einer Komponente, vor. Voraussetzung hierfür ist, dass die zu vernetzenden Komponenten erst bei höheren Temperaturen von beispielsweise über 100°C effektiv miteinander reagieren, das heißt Härtungsreaktionen eingehen. Andernfalls müssten die zu vernetzenden Komponenten getrennt voneinander gelagert werden und erst kurz vor dem Aufbringen auf ein Substrat miteinander vermischt werden, um eine vorzeitige zumindest anteilige thermisch-chemische Härtung zu vermeiden (vergleiche Zweikomponenten-Systeme). Als beispielhafte Kombination seien hydroxyfunktionelle Polyester und/oder Polyurethane mit Melaminharzen und/oder blockierten Polyisocyanaten als Vernetzungsmittel genannt.

In thermisch-chemisch härtbaren Zweikomponenten-Systemen liegen die zu vernetzenden Komponenten, beispielsweise die organischen Polymere als Bindemittel und die Vernetzungsmittel, getrennt voneinander in mindestens zwei Komponenten vor, die erst kurz vor der Applikation zusammengegeben werden. Diese Form wird dann gewählt, wenn die zu vernetzenden Komponenten bereits bei Umgebungstemperaturen oder leicht erhöhten Temperaturen von beispielsweise 40 bis 90°C effektiv miteinander reagieren. Als beispielhafte Kombination seien hydroxyfunktionelle Polyester und/oder Polyurethane und/oder Poly(meth)acrylate mit freien Polyisocyanaten als Vernetzungsmittel genannt.

Es ist auch möglich, dass ein organisches Polymer als Bindemittel sowohl selbstvernetzende als auch fremdvernetzende funktionelle Gruppen aufweist und dann mit Vernetzungsmitteln kombiniert wird.

Im Rahmen der vorliegenden Erfindung ist unter "aktinisch-chemisch härtbar" beziehungsweise dem Begriff "aktinisch-chemische Härtung" die Tatsache zu verstehen, dass die Härtung unter Anwendung aktinischer Strahlung, nämlich elektromagnetischer Strahlung wie nahes Infrarot (NIR) und UV-Strahlung, insbesondere UV-Strahlung, sowie Korpuskularstrahlung wie Elektronenstrahlung zur Härtung möglich ist. Die Härtung durch UV-Strahlung wird üblicherweise durch radikalische oder kationische Photoinitiatoren initiiert. Typische aktinisch härtbare funktionelle Gruppen sind Kohlenstoff-KohlenstoffDoppelbindungen, wobei hierbei in der Regel radikalische Photoinitiatoren zum Einsatz kommen. Der aktinischen Härtung liegt also ebenfalls eine chemische Vernetzung zugrunde.

Selbstverständlich wird bei der Härtung eines als chemisch härtbar gekennzeichnetes Beschichtungsmittel immer auch eine physikalische Härtung, das heißt eine Verschlaufung von Polymerketten, auftreten. Die physikalische Härtung kann sogar den überwiegenden Anteil ausmachen. Trotzdem wird ein solches Beschichtungsmittel, sofern es zumindest anteilig filmbildende Komponenten enthält, die chemisch härtbar sind, als chemisch härtbar bezeichnet.

Aus Obigem folgt, dass je nach Art des Beschichtungsmittels und den darin enthaltenen Komponenten eine Härtung durch unterschiedliche Mechanismen bewirkt wird, die selbstverständlich auch unterschiedliche Bedingungen bei der Härtung notwendig machen, insbesondere unterschiedliche Härtungstemperaturen und Härtungsdauern.

Im Falle eines rein physikalisch härtenden Beschichtungsmittels erfolgt eine Härtung bevorzugt zwischen 15 und 90°C über einen Zeitraum von 2 bis 48 Stunden. In diesem Fall unterscheidet sich die Härtung vom Ablüften und/oder Zwischentrocken also gegebenenfalls lediglich durch die Dauer der Konditionierung der Beschichtungsschicht. Eine Differenzierung zwischen Ablüften und Zwischentrocknen ist zudem nicht sinnvoll. Möglich wäre beispielsweise, eine durch Aufbringen eines physikalisch härtbaren Beschichtungsmittels hergestellte Beschichtungsschicht zunächst bei 15 bis 35°C für eine Dauer von beispielsweise 0,5 bis 30 min abzulüften beziehungsweise zwischenzutrocknen und anschließend bei 50°C für eine Dauer von 5 Stunden zu härten.

Bevorzugt sind aber zumindest einige der im Rahmen des erfindungsgemäßen Verfahrens einzusetzenden Beschichtungsmittel, das heißt Elektrotauchlacke, wässrige Basislacke und Klarlacke thermisch-chemisch härtbar, insbesondere bevorzugt thermisch-chemisch härtbar und fremdvernetzend.

Grundsätzlich und im Rahmen der vorliegenden Erfindung gilt dabei, dass die Härtung von thermisch-chemisch härtbaren Einkomponenten-Systemen bevorzugt bei Temperaturen von 100 bis 250°C, bevorzugt 100 bis 180°C für eine Dauer von 5 bis 60 min, bevorzugt 10 bis 45 min durchgeführt wird, da diese Bedingungen in der Regel notwendig sind, um die Beschichtungsschicht durch chemische Vernetzungsreaktionen in eine gehärtete Beschichtungsschicht zu überführen. Dementsprechend gilt, dass eine vor der Härtung stattfindende Ablüft- und/oder Zwischentrockungsphase bei geringeren Temperaturen und/oder für kürzere Zeiten erfolgt. Beispielsweise kann in einem solchen Fall bei 15 bis 35°C für eine Dauer von beispielsweise 0,5 bis 30 min abgelüftet werden und/oder bei einer Temperatur von beispielsweise 40 bis 90°C für eine Dauer von beispielsweise 1 bis 60 min zwischengetrocknet werden.

Grundsätzlich und im Rahmen der vorliegenden Erfindung gilt, dass die Härtung von thermisch-chemisch härtbaren Zweikomponenten-Systemen bei Temperaturen von beispielsweise 15 bis 90°C, wie insbesondere 40 bis 90°C für eine Dauer von 5 bis 80 min, bevorzugt 10 bis 50 min durchgeführt werden kann. Dementsprechend gilt, dass eine vor der Härtung stattfindende Ablüft- und/oder Zwischentrockungsphase bei geringeren Temperaturen und/oder für kürzere Zeiten erfolgt. Beispielsweise ist es in einem solchen Fall nicht mehr sinnvoll, zwischen den Begriffen Abdunsten und Zwischentrocken zu unterscheiden. Eine der Härtung vorausgehende Ablüft- beziehungsweise Zwischentrockungsphase kann beispielsweise bei 15 bis 35°C für eine Dauer von beispielsweise 0,5 bis 30 min ablaufen, jedoch jedenfalls bei geringeren Temperaturen und/oder für geringere Zeiten als die dann folgende Härtung.

Dies schließt natürlich nicht aus, dass ein thermisch-chemisch härtbares Zweikomponenten-System bei höheren Temperaturen gehärtet wird. Beispielsweise werden im weiter unten genauer beschriebenen Schritt (4) des erfindungsgemäßen Verfahrens eine Basislackschicht oder mehrere Basislackschichten gemeinsam mit einer Klarlackschicht gehärtet. Sind innerhalb der Schichten sowohl thermisch-chemisch härtbare Einkomponenten- als auch Zweikomponenten-Systeme vorhanden, beispielsweise ein Einkomponenten-Basislack und ein Zweikomponenten-Klarlack, so richtet sich die gemeinsame Härtung selbstverständlich nach den für das Einkomponenten-System notwendigen Härtungsbedingungen.

Alle im Rahmen der vorliegenden Erfindung erläuterten Temperaturen verstehen sich als Temperatur des Raumes, in dem sich das beschichtete Substrat befindet. Gemeint ist also nicht, dass das Substrat selbst die entsprechende Temperatur aufweisen muss.

Die im Rahmen der vorliegenden Erfindung anzuwendenden Messmethoden zur Bestimmung bestimmter Kenngrößen sind dem Beispielteil zu entnehmen. Sofern nicht explizit anders angegeben, sind diese Messmethoden zur Bestimmung der jeweiligen Kenngröße einzusetzen.

Wird im Rahmen der vorliegenden Erfindung auf eine offizielle Norm ohne Hinweis auf den offiziellen Gültigkeitszeitraum verwiesen, ist hiermit selbstverständlich die zum Anmeldetag geltende Fassung der Norm oder, falls zu diesem Zeitpunkt keine geltende Fassung besteht, die letzte geltende Fassung gemeint.

### Das erfindungsgemäße Verfahren

Im Rahmen des erfindungsgemäßen Verfahrens wird eine Mehrschichtlackierung auf einem metallischen Substrat (S) aufgebaut.

Als metallische Substrate (S) kommen grundsätzlich Substrate enthaltend oder bestehend aus beispielsweise Eisen, Aluminium, Kupfer, Zink, Magnesium und deren Legierungen sowie Stahl in unterschiedlichsten Formen und Zusammensetzungen in Betracht. Bevorzugt sind Eisen- und Stahlsubstrate, beispielsweise typische Eisen- und Stahlsubstrate wie sie im Bereich der Automobilindustrie eingesetzt werden. Die Substrate können an sich beliebig geformt sein, das heißt es kann sich beispielsweise um einfache Bleche oder auch um komplexe Bauteile wie insbesondere Automobilkarosserien und Teile davon handeln.

Die metallischen Substrate (S) können vor der Stufe (1) des erfindungsgemäßen Verfahrens auf an sich bekannte Weise vorbehandelt werden, das heißt beispielsweise gereinigt und/oder mit bekannten Konversionsbeschichtungen versehen werden. Eine Reinigung kann mechanisch beispielsweise mittels Wischen, Schleifen und/oder Polieren und/oder chemisch mittels Beizverfahren durch Anätzen in Säure- oder Laugenbädern, beispielsweise mittels Salz- oder Schwefelsäure erfolgen. Auch die Reinigung mit organischen Lösemitteln oder wässrigen Reinigern ist natürlich möglich. Eine Vorbehandlung durch Aufbringen von Konversionsbeschichtungen, insbesondere mittels Phosphatierung und/oder Chromatierung, bevorzugt Phosphatierung kann ebenfalls stattfinden. Bevorzugt werden die metallischen Substrate jedenfalls konversionsbeschichtet, insbesondere phosphatiert, bevorzugt mit einer Zinkphosphatierung versehen.

In Stufe (1) des erfindungsgemäßen Verfahrens wird durch elektrophoretisches Aufbringen eines Elektrotauchlacks (e.1) auf das Substrat (S) und anschließende Härtung des Elektrotauchlacks (e.1) eine gehärtete Elektrotauchlackschicht (E.1) auf dem metallischen Substrat (S) hergestellt.

Der in Stufe (1) des erfindungsgemäßen Verfahrens eingesetzte Elektrotauchlack (e.1) kann ein kathodischer oder anodischer Elektrotauchlack sein. Bevorzugt handelt es sich um einen kathodischen Elektrotauchlack. Elektrotauchlacke sind dem Fachmann seit langem bekannt. Es handelt sich um wässrige Beschichtungsstoffe, die dazu geeignet sein müssen, elektrophoretisch auf ein metallisches Substrat aufgebracht zu werden. Sie enthalten jedenfalls anionische oder kationische Polymere als Bindemittel. Diese Polymere enthalten funktionelle Gruppen, die potentiell anionisch sind, das heißt in anionische Gruppen überführt werden können, beispielsweise Carbonsäuregruppen, oder funktionelle Gruppen, die potentiell kationisch sind, das heißt in kationische Gruppen überführt werden können, beispielsweise Aminogruppen. Die Überführung in geladene Gruppen wird in der Regel durch den Einsatz entsprechender Neutralisationsmittel (organische Amine (anionisch), organische Carbonsäuren wie Ameisensäure (kationisch)) erreicht, wodurch dann die anionischen oder kationischen Polymere entstehen. Die Elektrotauchlacke enthalten in der Regel und damit bevorzugt zusätzlich typische Korrosionsschutzpigmente. Die im Rahmen der Erfindung bevorzugten kathodischen Elektrotauchlacke enthalten bevorzugt kationische Polymere als Bindemittel, insbesondere hydroxyfunktionelle Polyetheramine, welche bevorzugt aromatische Struktureinheiten aufweisen. Solche Polymere werden in der Regel durch Umsetzung entsprechender Bisphenol-basierter Epoxidharze mit Aminen wie beispielsweise Mono- und Dialkylaminen, Alkanolaminen und/oder Dialkylaminoalkylamine erhalten. Diese Polymere werden insbesondere in Kombination mit an sich bekannten blockierten Polyisocyanaten eingesetzt. Beispielhaft sei auf die in WO 9833835 A1, WO 9316139 A1, WO 0102498 A1 und WO 2004018580 A1 beschriebenen Elektrotauchlacke verwiesen.

Der Elektrotauchlack (e.1) ist also bevorzugt ein jedenfalls chemisch-thermisch härtbares Beschichtungsmittel, wobei er insbesondere fremdvernetzend ist. Bevorzugt ist der Elektrotauchlack (e.1) ein thermisch-chemisch härtbares Einkomponenten-Beschichtungsmittel. Bevorzugt enthält der Elektrotauchlack (e.1) ein hydroxyfunktionelles Epoxidharz als Bindemittel und ein vollständig blockiertes Polyisocyanat als Vernetzungsmittel. Das Epoxidharz ist bevorzugt kathodisch, wobei es insbesondere Aminogruppen enthält.

Auch das im Rahmen der Stufe (1) des erfindungsgemäßen Verfahrens stattfindende elektrophoretische Aufbringen eines solchen Elektrotauchlacks (e.1) ist bekannt. Das Aufbringen verläuft elektrophoretisch. Das heißt, dass zu beschichtende metallische Werkstück wird zunächst in ein den Lack enthaltenes Tauchbad getaucht und ein elektrisches Gleichspannungsfeld wird zwischen dem metallischen Werkstück und einer Gegenelektrode angelegt. Das Werkstück fungiert also als Elektrode, die nichtflüchtigen Bestandteile des Elektrotauchlacks migrieren bedingt durch die beschriebene Ladung der als Bindemittel eingesetzten Polymere durch das elektrische Feld zum Substrat und scheiden sich auf dem Substrat ab, wodurch eine Elektrotauchlackschicht entsteht. Beispielsweise im Fall eines kathodischen Elektrotauchlacks wird das Substrat also als Kathode geschaltet, die dort durch die Wasserelektrolyse entstehenden Hydroxidionen neutralisieren das kationische Bindemittel, sodass es auf dem Substrat abgeschieden wird und sich eine Elektrotauchlackschicht bildet. Es handelt sich dann also um ein Aufbringen durch das elektrophoretische Tauchverfahren.

Nach dem Aufbringen des Elektrotauchlacks (e.1) wird das beschichtete Substrat (S) aus dem Becken entfernt, gegebenenfalls mit beispielsweise wasserbasierten Spüllösungen abgespült, dann gegebenenfalls abgelüftet und/oder zwischengetrocknet, und schließlich wird der aufgetragene Elektrotauchlack gehärtet.

Der aufgebrachte Elektrotauchlack (e.1) (beziehungsweise die aufgebrachte, noch nicht gehärtete Elektrotauchlackschicht) wird beispielsweise bei 15 bis 35°C für eine Dauer von beispielsweise 0,5 bis 30 min abgelüftet und/oder bei einer Temperatur von bevorzugt 40 bis 90°C für eine Dauer von beispielsweise 1 bis 60 min zwischengetrocknet.

Der auf das Substrat aufgebrachte Elektrotauchlack (e.1) (beziehungsweise die aufgebrachte, noch nicht gehärtete Elektrotauchlackschicht) wird bevorzugt bei Temperaturen von 100 bis 250°C, bevorzugt 140 bis 220°C für eine Dauer von 5 bis 60 min, bevorzugt 10 bis 45 min gehärtet, wodurch die gehärtete Elektrotauchlackschicht (E.1) hergestellt wird.

Die angegebenen Ablüft-, Zwischentrocknungs- und Härtungsbedingungen gelten insbesondere für den bevorzugten Fall, dass es sich bei dem Elektrotauchlack (e.1) um ein wie oben beschriebenes chemisch-thermisch härtbares Einkomponenten-Beschichtungsmittel handelt. Dies schließt aber nicht aus, dass der Elektrotauchlack ein auf andere Weise härtbares Beschichtungsmittel ist und/oder andere Ablüft-, Zwischentrocknungs- und Härtungsbedingungen eingesetzt werden.

Die Schichtdicke der gehärteten Elektrotauchlackschicht beträgt beispielsweise 10 bis 40 Mikrometer, bevorzugt 15 bis 25 Mikrometer. Alle im Rahmen der vorliegenden Erfindung angegebenen Schichtdicken verstehen sich als Trockenschichtdicken. Es handelt sich also um die Schichtdicke der jeweils gehärteten Schicht. Ist also angegeben, dass ein Lack in einer bestimmten Schichtdicke aufgetragen wird, so ist darunter zu verstehen, dass der Lack so aufgetragen wird, dass die genannte Schichtdicke nach der Härtung resultiert.

In Stufe (2) des erfindungsgemäßen Verfahrens wird (2.1) eine Basislackschicht (B.2.1) hergestellt oder (2.2) es werden mehrere direkt aufeinander folgende Basislackschichten (B.2.2.x) hergestellt. Die Herstellung der Schichten erfolgt durch Aufbringen (2.1) eines wässrigen Basislacks (auch genannt Wasserbasislack) (b.2.1) direkt auf die gehärtete Elektrotauchlackschicht (E.1) oder (2.2) direkt aufeinanderfolgendes Aufbringen von mehreren Basislacken (b.2.2.x) auf die gehärtete Elektrotauchlackschicht (E.1).

Das direkt aufeinanderfolgende Aufbringen von mehreren Basislacken (b.2.2.x) auf die gehärtete Elektrotauchlackschicht (E.1) versteht sich also so, dass zunächst ein erster Basislack direkt auf die Elektrotauchlackschicht aufgebracht wird und danach ein zweiter Basislack direkt auf die Schicht aus dem ersten Basislack aufgebracht wird. Ein gegebenenfalls dritter Basislack wird dann direkt auf die Schicht aus dem zweiten Basislack aufgebracht. Dieser Vorgang lässt sich dann analog für weitere Basislacke (das heißt einen vierten, fünften usw. Basislack) wiederholen.

Die Basislackschicht (B.2.1) oder die erste Basislackschicht (B.2.2.x) ist nach der Herstellung also direkt auf der gehärteten Elektrotauchlackschicht (E.1) angeordnet.

Die Begriffe Basislack und Basislackschicht in Bezug auf die in Stufe (2) des erfindungsgemäßen Verfahrens aufgebrachten Beschichtungsmittel und hergestellten Beschichtungsschichten werden der besseren Übersichtlichkeit halber verwendet. Die Basislackschichten (B.2.1) und (B.2.2.x) werden nicht separat gehärtet, sondern gemeinsam mit dem Klarlack gehärtet. Die Härtung erfolgt also analog der Härtung von in dem einleitend beschriebenen Standardverfahren eingesetzten so genannten Basislacken. Insbesondere werden die in Stufe (2) des erfindungsgemäßen Verfahrens eingesetzten Beschichtungsmittel nicht wie die im Rahmen des Standardverfahrens als Füller bezeichneten Beschichtungsmittel separat gehärtet.

Der in Stufe (2.1) eingesetzte wässrige Basislack (b.2.1) wird weiter unten im Detail beschrieben. In einer ersten bevorzugten Ausführungsform ist er aber jedenfalls chemisch-thermisch härtbar, insbesondere bevorzugt fremdvernetzend. Bevorzugt ist der Basislack (b.2.1) hierbei ein Einkomponenten-Beschichtungsmittel. Bevorzugt enthält der Basislack (b.2.1) hierbei eine Kombination aus mindestens einem hydroxyfunktionellen Polymer als Bindemittel ausgewählt aus der Gruppe bestehend aus Polyacrylaten (beispielsweise einem hydroxyfunktionellen Polymerisat aus einer Dispersion (wD)), Polyurethanen, Polyestern und Mischpolymerisaten der genannten Polymere, beispielsweise Polyurethan-Polyacrylaten, sowie mindestens einem Melaminharz als Vernetzungsmittel.

Je nach Anwendungsbereich genauso möglich und damit eine zweite bevorzugte Ausführungsform ist es aber, Basislacke (b.2.1) einzusetzen, die nur geringe Mengen von weniger als 5 Gew.-%, bevorzugt weniger als 2,5 Gew.-%, bezogen auf das Gesamtgewicht des Basislacks, an Vernetzungsmitteln wie insbesondere Melaminharzen enthalten. Nochmals bevorzugt in dieser Ausführungsform ist es, dass gar keine Vernetzungsmittel enthalten sind. Trotzdem wird eine hervorragende Qualität des Gesamtaufbaus erreicht. Ein Vorteil des Nichteinsatzes von Vernetzungsmitteln und der demzufolge geringeren Komplexität des Lacks liegt in der Erhöhung der Formulierungsfreiheit für den Basislack. Auch die Lagerstabilität kann aufgrund der Vermeidung von möglichen Reaktionen der reaktiven Komponenten besser sein.

Der Basislack (b.2.1) kann durch die dem Fachmann bekannten Methoden zur Applikation von flüssigen Beschichtungsmitteln aufgebracht werden, beispielsweise durch Tauchen, Rakeln, Spritzen, Walzen oder ähnlichem. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heißspritzapplikation wie zum Beispiel Hot-Air (Heiß-Spritzen). Ganz besonders bevorzugt wird der Basislack (b.2.1) über die pneumatische Spritzapplikation oder die elektrostatische Spritzapplikation aufgetragen. Durch die Applikation des Basislacks (b.2.1) wird somit eine Basislackschicht (B.2.1), das heißt eine direkt auf der Elektrotauchlackschicht (E.1) aufgetragene Schicht des Basislacks (b.2.1) hergestellt.

Der aufgebrachte Basislack (b.2.1) beziehungsweise die entsprechende Basislackschicht (B.2.1) wird nach dem Auftrag beispielsweise bei 15 bis 35°C für eine Dauer von beispielsweise 0,5 bis 30 min abgelüftet und/oder bei einer Temperatur von bevorzugt 40 bis 90°C für eine Dauer von beispielsweise 1 bis 60 min zwischengetrocknet. Bevorzugt wird zunächst bei 15 bis 35°C für eine Dauer von 0,5 bis 30 min abgelüftet und anschließend bei 40 bis 90°C für eine Dauer von beispielsweise 1 bis 60 min zwischengetrocknet. Die beschriebenen Ablüft- und Zwischentrockungsbedingungen gelten insbesondere für den bevorzugten Fall, dass es sich bei dem Basislack (b.2.1) um ein chemisch-thermisch härtbares Einkomponenten-Beschichtungsmittel handelt. Dies schließt aber nicht aus, dass der Basislack (b.2.1) ein auf andere Weise härtbares Beschichtungsmittel ist und/oder andere Ablüft- und/oder Zwischentrocknungsbedingungen eingesetzt werden.

Die Basislackschicht (B.2.1) wird innerhalb der Stufe (2) des erfindungsgemäßen Verfahrens nicht gehärtet, das heißt bevorzugt nicht Temperaturen von über 100°C für eine Dauer von länger als 1 min ausgesetzt, insbesondere bevorzugt gar nicht Temperaturen von über 100°C ausgesetzt. Dies ergibt sich eindeutig und unmittelbar aus der weiter unten beschriebenen Stufe (4) des erfindungsgemäßen Verfahrens. Da die Basislackschicht erst in der Stufe (4) gehärtet wird, kann sie nicht bereits in der Stufe (2) gehärtet werden, denn dann wäre die Härtung in Stufe (4) nicht mehr möglich.

Auch die in Stufe (2.2) des erfindungsgemäßen Verfahrens eingesetzten wässrigen Basislacke (b.2.2.x) werden weiter unten im Detail beschrieben. In einer ersten bevorzugten Ausführungsform ist mindestens einer der in Stufe (2.2) eingesetzten Basislacke jedenfalls chemisch-thermisch härtbar, insbesondere bevorzugt fremdvernetzend. Nochmals bevorzugt gilt dies hierbei für alle Basislacke (b.2.2.x). Bevorzugt ist hierbei mindestens ein Basislack (b.2.2.x) ein Einkomponenten-Beschichtungsmittel, nochmals bevorzugt gilt dies für alle Basislacke (b.2.2.x). Bevorzugt enthält hierbei mindestens einer der Basislacke (b.2.2.x) eine Kombination aus mindestens einem hydroxyfunktionellen Polymer als Bindemittel ausgewählt aus der Gruppe bestehend aus Polyacrylaten (beispielsweise einem hydroxyfunktionellen Polymerisat aus einer Dispersion (wD)), Polyurethanen, Polyestern und Mischpolymerisaten der genannten Polymere, beispielsweise Polyurethan-Polyacrylaten, sowie mindestens einem Melaminharz als Vernetzungsmittel. Nochmals bevorzugt gilt dies hierbei für alle Basislacke (b.2.2.x).

Je nach Anwendungsbereich genauso möglich und damit ebenfalls eine bevorzugte Ausführungsform ist es aber, mindestens einen Basislack (b.2.2.x) einzusetzen, der nur geringe Mengen von weniger als 5 Gew.-%, bevorzugt weniger als 2,5 Gew.-%, bezogen auf das Gesamtgewicht des Basislacks, an Vernetzungsmitteln wie insbesondere Melaminharzen enthalten. Nochmals bevorzugt in dieser Ausführungsform ist es, dass gar keine Vernetzungsmittel enthalten sind. Bevorzugt gilt das Gesagte für alle eingesetzten Basislacke (b.2.2.x). Trotzdem wird eine hervorragende Qualität des Gesamtaufbaus erreicht. Vorteile sind wiederum Formulierungsfreiheit und Lagerstabilität.

Die Basislacke (b.2.2.x) können durch die dem Fachmann bekannten Methoden zur Applikation von flüssigen Beschichtungsmitteln aufgebracht werden, beispielsweise durch Tauchen, Rakeln, Spritzen, Walzen oder ähnlichem. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heißspritzapplikation wie zum Beispiel Hot-Air (Heiß-Spritzen). Ganz besonders bevorzugt werden die Basislacke (b.2.2.x) über die pneumatische Spritzapplikation und/oder die elektrostatische Spritzapplikation aufgetragen.

Im Rahmen der Stufe (2.2) des erfindungsgemäßen Verfahrens bietet sich die folgende Benennung an. Die Basislacke und Basislackschichten werden allgemein durch (b.2.2.x) und (B.2.2.x) gekennzeichnet, während bei der Benennung der konkreten einzelnen Basislacke und Basislackschichten das x durch entsprechend passende andere Buchstaben ersetzt werden kann.

Der erste Basislack und die erste Basislackschicht können mit a gekennzeichnet werden, der oberste Basislack und die oberste Basislackschicht können mit z gekennzeichnet werden. Diese beiden Basislacke beziehungsweise Basislackschichten sind in der Stufe (2.2) jedenfalls vorhanden. Gegebenenfalls dazwischen angeordnete Schichten können fortlaufend mit b, c, d und so weiter gekennzeichnet werden.

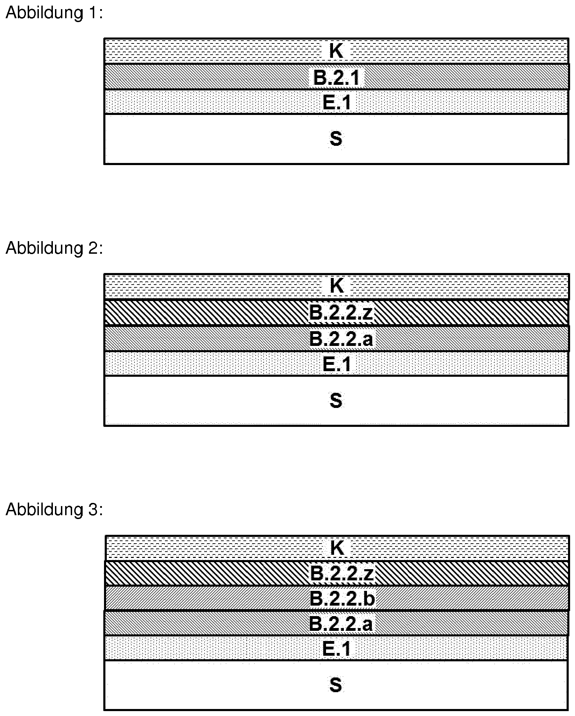

Durch die Applikation des ersten Basislacks (b.2.2.a) wird somit eine Basislackschicht (B.2.2.a) direkt auf der gehärteten Elektrotauchlackschicht (E.1) hergestellt. Die mindestens eine weitere Basislackschicht (B.2.2.x) wird dann direkt auf der Basislackschicht (B.2.2.a) hergestellt. Sofern mehrere weitere Basislackschichten (B.2.2.x) hergestellt werden, werden diese direkt aufeinanderfolgend hergestellt. Beispielsweise kann noch genau eine weitere Basislackschicht (B.2.2.x) hergestellt werden, wobei diese dann in der letztlich hergestellten Mehrschichtlackierung direkt unterhalb der Klarlackschicht (K) angeordnet ist und somit als Basislackschicht (B.2.2.z) bezeichnet werden kann (vergleiche auch Abbildung 2). Möglich ist beispielsweise auch, dass zwei weitere Basislackschichten (B.2.2.x) hergestellt werden, wobei dann die direkt auf der Basislackschicht (B.2.2.a) hergestellte Schicht als (B.2.2.b) und die schließlich direkt unterhalb der Klarlackschicht (K) angeordnete Schicht wiederum als (B.2.2.z) bezeichnet werden kann (vergleiche auch Abbildung 3).

Die Basislacke (b.2.2.x) können identisch oder verschieden sein. Möglich ist auch, mehrere Basislackschichten (B.2.2.x) mit demselben Basislack und eine oder mehrere weitere Basislackschichten (B.2.2.x) mit einem oder mehreren anderen Basislacken herzustellen.

Die aufgebrachten Basislacke (b.2.2.x) werden in der Regel für sich und/oder miteinander abgelüftet und/oder zwischengetrocknet. Bevorzugt wird auch im Rahmen der Stufe (2.2) bei 15 bis 35°C für eine Dauer von 0,5 bis 30 min abgelüftet und bei 40 bis 90°C für eine Dauer von beispielsweise 1 bis 60 min zwischengetrocknet. Die Abfolge von Ablüften und/oder Zwischentrocknen einzelner oder mehrerer Basislackschichten (B.2.2.x) kann dabei je nach den Anforderungen des Einzelfalls angepasst werden. Die vorbeschriebenen bevorzugten Ablüft- und Zwischentrockungsbedingungen gelten insbesondere für den bevorzugten Fall, dass es sich bei mindestens einem Basislack (b.2.2.x), bevorzugt allen Basislacken (b.2.2.x) um chemisch-thermisch härtbare Einkomponenten-Beschichtungsmittel handelt. Dies schließt aber nicht aus, dass die Basislacke (b.2.2.x) auf andere Weise härtbare Beschichtungsmittel sind und/oder andere Ablüft- und/oder Zwischentrocknungsbedingungen eingesetzt werden.

Wird eine erste Basislackschicht durch Applikation eines ersten Basislacks und eine weitere Basislackschicht durch Applikation desselben Basislacks hergestellt, so basieren offensichtlich beide Schichten auf demselben Basislack. Jedoch erfolgt der Auftrag offensichtlich in zwei Stufen, so dass der entsprechende Basislack im Sinne des erfindungsgemäßen Verfahrens einem ersten Basislack (b.2.2.a) und einem weiteren Basislack (b.2.2.z) entspricht. Der beschriebene Aufbau wird häufig auch als ein in zwei Aufträgen hergestellter einschichtiger Basislackschicht-Aufbau bezeichnet. Da aber insbesondere in der realen Serienlackierung aufgrund der technischen Gegebenheiten in einer Lackieranlage zwischen dem ersten Auftrag und dem zweiten Auftrag immer eine gewisse Zeitspanne vergeht, bei der das Substrat, beispielsweise die Automobilkarosse, bei beispielsweise 15 bis 35°C konditioniert und damit abgelüftet wird, ist die Charakterisierung dieses Aufbaus als zweischichtiger Basislackaufbau formal eindeutiger. Die beschriebene Prozessführung ist also der zweiten Variante des erfindungsgemäßen Verfahrens zuzuordnen.

Einige bevorzugte Varianten der Basislackschichtabfolgen der Basislacke (b.2.2.x) seien wie folgt erläutert.

Möglich ist, eine erste Basislackschicht durch beispielsweise elektrostatische Sprühapplikation (ESTA) oder pneumatische Applikation eines ersten Basislacks direkt auf der gehärteten Elektrotauchlackschicht herzustellen, diesen wie oben beschrieben abzulüften und/oder zwischenzutrocken und anschließend durch direktes Aufbringen eines vom ersten Basislack verschiedenen zweiten Basislacks eine zweite Basislackschicht herzustellen. Der zweite Basislack kann dabei auch durch elektrostatische Sprühapplikation oder durch pneumatische Applikation aufgebracht werden, wodurch direkt auf der ersten Basislackschicht eine zweite Basislackschicht hergestellt wird. Zwischen und/oder nach den Aufträgen kann natürlich wieder abgelüftet und/oder zwischengetrocknet werden. Diese Variante der Stufe (2.2) wird bevorzugt dann gewählt, wenn zunächst eine wie weiter unten genauer beschriebene farbvorbereitende Basislackschicht direkt auf der Elektrotauchlackschicht hergestellt werden soll und dann eine wie weiter unten genauer beschriebene farb- und/oder effektgebende Basislackschicht direkt auf der ersten Basislackschicht hergestellt werden soll. Die erste Basislackschicht basiert dann auf dem farbvorbereitenden Basislack, die zweite Basislackschicht auf dem farb- und/oder effektgebenden Basislack. Ebenfalls möglich ist es beispielsweise, diesen zweiten Basislack wie oben beschrieben in zwei Stufen aufzubringen, wodurch dann direkt auf der ersten Basislackschicht zwei weitere, direkt aufeinanderfolgende Basislackschichten entstehen, die beide auf demselben Basislack basieren.

Möglich ist ebenfalls, drei Basislackschichten direkt aufeinander folgend direkt auf der gehärteten Elektrotauchlackschicht herzustellen, wobei die Basislackschichten auf drei verschiedenen Basislacken basieren. Beispielsweise kann eine farbvorbereitende Basislackschicht, eine weitere Schicht basierend auf einem farb- und/oder effektgebenden Basislack und eine weitere Schicht basierend auf einem zweiten farb- und/oder effektgebenden Basislack hergestellt werden. Zwischen und/oder nach den einzelnen und/oder nach allen drei Aufträgen kann wiederum abgelüftet und/oder zwischengetrocknet werden.

Im Rahmen der vorliegenden Erfindung bevorzugte Ausführungsformen umfassen also, dass in Stufe (2.2) des erfindungsgemäßen Verfahrens zwei oder drei Basislackschichten hergestellt werden. Bevorzugt ist dabei dann, dass die direkt auf der gehärteten Elektrotauchlackschicht hergestellte Basislackschicht auf einem farbvorbereitenden Basislack basiert. Die zweite und die gegebenenfalls vorhandene dritte Schicht basieren entweder auf ein und demselben farb- und/oder effektgebendem Basislack oder auf einem ersten farb- und/oder effektgebendem Basislack und einem davon verschiedenen zweiten farb- und/oder effektgebendem Basislack.

Die Basislackschichten (B.2.2.x) werden innerhalb der Stufe (2) des erfindungsgemäßen Verfahrens nicht gehärtet, das heißt bevorzugt nicht Temperaturen von über 100°C für eine Dauer von länger als 1 min ausgesetzt, bevorzugt gar nicht Temperaturen von über 100°C ausgesetzt. Dies ergibt sich eindeutig und unmittelbar aus der weiter unten beschriebenen Stufe (4) des erfindungsgemäßen Verfahrens. Da die Basislackschichten erst in der Stufe (4) gehärtet werden, können sie nicht bereits in der Stufe (2) gehärtet werden, denn dann wäre die Härtung in Stufe (4) nicht mehr möglich.

Der Auftrag der Basislacke (b.2.1) und (b.2.2.x) erfolgt so, dass die Basislackschicht (B.2.1) und die einzelnen Basislackschichten (B.2.2.x) nach der in Stufe (4) erfolgten Härtung eine Schichtdicke von beispielsweise 5 bis 50 Mikrometer, bevorzugt 6 bis 40 Mikrometer, insbesondere bevorzugt 7 bis 35 Mikrometer aufweisen. In der Stufe (2.1) werden bevorzugt höhere Schichtdicken von 15 bis 50 Mikrometern, bevorzugt 20 bis 45 Mikrometern hergestellt. In der Stufe (2.2) haben die einzelnen Basislackschichten eher vergleichsweise geringere Schichtdicken, wobei der Gesamtaufbau dann wieder Schichtdicken aufweist, die in der Größenordnung der einen Basislackschicht (B.2.1) liegen. Beispielsweise hat im Falle von zwei Basislackschichten die erste Basislackschicht (B.2.2.a) bevorzugt Schichtdicken von 5 bis 35, insbesondere 10 bis 30 Mikrometer, die zweite Basislackschicht (B.2.2.z) bevorzugt Schichtdicken von 5 bis 35 Mikrometern, insbesondere 10 bis 30 Mikrometern, wobei die Gesamtschichtdicke 50 Mikrometer nicht überschreitet.

In Stufe (3) des erfindungsgemäßen Verfahrens wird eine Klarlackschicht (K) direkt auf (3.1) der Basislackschicht (B.2.1) oder (3.2) der obersten Basislackschicht (B.2.2.z) hergestellt. Diese Herstellung erfolgt durch entsprechendes Aufbringen eines Klarlacks (k).

Bei dem Klarlack (k) kann es sich um ein dem Fachmann in diesem Sinne bekanntes an sich beliebiges transparentes Beschichtungsmittel handeln. Unter transparent ist zu verstehen, dass eine mit dem Beschichtungsmittel gebildete Schicht nicht farblich deckend ist, sondern so konstituiert ist, dass die Farbe des darunter liegenden Basislackaufbaus sichtbar ist. Dies schließt bekanntermaßen aber nicht aus, dass ein Klarlack in untergeordneten Mengen auch Pigmente enthalten kann, die beispielsweise die Farbtiefe des Gesamtaufbaus unterstützen können.

Es handelt sich dabei um wässrige oder lösemittelhaltige transparente Beschichtungsmittel, die sowohl als Einkomponenten- als auch als Zwei- oder Mehrkomponenten-Beschichtungsmittel formuliert sein können. Geeignet sind ferner auch Pulverslurry-Klarlacke. Bevorzugt sind lösungsmittelbasierte Klarlacke.

Die eingesetzten Klarlacke (k) können insbesondere thermisch-chemisch und/oder chemisch-aktinisch härtbar sein. Insbesondere sind sie thermisch-chemisch härtbar und fremdvernetzend.

Die Klarlacke enthalten also üblicherweise und bevorzugt mindestens ein (erstes) Polymer als Bindemittel mit funktionellen Gruppen sowie mindestens einen Vernetzer mit einer zu den funktionellen Gruppen des Bindemittels komplementärer Funktionalität. Bevorzugt wird zumindest ein hydroxyfunktionelles Poly(meth)acrylatpolymer als Bindemittel und ein freies Polyisocyanat als Vernetzungsmittel eingesetzt.

Geeignete Klarlacke sind beispielsweise beschrieben in WO 2006042585 A1, WO 2009077182 A1 oder auch WO 2008074490 A1.

Der Klarlack (k) wird durch die dem Fachmann bekannten Methoden zur Applikation von flüssigen Beschichtungsmitteln aufgebracht, beispielsweise durch Tauchen, Rakeln, Spritzen, Walzen oder ähnlichem. Vorzugsweise werden Spritzapplikationsmethoden angewandt, wie zum Beispiel Druckluftspritzen (pneumatische Applikation), und elektrostatischer Sprühauftrag (ESTA).

Der Klarlack (k) beziehungsweise die entsprechende Klarlackschicht (K) wird nach dem Auftrag bevorzugt bei 15 bis 35°C für eine Dauer von 0,5 bis 30 min abgelüftet beziehungsweise zwischengetrocknet. Solche Ablüft- beziehungsweise Zwischentrockungsbedingungen gelten insbesondere für den bevorzugten Fall, dass es sich bei dem Klarlack (k) um ein chemisch-thermisch härtbares Zweikomponenten-Beschichtungsmittel handelt. Dies schließt aber nicht aus, dass der Klarlack (k) ein auf andere Weise härtbares Beschichtungsmittel ist und/oder andere Ablüftbeziehungsweise Zwischentrockungsbedingungen eingesetzt werden.

Der Auftrag des Klarlacks (k) erfolgt so, dass die Schichtdicke der Klarlackschicht nach der in Stufe (4) erfolgten Härtung eine Schichtdicke von beispielsweise 15 bis 80 Mikrometer, bevorzugt 20 bis 65 Mikrometer, insbesondere bevorzugt 25 bis 60 Mikrometer aufweist.

Selbstverständlich ist im Rahmen des erfindungsgemäßen Verfahrens nicht ausgeschlossen, dass nach der Applikation des Klarlacks (k) noch weitere Beschichtungsmittel, beispielsweise weitere Klarlacke, aufgebracht werden und auf diese Weise weitere Beschichtungsschichten, beispielsweise weitere Klarlackschichten, hergestellt werden. Solche weiteren Beschichtungsschichten werden dann beispielsweise ebenfalls in der nachstehend beschriebenen Stufe (4) gehärtet. Bevorzugt wird allerdings nur der eine Klarlack (k) aufgebracht und dann wie in Stufe (4) beschrieben gehärtet.

In Stufe (4) des erfindungsgemäßen Verfahrens erfolgt eine gemeinsame Härtung der der (4.1) Basislackschicht (B.2.1) und der Klarlackschicht (K) oder (4.2) der Basislackschichten (B.2.2.x) und der Klarlackschicht (K).

Die gemeinsame Härtung erfolgt bevorzugt bei Temperaturen von 100 bis 250°C, bevorzugt 100 bis 180°C für eine Dauer von 5 bis 60 min, bevorzugt 10 bis 45 min. Solche Härtungsbedingungen gelten insbesondere für den bevorzugten Fall, dass die Basislackschicht (B.2.1) oder mindestens eine der Basislackschichten (B.2.2.x), bevorzugt alle Basislackschichten (B.2.2.x) auf einem chemisch-thermisch härtbaren Einkomponenten-Beschichtungsmittel basieren. Denn wie oben beschrieben werden solche Bedingungen in der Regel benötigt, um eine wie oben beschriebene Härtung eines solchen Einkomponenten-Beschichtungsmittels zu erreichen. Handelt es sich bei dem Klarlack (k) beispielsweise ebenfalls um ein chemisch-thermisch härtbares Einkomponenten-Beschichtungsmittel, wird die entsprechende Klarlackschicht (K) bei diesen Bedingungen selbstverständlich ebenfalls gehärtet. Selbiges gilt augenscheinlich für den bevorzugten Fall, dass der Klarlack (k) chemisch-thermisch härtbares Zweikomponenten-Beschichtungsmittel ist.

Das zuvor Gesagte schließt aber nicht aus, dass die Basislacke (b.2.1) und (b.2.2.x) sowie die Klarlacke (k) auf andere Weise härtbare Beschichtungsmittel sind und/oder andere Härtungsbedingungen eingesetzt werden.

Nach Beendigung der Stufe (4) des erfindungsgemäßen Verfahrens resultiert eine erfindungsgemäße Mehrschichtlackierung (vergleiche auch Abbildungen 1 bis 3).

### Die erfindungsgemäß einzusetzenden Basislacke

Der erfindungsgemäß einzusetzende Basislack (b.2.1) enthält mindestens eine, bevorzugt genau eine spezielle wässrige Dispersion (wD), welche mindestens ein, bevorzugt genau ein spezielles Polymerisat enthält.

Eine erfindungsgemäß einzusetzende wässrige Dispersion (wD) enthält mindestens ein spezielles Polymerisat. Bevorzugt enthält eine Dispersion (wD) genau ein solches Polymerisat. Die Herstellung des Polymerisats umfasst die aufeinanderfolgende radikalische Emulsionspolymerisation von drei Mischungen (A), (B) und (C) von olefinisch ungesättigten Monomeren. Es handelt sich also um eine mehrstufige radikalische Emulsionspolymerisation, wobei i. zunächst die Mischung (A) polymerisiert wird, dann ii. in Anwesenheit des unter i. hergestellten Polymerisats die Mischung (B) polymerisiert wird und weiterhin iii. in Anwesenheit des unter ii. hergestellten Polymerisats die Mischung (C) polymerisiert wird. Alle drei Monomermischungen werden also über eine jeweils separat durchgeführte radikalische Emulsionspolymerisation (das heißt Stufe oder auch Polymerisationsstufe) polymerisiert, wobei diese Stufen aufeinanderfolgend stattfinden. Die Stufen können, zeitlich betrachtet, direkt hintereinander stattfinden. Möglich ist es genauso, dass nach Abschluss einer Stufe die entsprechende Reaktionslösung für eine gewisse Zeitspanne gelagert und/oder in ein anderes Reaktionsgefäß überführt wird und erst dann die nächste Stufe stattfindet. Bevorzugt umfasst die Herstellung des speziellen mehrstufigen Polymerisats neben der Polymerisation der Monomerenmischungen (A), (B) und (C) keine weiteren Polymerisationsschritte.

Der Begriff der radikalischen Emulsionspolymerisation ist dem Fachmann bekannt und wird zudem in der Folge nochmals genauer erläutert.

Bei einer solchen Polymerisation werden olefinisch ungesättigten Monomere in wässrigem Medium unter Einsatz von mindestens einem wasserlöslichen Initiator und in Anwesenheit mindestens eines Emulgators polymerisiert.

Entsprechende wasserlösliche Initiatoren sind ebenfalls bekannt. Bevorzugt wird der mindestens eine wasserlösliche Initiator ausgewählt aus der Gruppe bestehend aus Kalium-, Natrium- oder Ammoniumperoxodisulfat, Wasserstoffperoxid, tert.-Butylhydroperoxid, 2,2'-Azobis(2-amidoisopropan)dihydrochlorid, 2,2'-Azo- bis-(N,N'-dimethylenisobutyramidin)dihydrochlorid, 2,2'-Azo- bis-(4-cyanopentansäure) sowie Mischungen der vorgenannten Initiatoren, beispielsweise Wasserstoffperoxid und Natriumpersulfat. Ebenfalls der genannten bevorzugten Gruppe zugehörig sind die an sich bekannten Redox-Initiatorsyteme.

Unter Redox-Initiatorsystemen sind insbesondere solche Initiatoren zu verstehen, die mindestens eine peroxidhaltige Verbindung in Kombination mit mindestens einem Redox-Coinitiator, beispielsweise reduzierend wirkenden Schwefelverbindungen wie beispielsweise Bisulfiten, Sulfiten, Thiosulfaten, Dithioniten oder Tetrathionaten von Alkalimetallen und Ammoniumverbindungen, Natriumhydroxymethansulfinat-Dihydrat und/oder Thioharnstoff, enthalten. So kann man Kombinationen von Peroxodisulfaten mit Alkalimetall- oder Ammoniumhydrogensulfiten einsetzen, beispielsweise Ammoniumperoxodisulfat und Ammoniumdisulfit. Das Gewichtsverhältnis von peroxidhaltigen Verbindungen zu den Redox-Coinitiatoren beträgt vorzugsweise 50 : 1 bis 0,05 : 1.

In Kombination mit den Initiatoren können zusätzlich Übergangsmetallkatalysatoren eingesetzt werden, wie beispielsweise Eisen-, Nickel-, Kobalt-, Mangan-, Kupfer-, Vanadium, oder Chromsalze, wie Eisen-II-sulfat, Kobalt-II-chlorid, Nickel-II-sulfat, Kupfer-I-chlorid, Mangan-II-acetat, Vanadium-III-acetat, Mangan-II-chlorid. Bezogen auf die Gesamtmasse der bei einer Polymerisation eingesetzten olefinisch ungesättigten Monomere werden diese Übergangsmetallsalze üblicherweise in Mengen von 0,1 bis 1000 ppm eingesetzt. So kann man Kombinationen von Wasserstoffperoxid mit Eisen-II-Salzen einsetzen, wie beispielsweise 0,5 bis 30 Gew.-% Wasserstoffperoxid und 0,1 bis 500 ppm Mohrsches Salz, wobei die Anteilsbereiche jeweils bezogen auf das Gesamtgewicht der in der jeweiligen Polymerisationsstufe eingesetzten Monomere sind.

Die Initiatoren werden bevorzugt in einer Menge von 0,05 bis 20 Gew.-%, bevorzugt 0,05 bis 10, besonders bevorzugt von 0,1 bis 5 Gew.-%, bezogen auf das Gesamtgewicht der in der jeweiligen Polymerisationsstufe eingesetzten Monomere, eingesetzt.

Eine Emulsionspolymerisation verläuft in einem Reaktionsmedium, dass Wasser als kontinuierliches Medium und den mindestens einen Emulgator in Form von Micellen enthält. Die Polymerisation wird durch Zerfall des wasserlöslichen Initiators im Wasser gestartet. Die wachsende Polymerkette lagert sich in die Emulgator-Micellen ein und die weitere Polymerisation findet dann in den Micellen statt. Neben den Monomeren, dem mindestens einen wasserlöslichen Initiator und dem mindestens einen Emulgator besteht die Reaktionsmischung also hauptsächlich aus Wasser. Bevorzugt machen die genannten Komponenten, das heißt Monomere, wasserlöslicher Initiator, Emulgator und Wasser, mindestens 95 Gew.-% der Reaktionsmischung aus. Bevorzugt besteht die Reaktionsmischung aus diesen Komponenten.

Der mindestens eine Emulgator wird bevorzugt in einer Menge von 0,1-30 Gew.-%, nochmals bevorzugt 0,1-10 Gew.-%, besonders bevorzugt 0,1-5 Gew.-%, ganz besonders bevorzugt 0,1-3 Gew.-%, jeweils bezogen auf das Gesamtgewicht der in der jeweiligen Polymerisationsstufe eingesetzten Monomere, eingesetzt.

Es ist also augenscheinlich möglich, dass mindestens ein Emulgator in jeder einzelnen Polymerisationsstufe zugegeben wird. Genauso möglich ist aber auch, dass nur in einer (der ersten) oder zwei Polymerisationsstufe(n) (in der ersten und in einer weiteren Stufe) mindestens ein Emulgator zugegeben wird. Die Menge an Emulgator wird dann so gewählt, dass auch für die Stufen, in denen keine separate Zugabe erfolgt, eine ausreichende Menge Emulgator vorhanden ist.

Auch Emulgatoren sind grundsätzlich bekannt. Es können nichtionische oder ionische Emulgatoren, auch zwitterionische, gegebenenfalls auch Mischungen der vorgenannten Emulgatoren, verwendet werden.

Bevorzugte Emulgatoren sind gegebenenfalls ethoxylierte und/oder propoxylierte Alkanole mit 10 bis 40 Kohlenstoffatomen. Sie können unterschiedliche Ethoxylierungsbeziehungsweise Propoxylierungsgrade aufweisen (beispielsweise Addukte, die mit aus 5 bis 50 Moleküleinheiten bestehenden Poly(oxy)ethylen- und/oder Poly(oxy)propylenketten modifiziert sind). Es können auch sulfatierte, sulfonierte oder phosphatierte Derivate der genannten Produkte eingesetzt werden. Solche Derivate werden in der Regel in neutralisierter Form eingesetzt.

Besonders bevorzugte Emulgatoren sind neutralisierte Dialkylsulfobernsteinsäureester oder Alkyldiphenyloxiddisulfonate geeignet, beispielsweise kommerziell erhältlich als EF-800 der Fa. Cytec.

Die Emulsionspolymerisationen werden zweckmäßigerweise bei einer Temperatur von 0 bis 160°C, vorzugsweise von 15 bis 95°C, nochmals bevorzugt 60 bis 95°C durchgeführt. Dabei wird bevorzugt unter Ausschluss von Sauerstoff gearbeitet, vorzugsweise unter Inertgasatmosphäre. In der Regel wird die Polymerisation bei Normaldruck durchgeführt, jedoch ist auch die Anwendung von niedrigeren Drücken oder höheren Drücken möglich. Insbesondere wenn Polymerisationstemperaturen angewendet werden, die oberhalb des bei Normaldruck bestehenden Siedepunktes von Wasser, der eingesetzten Monomere und/oder der organischen Lösemittel liegen, werden in der Regel höhere Drücke gewählt.

Die einzelnen Polymerisationsstufen bei der Herstellung des speziellen Polymerisats können beispielsweise als so genannte "verhungernde Polymerisationen" (auch als "starve feed", "starve fed" oder "starved feed"-Polymerisationen bekannt) durchgeführt werden.

Als verhungernde Polymerisation im Sinne der vorliegenden Erfindung wird eine Emulsionspolymerisation angesehen, bei der der Gehalt an freien olefinisch ungesättigten Monomeren in der Reaktionslösung (auch genannt Reaktionsmischung) während der gesamten Reaktionsdauer minimiert wird. Das heißt, dass die Zudosierung der olefinisch ungesättigten Monomere so erfolgt, dass in der Reaktionslösung ein Anteil freier Monomere von 6,0 Gew.-%, bevorzugt 5,0 Gew.-%, besonders bevorzugt 4,0 Gew.-%, besonders vorteilhaft 3,5 Gew.-%, jeweils bezogen auf die Gesamtmenge der in der jeweiligen Polymerisationsstufe eingesetzten Monomere, während der gesamten Reaktionsdauer nicht überschritten wird. Darunter nochmals bevorzugt sind Konzentrationsbereiche der olefinisch ungesättigten Monomere von 0,01 bis 6,0 Gew.-%, bevorzugt 0,02 bis 5,0 Gew.-%, besonders bevorzugt 0,03 bis 4,0 Gew.-%, insbesondere 0,05 bis 3,5 Gew.-%. Beispielsweise kann der höchste während der Reaktion zu detektierende Gewichtsanteil bei 0,5 Gew.-%, 1,0 Gew.-%, 1,5 Gew.-%, 2,0 Gew.-%, 2,5 Gew.-% oder 3,0 Gew.-% liegen, während alle weiteren detektierten Werte dann unterhalb der hier angegebenen Werte liegen. Die Gesamtmenge (auch genannt Gesamtgewicht) der in der jeweiligen Polymerisationsstufe eingesetzten Monomere entspricht für Stufe i. augenscheinlich der Gesamtmenge der Monomerenmischung (A), für Stufe ii. der Gesamtmenge der Monomerenmischung (B) und für Stufe iii. der Gesamtmenge der Monomerenmischung (C).

Die Konzentration der Monomere in der Reaktionslösung kann dabei beispielsweise gaschromatographisch bestimmt werden. Dabei wird eine Probe der Reaktionslösung nach Probenentnahme sofort mit flüssigem Stickstoff abgekühlt und mit 4-Methoxyphenol als Inhibitor versetzt. Im nächsten Schritt wird die Probe in Tetrahydrofuran gelöst und anschließend wird zur Ausfällung des zum Zeitpunkt der Probenentnahme entstandenen Polymerisats n-Pentan hinzugegeben. Dann wird die flüssige Phase (Überstand) gaschromatographisch untersucht, wobei eine polare und eine unpolare Säule zur Bestimmung der Monomere eingesetzt werden und ein Flammenionisationsdetektor verwendet wird. Typische Parameter für die gaschromatographische Bestimmung sind die folgenden: 25 m Silica-Kapillarsäule mit 5% Phenyl- ,1% Vinyl-Methylpolysiloxan-Phase oder 30 m Silica-Kapillarsäule mit 50% Phenyl 50% Methyl-polysiloxan-Phase, Trägergas Wasserstoff, Splitinjektor 150°C, Ofentemperatur 50 bis 180°C, Flammionisationsdetektor, Detektortemperatur 275°C, interner Standard Isobutylacrylat. Die Bestimmung der Konzentration der Monomere erfolgt im Rahmen der vorliegenden Erfindung bevorzugt gaschromatographisch, insbesondere unter Einhaltung der oben genannten Parameter.

Der Anteil der freien Monomere kann auf verschiedene Art und Weisen gesteuert werden.

Eine Möglichkeit den Anteil der freien Monomere gering zu halten ist es, die Dosiergeschwindigkeit der Mischung der olefinisch ungesättigten Monomere zur eigentlichen Reaktionslösung, in der die Monomere mit dem Initiator in Kontakt kommen, sehr niedrig zu wählen. Wenn die Zudosiergeschwindigkeit so niedrig ist, dass alle Monomere praktisch sofort reagieren können, wenn sie in der Reaktionslösung sind, kann sichergestellt werden, dass der Anteil der freien Monomere minimiert wird.

Neben der Dosiergeschwindigkeit ist es wichtig, dass immer ausreichend Radikale in der Reaktionslösung vorhanden sind, so dass die zudosierten Monomere jeweils möglichst schnell zur Reaktion gebracht werden können. Auf diese Weise ist ein weiteres Kettenwachstum des Polymerisats garantiert und der Anteil an freiem Monomer wird gering gehalten.

Dazu sind die Reaktionsbedingungen bevorzugt so zu wählen, dass mit dem Initiatorzulauf schon vor Beginn der Dosierung der olefinisch ungesättigten Monomeren begonnen wird. Bevorzugt wird mit der Dosierung mindestens 5 Minuten vorher begonnen, besonders bevorzugt mindestens 10 Minuten vorher. Bevorzugt wird mindestens 10 Gew.-% des Initiators, besonders bevorzugt mindestens 20 Gew.-%, ganz besonders bevorzugt mindestens 30 Gew.-% des Initiators, jeweils bezogen auf die Gesamtmenge an Initiator, vor Beginn der Dosierung der olefinisch ungesättigten Monomeren zugegeben.

Es ist bevorzugt eine Temperatur zu wählen, die einen konstanten Zerfall des Initiators ermöglicht.

Die Initiatormenge ist ebenfalls ein wichtiger Faktor für das ausreichende Vorhandensein von Radikalen in der Reaktionslösung. Die Menge an Initiator ist so zu wählen, dass zu jeder Zeit ausreichend Radikale zur Verfügung stehen, so dass die zudosierten Monomere reagieren können. Wird die Menge an Initiator erhöht, können auch größere Mengen an Monomeren zur gleichen Zeit zur Reaktion gebracht werden.

Ein weiterer Faktor, der die Reaktionsgeschwindigkeit bestimmt, ist die Reaktivität der Monomere.

Die Kontrolle des Anteils der freien Monomere kann also durch das Zusammenspiel von Initiatormenge, Geschwindigkeit der Initiatorzugabe, Geschwindigkeit der Monomerenzugabe und durch die Auswahl der Monomere gesteuert werden. Sowohl die Verlangsamung der Dosierung, als auch die Erhöhung der Initiatormenge, sowie der frühzeitige Beginn mit der Zugabe des Initiators dienen dem Ziel, die Konzentration der freien Monomere unter den oben genannten Grenzen zu halten.

Zu jedem Zeitpunkt der Reaktion kann die Konzentration der freien Monomere gaschromatographisch, wie oben beschrieben, bestimmt werden.

Sollte bei dieser Analyse eine Konzentration an freien Monomeren bestimmt werden, die nahe an den Grenzwert für die verhungernde Polymerisation kommt, beispielsweise aufgrund geringer Anteile von hoch reaktiven olefinisch ungesättigten Monomeren, können die oben genannten Parameter zur Steuerung der Reaktion genutzt werden. Es kann in diesem Fall beispielsweise die Dosiergeschwindigkeit der Monomere verringert oder die Menge an Initiator erhöht werden.

Im Rahmen der vorliegenden Erfindung ist es bevorzugt, dass die Polymerisationsstufen ii. und iii. unter verhungernden Bedingungen durchgeführt werden. Dies hat den Vorteil, dass die Bildung neuer Partikelnuklei im Rahmen dieser beiden Polymerisationsstufen auf effektive Weise minimiert wird. Stattdessen gelingt es, die nach Stufe i. bestehenden Partikel (daher nachstehend auch Saat genannt) in Stufe ii. durch die Polymerisation der Momomermischung B weiterwachsen zu lassen (daher nachstehend auch Kern genannt). Ebenso gelingt es, die nach Stufe ii. bestehenden Partikel (nachstehend auch Polymerisat umfassend Saat und Kern genannt) in Stufe iii. durch die Polymerisation der Momomermischung C weiterwachsen zu lassen (daher nachstehend auch Schale genannt), sodass schließlich ein Polymerisat umfassend Partikel enthaltend Saat, Kern und Schale resultiert.

Selbstverständlich kann auch die Stufe i. unter verhungernden Bedingungen durchgeführt werden.

Bei den Mischungen (A), (B) und (C) handelt es sich um Mischungen von olefinisch ungesättigten Monomeren. Geeignete olefinisch ungesättigte Monomere können einfach oder mehrfach olefinisch ungesättigt sein.

In der Folge werden zunächst grundsätzlich einsetzbare und im Rahmen aller Mischungen (A), (B) und (C) geeignete und gegebenenfalls bevorzugte Monomere beschrieben. Auf spezifische bevorzugte Ausführungsformen der einzelnen Mischungen wird danach eingegangen.

Beispiele geeigneter einfach olefinisch ungesättigter Monomere umfassen insbesondere (meth)acrylat-basierte einfach olefinisch ungesättigte Monomere, Allylgruppen-haltige einfach olefinisch ungesättigte Monomere und weitere Vinylgruppen-haltige einfach olefinisch ungesättigte Monomere wie beispielsweise vinylaromatische Monomere. Der Begriff (meth)acryl beziehungsweise (Meth)acryat umfasst im Rahmen der vorliegenden Erfindung sowohl Methacrylate als auch Acrylate. Bevorzugt werden jedenfalls, aber nicht zwingend ausschließlich, (meth)acrylat-basierte einfach olefinisch ungesättigte Monomere eingesetzt.

Bei den (meth)acrylat-basierten, einfach olefinisch ungesättigten Monomeren kann es sich beispielsweise um (Meth)acrylsäure und Ester, Nitrile oder Amide der (Meth)acrylsäure handeln.

Bevorzugt sind Ester der (Meth)acrylsäure, mit einem Rest R, der nicht olefinisch ungesättigt ist. 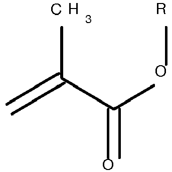 beziehungsweise

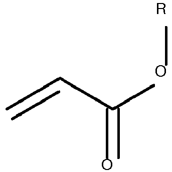

Der Rest R kann gesättigt-aliphatisch, aromatisch oder gemischt gesättigt-aliphatisch-aromatisch sein. Als aliphatisch werden im Rahmen der vorliegenden Erfindung alle organischen Reste bezeichnet, die nicht aromatisch sind. Bevorzugt ist der Rest R aliphatisch.

Der gesättigt-aliphatische Rest kann ein reiner Kohlenwasserstoffrest sein oder er kann Heteroatome aus verbrückenden Gruppen (beispielsweise Sauerstoff aus Ether- oder Estergruppen) enthalten und/oder mit funktionellen Gruppen enthaltend Heteroatome (beispielsweise Alkoholgruppen) substituiert sein. Im Rahmen der vorliegenden Erfindung wird also klar unterschieden zwischen verbrückenden Gruppen enthaltend Heteroatome und funktionellen Gruppen enthaltend Heteroatome (das heißt endständigen funktionellen Gruppen enthaltend Heteroatome).

Bevorzugt werden jedenfalls, aber nicht zwingend ausschließlich, Monomere eingesetzt, in denen der gesättigt-aliphatische Rest R ein reiner Kohlenwasserstoffrest (Alkylrest) ist, also keine Heteroatome aus verbrückenden Gruppen (beispielsweise Sauerstoff aus Ethergruppen) enthält und auch nicht mit funktionellen Gruppen (beispielsweise Alkoholgruppen) substituiert ist.

Für den Fall, dass R ein Alkylrest ist, kann es sich beispielsweise um einen linearen, verzweigten oder cyclischen Alkylrest handeln. Natürlich kann ein solcher Alkylrest auch lineare und cyclische beziehungsweise verzweigte und cyclische Strukturanteile aufweisen. Bevorzugt hat der Alkylrest 1 bis 20, besonders bevorzugt 1 bis 10 Kohlenstoffatome.

Besonders bevorzugte einfach ungesättigte Ester der (Meth)acrylsäure mit einem Alkylrest sind Methyl(meth)acrylat, Ethyl(meth)acrylat, Propyl(meth)acrylat, Isopropyl(meth)acrylat, n-Butyl(meth)acrylat, Isobutyl(meth)acrylat, tert-Butyl(meth)acrylat, Amyl(meth)acrylat, Hexyl(meth)acrylat, Ethylhexyl(meth)acrylat, 3,3,5-Trimethylhexyl(meth)acrylat, Stearyl(meth)acrylat, Lauryl(meth)acrylat, Cycloalkyl(meth)acrylate, wie Cyclopentyl(meth)acrylat, Isobornyl(meth)acrylat sowie Cyclohexyl(meth)acrylat wobei n- und tert-Butyl(meth)acrylat und Methylmethacrylat ganz besonders bevorzugt sind.

Weitere geeignete Reste R sind beispielsweise gesättigt-aliphatische Reste, die funktionelle Gruppen enthaltend Heteroatome (beispielsweise Alkoholgruppen oder Phosphorsäureestergruppen) umfassen.

Geeignete einfach ungesättigte Ester der (Meth)acrylsäure mit einem mit einer oder mehreren Hydroxylgruppen substituierten gesättigt-aliphatischen Rest sind 2-Hydroxyethyl(meth)acrylat, 2-Hydroxypropyl(meth)acrylat, 3-Hydroxypropyl (meth)acrylat, 3-Hydroxybutyl(meth)acrylat und 4-Hydroxybutyl(meth)acrylat, wobei 2-Hydroxyethyl(meth)acrylat ganz besonders bevorzugt ist.

Geeignete einfach ungesättigte Ester der (Meth)acrylsäure mit Phosphorsäureestergruppen sind beispielsweise Phosphorsäureester von Polypropyleneglycolmonomethacrylat, wie das kommerziell erhältliche Sipomer PAM 200 der Firma Rhodia.

Bei möglichen weiteren Vinylgruppen-haltigen einfach olefinisch ungesättigten Monomeren handelt es sich um von den oben beschriebenen acrylat-basierten Monomeren verschiedenen Monomere mit einem Rest R' an der Vinylgruppe, der nicht olefinisch ungesättigt ist.

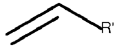

Der Rest R' kann gesättigt-aliphatisch, aromatisch oder gemischt gesättigt-aliphatisch-aromatisch sein, wobei aromatische und gemischt gesättigt-aliphatisch-aromatische Reste, in denen die aliphatischen Anteile Alkylgruppen darstellen, bevorzugt sind.

Besonders bevorzugte weitere Vinylgruppen-haltige einfach olefinisch ungesättigte Monomere sind insbesondere Vinyltoluol, alpha-Methylstyrol und insbesondere Styrol.

Möglich sind auch Vinylgruppen-haltige einfach ungesättigte Monomere, in denen der Rest R' die folgende Struktur hat: 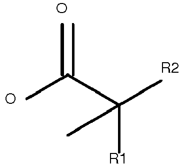 wobei die Reste R1 und R2 Alkylreste insgesamt 7 Kohlenstoffatomen enthalten. Solche Monomere sind unter dem Namen VeoVa 10 bei der Firma Momentive kommerziell erhältlich.

Weitere grundsätzlich geeignete Monomere sind olefinisch ungesättigte Monomere wie Acrylnitril, Methacrylnitril, Acrylamid, Methacrylamid, N,N-Dimethylacrylamid, Vinylacetat, Vinylpropionat, Vinylchlorid, N-Vinylpyrrolidon, N-Vinylcaprolactam, N-Vinylformamid, N-Vinylimidazol, N-Vinyl-2-Methylimidazolin sowie weitere ungesättigte alpha-beta-Carbonsäuren.

Beispiele geeigneter mehrfach olefinisch ungesättigter Monomere umfassen Ester der (Meth)acrylsäure mit einem olefinisch ungesättigten Rest R". Bei dem Rest R" kann es sich beispielsweise um einen Allylrest oder um einen (Meth)acrylsäurerest handeln. 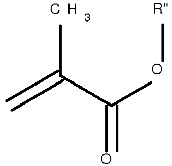 beziehungsweise

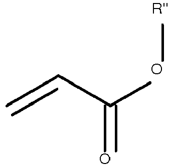

Bevorzugte mehrfach olefinisch ungesättigte Monomere umfassen Ethylenglykoldi(meth)acrylat, 1,2-Propylenglykoldi(meth)acrylat, 2,2-Propylenglykoldi(meth)acrylat, Butandiol-1,4-di(meth)acrylat, Neopentylglykoldi-(meth)acrylat, 3-Methylpentandioldi(meth)acrylat, Diethylenglykoldi(meth)acrylat, Triethylenglykoldi(meth)acrylat, Tetraethylenglykoldi(meth)acrylat, Dipropylenglykol-di(meth)acrylat, Tripropylenglykoldi(meth)acrylat, Hexandioldi(meth)acrylat und Allyl(meth)acrylat.

Darüber hinaus umfassen bevorzugte mehrfach olefinisch ungesättigte Verbindungen Acrylsäure- und Methacrylsäureester von Alkoholen mit mehr als zwei OH-Gruppen, wie zum Beispiel Trimethylolpropantri(meth)acrylat oder Glycerintri(meth)acrylat, aber auch Trimethylolpropandi(meth)acrylatmonoallylether, Trimethylolpropan(meth)acrylat-diallylether, Pentaerythrittri(meth)acrylatmonoallylether, Pentaerythritdi(meth)acrylat-diallylether, Pentaerythrit(meth)acrylattriallylether, Triallylsaccharose, und Pentaallylsaccharose.

Möglich sind auch Allylether von mono- oder mehrwertigen Alkoholen, wie beispielsweise Trimethylolpropanmonoallylether.

Sofern eingesetzt, sind als mehrfach olefinisch ungesättigte Monomere Hexandioldiacrylat und/oder Allyl(meth)acrylat bevorzugt.

Hinsichtlich der in den einzelnen Polymerisationsstufen eingesetzten Monomermischungen (A), (B) und (C) sind spezielle, in der Folge dargelegte Bedingungen einzuhalten.

Zunächst ist festzuhalten, dass die Mischungen (A), (B) und (C) jedenfalls unterschiedliche voneinander sind. Sie enthalten also jeweils unterschiedliche Monomere und/oder unterschiedliche Anteile mindestens eines bestimmten Monomers.

Die Mischung (A) enthält mindestens 50 Gew.-%, bevorzugt mindestens 55 Gew.-%, von olefinisch ungesättigten Monomeren mit einer Wasserlöslichkeit von kleiner 0,5 g/l bei 25°C. Ein entsprechendes bevorzugtes Monomer ist Styrol.

Die Löslichkeit der Monomere in Wasser kann über eine Gleichgewichtseinstellung mit dem Gasraum oberhalb der wässrigen Phase bestimmt werden (analog der Literatur X.-S. Chai, Q.X. Hou, F.J. Schork, Journal of Applied Polymer Science Vol. 99, 1296-1301 (2006)).

Dazu wird in einem 20 ml Gasraumprobenröhrchen zu einem definierten Volumen an Wasser, bevorzugt 2 ml, eine so große Masse des jeweiligen Monomers gegeben, dass sich diese Masse jedenfalls nicht vollständig in dem gewählten Volumen Wasser lösen kann. Zusätzlich wird ein Emulgator (10 ppm, bezogen auf Gesamtmasse der Probenmischung) hinzugegeben. Um die Gleichgewichtskonzentration zu erhalten, wird die Mischung ständig geschüttelt. Die überstehende Gasphase wird gegen Inertgas ausgetauscht, so dass sich wieder ein Gleichgewicht einstellt. In der entnommenen Gasphase wird jeweils der Anteil der zu detektieren Substanz gemessen (bevorzugt mittels Gaschromatographie). Die Gleichgewichtskonzentration in Wasser kann bestimmt werden, indem der Anteil des Monomers in der Gasphase graphisch ausgewertet wird. Die Steigung der Kurve ändert sich von einem nahezu konstanten Wert (S1) zu einer signifikant negativen Steigung (S2) sobald der überschüssige Monomeranteil aus der Mischung entfernt wurde. Die Gleichgewichtskonzentration ist dabei an dem Schnittpunkt der Geraden mit der Steigung S1 und der Geraden mit der Steigung S2 erreicht. Die beschriebene Bestimmung wird bei 25°C durchgeführt.

Bevorzugt enthält die Monomerenmischung (A) keine hydroxyfunktionellen Monomere. Ebenfalls bevorzugt enthält die Monomerenmischung (A) keine säurefunktionellen Monomere.

Ganz besonders bevorzugt enthält die Monomerenmischung (A) gar keine Monomere mit funktionellen Gruppen enthaltend Heteroatome. Dies bedeutet, dass Heteroatome, sofern vorhanden, lediglich in Form von verbrückenden Gruppen vorhanden sind. Dies ist beispielsweise der Fall in den oben beschriebenen (meth)acrylat-basierten, einfach olefinisch ungesättigten Monomeren, die als Rest R einen Alkylrest besitzen.

Bevorzugt enthält die Monomerenmischung (A) ausschließlich einfach olefinisch ungesättigte Monomere.

In einer besonders bevorzugten Ausführungsform enthält die Monomermischung (A) mindestens einen einfach ungesättigten Ester der (Meth)acrylsäure mit einem Alkylrest und mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind.

Die in der Mischung (A) enthaltenen Monomere werden so ausgewählt, dass ein daraus hergestelltes Polymer eine Glasübergangstemperatur von 10 bis 65°C, bevorzugt von 30 bis 50°C besitzt.

Die Glasübergangstemperatur T_{g} wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 15 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N₂) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN 53765, Punkt 8.1, diejenige Temperatur im 2. Messlauf bezeichnet, bei der die Hälfte der Änderung der spezifischen Wärmekapazität (0,5 Delta cₚ) erreicht ist. Sie wird aus dem DDK-Diagramm (Auftragung des Wärmestroms gegen die Temperatur) ermittelt. Es handelt sich um die Temperatur, die dem Schnittpunkt der Mittellinie zwischen den extrapolierten Basislinien vor und nach dem Glasübergang mit der Messkurve entspricht.

Für eine zielführende Abschätzung der bei der Messung zu erwartenden Glasübergangstemperatur kann die bekannte Fox-Gleichung herangezogen werden. Da die Fox-Gleichung eine gute Näherung darstellt, die auf den Glasübergangstemperaturen der Homopolymere und deren Gewichtsteilen ohne Einbeziehung des Molekulargewichts basiert, kann sie als zielführendes Hilfsmittel für den Fachmann bei der Synthese eingesetzt werden, sodass eine gewünschte Glasübergangstemperatur über wenige zielgerichtete Versuche eingestellt werden kann.

Das in Stufe i. durch die Emulsionspolymerisation der Monomerenmischung (A) hergestellte Polymerisat (auch genannt Polymer) wird auch als Saat bezeichnet.

Die Saat besitzt bevorzugt eine Teilchengröße von 20 bis 125 nm (gemessen mittels dynamischer Lichtstreuung (Photonenkorrelationsspektroskopie) nach DIN ISO 13321, wobei unter Teilchengröße im Rahmen der vorliegenden Erfindung der gemessene mittlere Partikeldurchmesser (Z-Average mean) zu verstehen ist. Konkret gemessen werden kann die Teilchengröße beispielsweise mit einem "Malvern Nano S90" (Fa. Malvern Instruments).

Die Mischung (B) enthält mindestens ein mehrfach olefinisch ungesättigtes Monomer, bevorzugt mindestens ein zweifach olefinisch ungesättigtes Monomer. Ein entsprechendes bevorzugtes Monomer ist Hexandioldiacrylat.

Bevorzugt enthält die Monomerenmischung (B) keine hydroxyfunktionellen Monomere. Ebenfalls bevorzugt enthält die Monomerenmischung (B) keine säurefunktionellen Monomere.

Ganz besonders bevorzugt enthält die Monomerenmischung (B) gar keine Monomere mit funktionellen Gruppen enthaltend Heteroatome. Dies bedeutet, dass Heteroatome, sofern vorhanden, lediglich in Form von verbrückenden Gruppen vorhanden sind. Dies ist beispielsweise der Fall in den oben beschriebenen (meth)acrylat-basierten, einfach olefinisch ungesättigten Monomeren, die als Rest R einen Alkylrest besitzen.

In einer besonders bevorzugten Ausführungsform enthält die Monomermischung (B) neben dem mindestens einen mehrfach olefinisch ungesättigten Monomer jedenfalls noch folgende Monomere. Zum einen mindestens einen einfach ungesättigten Ester der (Meth)acrylsäure mit einem Alkylrest und zum anderen mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind.

Der Anteil von mehrfach ungesättigten Monomeren beträgt bevorzugt von 0,05 bis 3 mol.-%, bezogen auf die molare Gesamtmenge von Monomeren der Monomerenmischung (B).

Die in der Mischung (B) enthaltenen Monomere werden so ausgewählt, dass ein daraus hergestelltes Polymer eine Glasübergangstemperatur von -35 bis 15°C, bevorzugt von -25 bis +7°C besitzt.

Das in Stufe ii. durch die Emulsionspolymerisation der Monomerenmischung (B) in Anwesenheit der Saat hergestellte Polymerisat wird auch als Kern bezeichnet. Nach der Stufe ii. resultiert also ein Polymerisat, welches Saat und Kern umfasst.

Das Polymerisat, welches nach der Stufe ii. erhalten wird, besitzt bevorzugt eine Teilchengröße von 80 bis 280 nm, bevorzugt 120 bis 250 nm.

Die in der Mischung (C) enthaltenen Monomere werden so ausgewählt, dass ein daraus hergestelltes Polymer eine Glasübergangstemperatur von -50 bis 15°C, bevorzugt von -20 bis +12°C besitzt.

Die olefinisch ungesättigten Monomere der Mischung (C) werden dabei bevorzugt so ausgewählt, dass das resultierende Polymerisat, umfassend Saat, Kern und Schale, eine Säurezahl von 10 bis 25 hat.

Demzufolge enthält die Mischung (C) bevorzugt mindestens eine alpha-beta ungesättigte Carbonsäure, insbesondere bevorzugt (Meth)acrylsäure.

Die olefinisch ungesättigten Monomere der Mischung (C) werden zudem bevorzugt so ausgewählt, dass das resultierende Polymerisat, umfassend Saat, Kern und Schale, eine OH-Zahl von 0 bis 30, bevorzugt 10 bis 25 hat.

Bei allen vorstehend genannten Säurezahlen und OH-Zahlen handelt es sich um auf Basis der insgesamt eingesetzten Monomerenmischungen berechnete Werte.

In einer besonders bevorzugten Ausführungsform enthält die Monomermischung (C) mindestens eine alpha-beta ungesättigte Carbonsäure und mindestens einen einfach ungesättigten Ester der (Meth)acrylsäure mit einem mit einer Hydroxylgruppe substituierten Alkylrest.

In einer ganz besonders bevorzugten Ausführungsform enthält die Monomermischung (C) mindestens eine alpha-beta ungesättigte Carbonsäure, mindestens einen einfach ungesättigten Ester der (Meth)acrylsäure mit einem mit einer Hydroxylgruppe substituierten Alkylrest und mindestens einen einfach ungesättigten Ester der (Meth)acrylsäure mit einem Alkylrest.

Sofern im Rahmen der vorliegenden Erfindung von einen Alkylrest ohne weitere Spezifizierung gesprochen wird, ist hierunter immer ein reiner Alkylrest ohne funktionelle Gruppen und Heteroatome zu verstehen.

Das in Stufe iii. durch die Emulsionspolymerisation der Monomerenmischung (C) in Anwesenheit von Saat und Kern hergestellte Polymerisat wird auch als Schale bezeichnet. Nach der Stufe iii. resultiert also ein Polymerisat, welches Saat, Kern und Schale umfasst.

Das Polymerisat besitzt nach seiner Herstellung eine Teilchengröße von 100 bis 500 nm, bevorzugt 125 bis 400 nm, ganz besonders bevorzugt von 130 bis 300 nm.

Bevorzugt werden die Anteile der Monomerenmischungen wie folgt aufeinander abgestimmt. Der Anteil der Mischung (A) beträgt von 0,1 bis 10 Gew.-%, der Anteil der Mischung (B) von 60 bis 80 Gew.-% und der Anteil der Mischung (C) von 10 bis 30 Gew.-%, jeweils bezogen auf die Summe der Einzelmengen der Mischungen (A), (B) und (C).

Die wässrige Dispersion (wD) besitzt bevorzugt einen pH-Wert von 5,0 bis 9,0, nochmals bevorzugt 7,0 bis 8,5, ganz besonders bevorzugt 7,5 bis 8,5. Der pH-Wert kann bereits während der Herstellung, beispielsweise durch den Einsatz von wie weiter unten genannten Basen, konstant gehalten werden oder auch nach der Herstellung des Polymerisats gezielt eingestellt werden.

In ganz besonders bevorzugten Ausführungsformen gilt, dass die wässrige Dispersion (wD) einen pH-Wert von 5,0 bis 9,0 aufweist und das darin enthaltene mindestens eine Polymerisat eine Teilchengröße von 100 bis 500 nm aufweist. Nochmals bevorzugtere Bereichskombinationen sind: pH-Wert von 7,0 bis 8,5 und eine Teilchengröße von 125 bis 400 nm, nochmals bevorzugt pH-Wert von 7,5 bis 8,5 und eine Teilchengröße von 130 bis 300 nm.

Bevorzugt werden die beschriebenen Stufen i. bis iii. ohne Zusatz von zur Einstellung des pH-Werts bekannten Säuren oder Basen durchgeführt. Werden bei der Herstellung des Polymerisats dann beispielsweise carboxyfunktionelle Monomere eingesetzt, was im Rahmen der Stufe iii. bevorzugt ist, so kann der pH-Wert der Dispersion nach Abschluss der Stufe iii. bei kleiner 7 liegen. Demzufolge ist eine Zugabe von Base notwendig, um den pH-Wert auf einen höheren Wert, wie beispielsweise einen Wert in den bevorzugten Bereichen, einzustellen.

Aus oben Gesagtem folgt, dass der pH-Wert bevorzugt nach der Stufe iii. entsprechend eingestellt wird beziehungsweise eingestellt werden muss, insbesondere durch Zugabe einer Base wie einer organischen, stickstoffhaltigen Base wie einem Amin wie Ammoniak, Trimethylamin, Triethylamin, Tributylamine, Dimethylanilin, Triphenylamin, N,N-Dimethylethanolamin, Methyldiethanolamin oder Triethanolamin, sowie durch Zugabe von Natriumhydrogencarbonat oder Boraten und auch Mischungen der vorgenannten Substanzen. Dies schließt aber nicht aus, dass der pH-Wert auch vor, während oder nach den Emulsionspolymerisationen oder auch zwischen den einzelnen Emulsionspolymerisationen eingestellt werden kann. Ebenfalls möglich ist, dass durch die Wahl der Monomere die Einstellung des pH-Werts auf einen gewünschten Wert gar nicht notwendig ist.

Dabei wird die Messung des pH-Wertes bevorzugt mit einem pH-Meter (beispielsweise Mettler-Toledo S20 SevenEasy pH Meter) mit einer kombinierten pH-Elektrode (beispielsweise Mettler-Toledo lnLab^{®} Routine) durchgeführt.

Der Festkörper der Dispersion (wD) beträgt bevorzugt von 15 bis 40 % nochmals bevorzugt 20 bis 30 %.

Die Dispersion (wD) ist wässrig. Der Ausdruck wässrig ist dem Fachmann bekannt. Es handelt sich um ein System, das als Lösemittel hauptsächlich Wasser und organische Lösemittel lediglich in untergeordneten Anteilen enthält. Inwieweit der Ausdruck wässrig in bevorzugten Ausführungsformen zu verstehen ist, kann sich für unterschiedliche betrachtete Systeme (wie der wässrigen Dispersion (wD) oder dem wässrigen Basislack (b.2.1)) voneinander unterscheiden.

So gilt für die wässrige Dispersion (wD) bevorzugt, dass sie einen Anteil von 55 bis 75 Gew.-%, insbesondere bevorzugt 60 bis 70 Gew.-%, jeweils bezogen auf das Gesamtgewicht der Dispersion, Wasser enthält.

Nochmals bevorzugt ist, dass die prozentuale Summe aus dem Festkörper der Dispersion (wD) und dem Anteil von Wasser an der Dispersion (wD) bei mindestens 80 Gew.-%, bevorzugt bei mindestens 90 Gew.-% liegt. Darunter bevorzugt sind Bereiche von 80 bis 99 Gew.-%, insbesondere 90 bis 97,5 Gew.-%. In dieser Angabe wird der Festkörper, der traditionell nur die Einheit "%" besitzt, in "Gew.-%" angegeben. Da der Festkörper letztlich auch eine prozentuale Gewichtsangabe darstellt, ist diese Form der Darstellung gerechtfertigt. Hat also beispielsweise eine Dispersion einen Festkörper von 25 % und einen Wassergehalt von 70 Gew.-%, so beträgt die oben definierte prozentuale Summe aus dem Festkörper und dem Anteil von Wasser 95 Gew.-%.

Demzufolge besteht die Dispersion weitestgehend aus Wasser und dem speziellen Polymerisat und enthält umweltbelastende Komponenten wie insbesondere organische Lösemittel nicht oder nur in geringen Anteilen.

Der Anteil der mindestens einen Dispersionen (wD), bezogen auf das Gesamtgewicht des wässrigen Basislacks (b.2.1), beträgt bevorzugt 5 bis 60 Gew.-%, besonders bevorzugt 10 bis 50 Gew.-% und ganz besonders bevorzugt 20 bis 45 Gew.-%.

Der Anteil der aus den Dispersionen (wD) stammenden Polymerisate beträgt, bezogen auf das Gesamtgewicht des wässrigen Basislacks (b.2.1), vorzugsweise von 1 bis 24 Gew.-%, bevorzugt 2,5 bis 20,0 Gew.-%, besonders bevorzugt 3 bis 18,0 Gew.-%.

Die Bestimmung beziehungsweise Festlegung des Anteils der aus den erfindungsgemäß einzusetzenden Dispersionen (wD) stammenden Polymerisate am Basislack kann über die Bestimmung des Festkörpers (auch genannt nicht flüchtiger Anteil, Festkörpergehalt oder Festkörperanteil) einer Dispersion (wD), die in dem Basislack eingesetzt werden soll, erfolgen.

Im Falle einer möglichen Spezifizierung auf Basislacke enthaltend bevorzugte Dispersionen (wD) in einem speziellen Anteilsbereich gilt folgendes. Die Dispersionen (wD), die nicht in die bevorzugte Gruppe fallen, können selbstverständlich weiterhin im Basislack enthalten sein. Der spezielle Anteilsbereich gilt dann nur für die bevorzugte Gruppe von Dispersionen (wD). Bevorzugt ist allerdings, dass für den Gesamtanteil von Dispersionen (wD) bestehend aus Dispersionen aus der bevorzugten Gruppe und Dispersionen, die nicht in die bevorzugte Gruppe fallen, ebenfalls der spezielle Anteilsbereich gilt.

Würde also eine Beschränkung auf einen Anteilsbereich von 10 bis 50 Gew.-% und eine bevorzugte Gruppe von Dispersionen (wD) durchgeführt werden, so gilt dieser Anteilsbereich augenscheinlich zunächst nur für die bevorzugte Gruppe an Dispersionen (wD). Bevorzugt wäre dann aber, dass insgesamt von allen ursprünglich umfassten Dispersionen bestehend aus Dispersionen aus der bevorzugten Gruppe und Dispersionen, die nicht in die bevorzugte Gruppe fallen, ebenfalls von 10 bis 50 Gew.-% enthalten sind. Werden also 35 Gew.-% von Dispersionen (wD) der bevorzugten Gruppe eingesetzt, so können höchstens 15 Gew.-% der Dispersionen der nicht bevorzugten Gruppe eingesetzt werden.

Das genannte Prinzip gilt im Rahmen der vorliegenden Erfindung für alle genannten Komponenten des Basislacks und deren Anteilsbereiche, beispielsweise die weiter unten genannten Pigmente oder auch die weiter unten genannten Vernetzungsmittel wie Melaminharze.

Der erfindungsgemäß einzusetzende Basislack (b.2.1) enthält bevorzugt mindestens ein Pigment. Hierunter zu verstehen sind an sich bekannte farbgebende und/oder optisch effektgebende Pigmente.

Solche Farbpigmente und Effektpigmente sind dem Fachmann werden beispielsweise in Römpp-Lexikon Lacke und Druckfarben, Georg Thieme Verlag, Stuttgart, New York, 1998, Seite 176 und 451, beschrieben. Die Begriffe farbgebendes Pigment und Farbpigment sind ebenso wie die Begriffe optisch effektgebendes Pigment und Effektpigment austauschbar.

Bevorzugte Effektpigmente sind beispielsweise plättchenförmige Metalleffektpigmente wie blättchenförmige Aluminiumpigmente, Goldbronzen, feuergefärbte Bronzen und/oder Eisenoxid-Aluminiumpigmente, Perglanzpigmente wie Fischsilber, basisches Bleicarbonat, Bismutoxidchlorid und/oder Metalloxid-Glimmer-Pigmente und/oder sonstige Effektpigmente wie blättchenförmiges Graphit, blättchenförmiges Eisenoxid, Mehrschicht-Effekt-Pigmente aus PVD-Filmen und/oder Liquid Crystal Polymer-Pigmente. Besonders bevorzugt sind plättchenförmige Metalleffektpigmente, insbesondere blättchenförmige Aluminiumpigmente.

Als typische Farbpigmente zu nennen sind insbesondere anorganische farbgebende Pigmente wie Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Der Anteil der Pigmente liegt vorzugsweise im Bereich von 1,0 bis 40,0 Gew.-%, bevorzugt 2,0 bis 35,0 Gew.-%, besonders bevorzugt 5,0 bis 30,0 Gew.-%, jeweils bezogen auf das Gesamtgewicht des wässrigen Basislacks (b.2.1).

Der wässrige Basislack (b.2.1) enthält bevorzugt noch mindestens ein von den in den Dispersionen (wD) enthaltenen Polymerisaten verschiedenes Polymer als Bindemittel, insbesondere mindestens ein Polymer ausgewählt aus der Gruppe bestehend aus Polyurethanen, Polyestern, Polyacrylaten und/oder Mischpolymerisaten der genannten Polymere, insbesondere Polyester und/oder Polyurethan-Polyacrylate. Bevorzugte Polyester werden beispielsweise in DE 4009858 A1 in Spalte 6, Zeile 53 bis Spalte 7, Zeile 61 und Spalte 10, Zeile 24 bis Spalte 13, Zeile 3 oder WO 2014/033135 A2, Seite 2, Zeile 24 bis Seite 7, Zeile 10 sowie Seite 28, Zeile 13 bis Seite 29, Zeile 13 beschrieben. Bevorzugte Polyurethan-Polyacrylat-Mischpolymerisate (acrylierte Polyurethane) und deren Herstellung werden beispielsweise in WO 91/15528 A1, Seite 3, Zeile 21 bis Seite 20, Zeile 33 sowie in DE 4437535 A1, Seite 2, Zeile 27 bis Seite 6, Zeile 22 beschrieben. Die beschriebenen Polymere als Bindemittel sind bevorzugt hydroxyfunktionell und besitzen insbesondere bevorzugt eine OH-Zahl im Bereich von 15 bis 200 mg KOH/g, besonders bevorzugt von 20 bis 150 mg KOH/g. Besonders bevorzugt enthalten die Basislacke mindestens ein hydroxyfunktionelles Polyurethan-Polyacrylat-Mischpolymerisat, nochmals bevorzugt mindestens ein hydroxyfunktionelles Polyurethan-Polyacrylat-Mischpolymerisat sowie mindestens einen hydroxyfunktionellen Polyester.

Der Anteil der weiteren Polymere als Bindemittel kann breit variieren und liegt vorzugsweise im Bereich von 1,0 bis 25,0 Gew.-%, bevorzugt 3,0 bis 20,0 Gew.-%, besonders bevorzugt 5,0 bis 15,0 Gew.-%, jeweils bezogen auf das Gesamtgewicht des Basislacks (b.2.1).

Zudem kann der Basislack (b.2.1) mindestens ein an sich bekanntes typisches Vernetzungsmittel enthalten. Sofern er ein Vernetzungsmittel enthält, handelt es sich bevorzugt um mindestens ein Aminoplastharz und/oder mindestens ein blockiertes Polyisocyanat, bevorzugt ein Aminoplastharz. Unter den Aminoplastharzen sind insbesondere Melaminharze bevorzugt.

Sofern der Basislack (b.2.1) Vernetzungsmittel enthält, liegt der Anteil dieser Vernetzungsmittel, insbesondere Aminoplastharze und/oder blockierte Polyisocyanate, besonders bevorzugt Aminoplastharze, darunter bevorzugt Melaminharze, vorzugsweise im Bereich von 0,5 bis 20,0 Gew.-%, bevorzugt 1,0 bis 15,0 Gew.-%, besonders bevorzugt 1,5 bis 10,0 Gew.-%, jeweils bezogen auf das Gesamtgewicht des Basislacks (b.2.1).

Der Basislack (b.2.1) kann zudem mindestens einen Verdicker enthalten. Als Verdicker eignen sich anorganische Verdicker aus der Gruppe der Schichtsilikate wie Lithium-Aluminium-Magnesium Silikate. Ebenfalls enthalten kann der Basislack mindestens einen organischen Verdicker, beispielsweise einen (Meth)acrylsäure-(Meth)acrylatCopolymerisat-Verdicker oder einen Polyurethan-Verdicker. Eingesetzt werden können dabei beispielsweise an sich bekannte organische Assoziativverdicker, wie beispielsweise die bekannten Polyurethan-Assoziativverdicker. Als Assoziativverdicker werden bekanntermaßen wasserlösliche Polymere bezeichnet, welche an den Kettenenden oder in Seitenketten stark hydrophobe Gruppen aufweisen und/oder deren hydrophile Ketten im Inneren hydrophobe Blöcke oder Bündelungen enthalten. Dadurch besitzen diese Polymere einen Tensid-Charakter und sind in wässriger Phase zur Bildung von Mizellen fähig. Ähnlich wie bei den Tensiden verbleiben die hydrophilen Bereiche in der wässrigen Phase, während sich die hydrophoben Bereiche in die Teilchen von Polymerdispersionen einlagern, auf der Oberfläche von weiteren festen Teilchen wie Pigmenten und/oder Füllstoffen adsorbieren und/oder Mizellen in der wässrigen Phase ausbilden. Letztlich wird eine verdickende Wirkung erzielt, ohne dass es zu einem erhöhten Absetzverhalten kommt.

Die genannten Verdicker sind kommerziell erhältlich. Der Anteil der Verdicker liegt vorzugsweise im Bereich von 0,1 bis 5,0 Gew.-%, bevorzugt 0,2 bis 3,0 Gew.-%, besonders bevorzugt 0,3 bis 2,0 Gew.-%, jeweils bezogen auf das Gesamtgewicht des Basislacks.

Darüber hinaus kann der Basislack (b.2.1) noch mindestens einen weiteren Zusatzstoff enthalten. Beispiele für derartige Zusatzstoffe sind rückstandsfrei oder im Wesentlichen rückstandsfrei thermisch zersetzbare Salze, von den bereits genannten Polymeren als Bindemittel verschiedene physikalisch, thermisch und/oder mit aktinischer Strahlung härtbare Polymere als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel. Solche Zusatzstoffe werden in den üblichen und bekannten Mengen eingesetzt.

Der Festkörpergehalt des Basislacks (b.2.1) kann je nach den Erfordernissen des Einzelfalls variieren. In erster Linie richtet sich der Festkörpergehalt nach der für die Applikation, insbesondere Spritzapplikation, erforderlichen Viskosität. Es ist von besonderem Vorteil, dass der erfindungsgemäß einzusetzende Basislack bei vergleichsweise hohen Festkörpern trotzdem eine Viskosität aufweisen kann, die eine angemessene Applikation zulässt.

Vorzugsweise liegt der Festkörpergehalt des Basislacks bei mindestens 16,5 %, bevorzugt mindestens 18,0 %, nochmals bevorzugt mindestens 20,0 %.

Bei den genannten Bedingungen, das heißt bei den genannten Festkörpergehalten, weisen bevorzugte Basislacke (b.2.1) bei 23°C und einer Scherbelastung von 1000 1/s eine Viskosität von 40 bis 150 mPa·s, insbesondere 70 bis 120 mPa·s auf (genaueres zur Messmethode siehe Beispielteil). Im Rahmen der vorliegenden Erfindung wird eine Viskosität in diesem Bereich bei der angegebenen Scherbelastung als Spritzviskosität (Verarbeitungsviskosität) bezeichnet. Bekanntermaßen werden Beschichtungsmittel bei Spritzviskosität appliziert, das heißt sie besitzen unter den dann vorliegenden Bedingungen (hohe Scherbelastung) eine Viskosität, die insbesondere nicht zu hoch ist, um eine effektive Applikation zu ermöglichen. Dies bedeutet, dass die Einstellung der Spritzviskosität wichtig ist, um einen Lack überhaupt durch Spritzverfahren applizieren zu können und um zu gewährleisten, dass sich auf dem zu beschichtenden Substrat ein vollständiger, gleichmäßiger Beschichtungsfilm ausbilden kann.

Der erfindungsgemäß einzusetzende Basislack ist wässrig (zur grundsätzlichen Definition von "wässrig" siehe oben).

Der Anteil von Wasser am Basislack (b.2.1) beträgt bevorzugt von 35 bis 70 Gew.-%, nochmals bevorzugt 45 bis 65 Gew.-%, jeweils bezogen auf das Gesamtgewicht des Basislacks.

Nochmals bevorzugt ist, dass die prozentuale Summe aus dem Festkörper des Basislacks und dem Anteil von Wasser am Basislack bei mindestens 70 Gew.-%, bevorzugt bei mindestens 75 Gew.-% liegt. Darunter bevorzugt sind Bereiche von 75 bis 95 Gew.-%, insbesondere 80 bis 90 Gew.-%.

Dies bedeutet insbesondere, dass bevorzugte Basislacke grundsätzlich umweltbelastende Komponenten wie insbesondere organische Lösemittel im Verhältnis zum Festkörper des Basislacks zu nur geringen Anteilen enthalten. Bevorzugt ist das Verhältnis aus dem flüchtigen organischen Anteil des Basislacks (in Gew.-%) und dem Festkörper des Basislacks (analog obiger Darstellung hier in Gew.-%) von 0,05 bis 0,7, nochmals bevorzugt von 0,15 bis 0,6. Als flüchtiger organischer Anteil gilt im Rahmen der vorliegenden Erfindung der Anteil des Basislacks, der weder zum Anteil Wasser noch zum Festkörper gerechnet wird.

Ein weiterer Vorteil des Basislacks (b.2.1) liegt darin, dass er ohne den Einsatz von umweit- und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält der Basislack bevorzugt weniger als 10 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist der Basislack vollständig frei von diesen organischen Lösemitteln.

Die Herstellung der Basislacke kann unter Einsatz der für die Herstellung von Basislacken üblichen und bekannten Mischverfahren und Mischaggregaten erfolgen.

Für die im Rahmen des erfindungsgemäßen Verfahrens eingesetzten Basislacke (b.2.2.x) gilt, dass mindestens einer dieser Basislacke die für den Basislack (b.2.1) beschriebenen erfindungswesentlichen Merkmale aufweist. Das heißt insbesondere, dass mindestens einer der Basislacke (b.2.2.x) mindestens eine wässrige Dispersion (wD) enthält. Auch die im Rahmen der Beschreibung des Basislacks (b.2.1) beschriebenen bevorzugten Merkmale und Ausführungsformen gelten bevorzugt für mindestens einen der Basislacke (b.2.2.x). Bevorzugt gilt das zuvor Gesagte für alle eingesetzten Basislacke (b.2.2.x).

In den weiter oben beschriebenen bevorzugten Varianten der Stufe (2.2) des erfindungsgemäßen Verfahrens wird zunächst ein erster Basislack (b.2.2.a) aufgebracht, der auch als farbvorbereitender Basislack bezeichnet werden kann. Er dient also als Grundlage für mindestens eine dann folgende farb- und/oder effektgebende Basislackschicht, das heißt eine Schicht, die dann optimal ihre Funktion der Farb-und/oder Effektgebung erfüllen kann.

In einer besonderen Ausführungsform ist ein farbvorbereitenden Basislack im Wesentlichen frei von Buntpigmenten und Effektpigmenten. Insbesondere bevorzugt enthält ein solcher Basislack weniger als 2 Gew.-%, bevorzugt weniger als 1 Gew.-% an Buntpigmenten und Effektpigmenten, jeweils bezogen auf das Gesamtgewicht des wässrigen Basislacks. Der farbvorbereitende Basislack enthält in dieser Ausführungsform bevorzugt Schwarz- und/oder Weißpigmente, insbesondere bevorzugt beide Arten von diesen Pigmenten. Bevorzugt enthält er 5 bis 30 Gew.-%, bevorzugt 10 bis 25 Gew.-% Weißpigmente und 0,01 bis 1,00 Gew.-%, bevorzugt 0,1 bis 0,5 Gew.-% Schwarzpigmente, jeweils bezogen auf das Gesamtgewicht des Basislacks. Die sich daraus ergebende weiße, schwarze und insbesondere graue Farbe, die durch das Verhältnis von Weiß- und Schwarzpigmenten in unterschiedlichen Helligkeitsstufen eingestellt werden kann, stellt für den dann folgenden Basislackschicht-Aufbau eine individuell anpassbare Basis dar, sodass die Farbe und/oder die Effektgebung des folgenden Basislackaufbaus optimal zur Geltung kommen kann. Die Pigmente sind dem Fachmann bekannt und auch weiter oben beschrieben. Als Weißpigment ist hier Titandioxid, als Schwarzpigment Ruß bevorzugt. Wie schon beschrieben, kann dieser Basislack aber selbstverständlich auch Bunt und/oder Effektpigmente enthalten. Diese Variante bietet sich insbesondere dann an, wenn die resultierende Mehrschichtlackierung einen hoch chromatischen Farbton haben soll, beispielsweise ein sehr farbtiefes Rot oder Gelb. Werden Pigmente in entsprechend buntem Farbton auch dem farbvorbereitenden Basislack hinzugefügt, kann eine nochmal verbesserte Farbgebung erreicht werden. Der oder die farb- und/oder effektgebenden Basislack(e) für die zweite oder die zweite und dritte Basislackschicht innerhalb dieser Ausführungsform werden entsprechend der letztlich gewünschten Farbgebung des Gesamtaufbaus angepasst. Ist eine weiße, schwarze oder graue Farbe erwünscht, so enthält der mindestens eine weitere Basislack die entsprechenden Pigmente und ähnelt hinsichtlich der Pigmentzusammensetzung letztlich dem farbvorbereitenden Basislack. Ist eine bunte und/oder effektgebende Lackierung erwünscht, beispielsweise eine bunte Unilackierung oder eine Metallic-Effekt-Lackierung, werden entsprechende Bunt- und/oder Effektpigmente in Mengen von beispielsweise 1 bis 15 Gew.-%, bevorzugt 3 bis 10 Gew.-%, jeweils bezogen auf das Gesamtgewicht des Basislacks, eingesetzt. Buntpigmente gehören zur Gruppe der Farbpigmente, wobei letztere auch unbunte Farbpigmente wie Schwarz oder Weißpigmente umfassen. Solche Basislacke können natürlich zur Helligkeitsanpassung noch zusätzlich noch Schwarz- und/oder Weißpigmente enthalten.

Das erfindungsgemäße Verfahren erlaubt die Herstellung von Mehrschichtlackierungen auf metallischen Substraten unter Verzicht auf einen separaten Härtungsschritt. Trotzdem resultieren durch die Anwendung des erfindungsgemäßen Verfahrens Mehrschichtlackierungen, die eine ausgezeichnete Stabilität gegen Nadelstiche aufweisen, sodass auch höhere Schichtdicken der entsprechenden Basislackschichten ohne ästhetischen Qualitätsverlust aufgebaut werden können. Auch weitere optische Eigenschaften wie der optische Gesamteindruck sind hervorragend.

### Beispiele

### Methodenbeschreibung

### 1. Feststoffgehalt (Festkörper, nicht flüchtiger Anteil)

Die Bestimmung des nicht-flüchtigen Anteils erfolgt gemäß DIN EN ISO 3251 (Datum: Juni 2008). Dabei werden 1 g Probe in eine vorher getrocknete Aluminiumschale eingewogen und 60 Minuten bei 125 °C im Trockenschrank getrocknet, im Exsikkator abgekühlt, und dann zurückgewogen. Der Rückstand bezogen auf die Gesamtmenge der eingesetzten Probe entspricht dem nichtflüchtigen Anteil. Das Volumen des nicht-flüchtigen Anteils kann falls erforderlich gegebenenfalls gemäß DIN 53219 (Datum: August 2009) bestimmt werden.

### 2. Schichtdicken

Die Bestimmung der Schichtdicken erfolgt nach DIN EN ISO 2808 (Datum: Mai 2007), Verfahren 12A unter Verwendung des Messgerätes MiniTest^{®} 3100 - 4100 der Firma ElektroPhysik.

### 3. Beurteilung des Auftretens von Kochern und Läufern

Zur Bestimmung der Kocher- und Läuferneigung werden in Anlehnung an DIN EN ISO 28199-1 (Datum: Januar 2010) und DIN EN ISO 28199-3 (Datum: Januar 2010) Mehrschichtlackierungen nach der folgenden allgemeinen Vorschrift hergestellt:
Ein mit einer gehärteten kathodischen Elektrotauchlackschicht (KTL) (CathoGuard^{®} 800 der Firma BASF Coatings GmbH) beschichtetes Lochblech der Abmessungen 57 cm x 20 cm aus Stahl (gemäß DIN EN ISO 28199-1, Punkt 8.1, Ausführung A) wird analog DIN EN ISO 28199-1, Punkt 8.2 (Ausführung A) vorbereitet. Anschließend erfolgt in Anlehnung an DIN EN ISO 28199-1, Punkt 8.3 die Applikation eines wässrigen Basislacks elektrostatisch in einem Einmalauftrag als Keil mit einer Zielschichtdicke (Schichtdicke des getrockneten Materials) im Bereich von 0 µm bis 30 µm. Die resultierende Basislackschicht wird nach einer Ablüftzeit bei 18-23°C von 10 Minuten (Läuferprüfung) beziehungsweise ohne vorherige Ablüftzeit (Kocherprüfung) im Umluftofen für 5 Minuten bei 80 °C zwischengetrocknet. Im Falle der Prüfung auf Läufer werden die Bleche dabei senkrecht stehend abgelüftet und zwischengetrocknet.

Die Bestimmung der Kochergrenze, d.h. derjenigen Basislackschichtdicke, ab der Kocher auftreten, erfolgt nach DIN EN ISO 28199-3, Punkt 5.

Die Bestimmung der Läuferneigung wird nach DIN EN ISO 28199-3, Punkt 4 durchgeführt. Zusätzlich zu der Schichtdicke, bei der ein Läufer die Länge von 10 mm ab Unterkante des Loches überschreitet, wird diejenige Schichtdicke bestimmt, ab der eine erste Läuferneigung an einem Loch visuell zu beobachten ist.

### 4. Lackierung von Wasserbasislack-Keilaufbauten

Zur Beurteilung des Auftretens von Nadelstichen sowie des schichtdickenabhängigen Verlaufs werden keilförmige Mehrschichtlackierungen nach den folgenden allgemeinen Vorschriften hergestellt:
Variante A: Erster Wasserbasislack als Keil, zweiter Wasserbasislack als Konstantschicht Ein mit einer gehärteten Standard-KTL (CathoGuard^{®} 800 der Firma BASF Coatings) beschichtetes Stahlblech der Abmessungen 30 x 50 cm wird an einer Längskante mit zwei Klebstreifen (Tesaband, 19 mm) versehen, um nach der Beschichtung Schichtdickendifferenzen ermitteln zu können.

Der erste Wasserbasislack wird elektrostatisch als Keil mit einer Zielschichtdicke (Schichtdicke des getrockneten Materials) von 0-30 µm aufgetragen. Anschließend erfolgt eine Ablüftung für 3 Minuten bei Raumtemperatur, bevor nach Entfernen eines der beiden Klebestreifen der zweite Wasserbasislack ebenfalls elektrostatisch in einem Einmalauftrag appliziert wird. Die Zielschichtdicke (Schichtdicke des getrockneten Materials) beträgt 13-16 µm. Nach einer erneuten Ablüftzeit von 4 Minuten bei Raumtemperatur wird der Aufbau im Umluftofen für 10 Minuten bei 60 °C zwischengetrocknet.

Nach Entfernen des zweiten Klebestreifens wird auf den zwischengetrockneten Aufbau per Fließbecherpistole manuell ein handelsüblicher Zweikomponenten-Klarlack (ProGloss^{®} der Firma BASF Coatings GmbH) mit einer Zielschichtdicke (Schichtdicke des getrockneten Materials) von 40-45 µm aufgetragen. Die resultierende Klarlackschicht wird während 10 Minuten bei Raumtemperatur (18 bis 23 °C) abgelüftet; anschließend erfolgt die Härtung im Umluftofen bei 140 °C für weitere 20 Minuten.

### Variante B: Erster Wasserbasislack als Konstantschicht, zweiter Wasserbasislack als Keil

Ein mit einer gehärteten Standard-KTL (CathoGuard^{®} 800 der Firma BASF Coatings) beschichtetes Stahlblech der Abmessungen 30 x 50 cm wird an einer Längskante mit zwei Klebstreifen (Tesaband, 19 mm) versehen, um nach der Beschichtung Schichtdickendifferenzen ermitteln zu können.

Der erste Wasserbasislack wird elektrostatisch mit einer Zielschichtdicke (Schichtdicke des getrockneten Materials) von 18-22 µm aufgetragen. Anschließend erfolgt eine Ablüftung für 3 Minuten bei Raumtemperatur, bevor nach Entfernen eines der beiden Klebestreifen der zweite Wasserbasislack ebenfalls elektrostatisch in einem Einmalauftrag als Keil appliziert wird. Die Zielschichtdicke (Schichtdicke des getrockneten Materials) beträgt 0-30 µm. Nach einer erneuten Ablüftzeit von 4 Minuten bei Raumtemperatur wird der Aufbau im Umluftofen für 10 Minuten bei 60 °C zwischengetrocknet.

Nach Entfernen des zweiten Klebestreifens wird auf den zwischengetrockneten Aufbau per Fließbecherpistole manuell ein handelsüblicher Zweikomponenten-Klarlack (ProGloss^{®} der Firma BASF Coatings GmbH) mit einer Zielschichtdicke (Schichtdicke des getrockneten Materials) von 40-45 µm aufgetragen. Die resultierende Klarlackschicht wird während 10 Minuten bei Raumtemperatur (18 bis 23 °C) abgelüftet; anschließend erfolgt die Härtung im Umluftofen bei 140 °C für weitere 20 Minuten.

### Variante C: Ein Wasserbasislack als Keil

Ein mit einer gehärteten Standard-KTL (CathoGuard^{®} 800 der Firma BASF Coatings) beschichtetes Stahlblech der Abmessungen 30 x 50 cm wird an einer Längskante mit zwei Klebstreifen (Tesaband, 19 mm) versehen, um nach der Beschichtung Schichtdickendifferenzen ermitteln zu können.

Der Wasserbasislack wird elektrostatisch als Keil mit einer Zielschichtdicke (Schichtdicke des getrockneten Materials) von 0-30 µm aufgetragen. Nach einer Ablüftzeit von 4 Minuten bei Raumtemperatur wird der Aufbau im Umluftofen für 10 Minuten bei 80 °C zwischengetrocknet.

Nach Entfernen des Klebestreifens wird auf die zwischengetrocknete Wasserbasislackschicht per Fließbecherpistole manuell ein handelsüblicher Zweikomponenten-Klarlack (ProGloss^{®} der Firma BASF Coatings GmbH) mit einer Zielschichtdicke (Schichtdicke des getrockneten Materials) von 40-45 µm aufgetragen. Die resultierende Klarlackschicht wird während 10 Minuten bei Raumtemperatur (18 bis 23 °C) abgelüftet; anschließend erfolgt die Härtung im Umluftofen bei 140 °C für weitere 20 Minuten.

### 5. Beurteilung des Auftretens von Nadelstichen

Zur Beurteilung des Auftretens von Nadelstichen werden gemäß der Methoden zur Lackierung von Wasserbasislack-Keilaufbauten (Variante A beziehungsweise B) Mehrschichtlackierungen hergestellt und anschließend visuell nach der folgenden allgemeinen Vorschrift bewertet:
Die Trockenschichtdicke des gesamten Wasserbasislack-Aufbaus, bestehend aus dem ersten und dem zweiten Wasserbasislack, wird kontrolliert und für den Basislack-Schichtdickenkeil werden die Bereiche von 0-20 µm sowie von 20 µm bis zum Ende des Keils auf dem Stahlblech markiert.

Die Auswertung der Nadelstiche erfolgt visuell in den zwei getrennten Bereichen des Wasserbasislack-Keils. Je Bereich wird die Anzahl der Nadelstiche ausgezählt. Alle Ergebnisse werden auf eine Fläche von 200 cm² normiert. Zusätzlich wird gegebenenfalls protokolliert, ab welcher Trockenschichtdicke des Wasserbasislack-Keils keine Nadelstiche mehr auftreten.

### 6. Beurteilung des schichtdickenabhängiaen Verlaufs

Zur Beurteilung des schichtdickenabhängigen Verlaufs werden gemäß der Methoden zur Lackierung von Wasserbasislack-Keilaufbauten (Variante A, B beziehungsweise C) Mehrschichtlackierungen hergestellt und anschließend nach der folgenden allgemeinen Vorschrift bewertet:
Die Trockenschichtdicke des gesamten Wasserbasislack-Aufbaus, bestehend aus dem einen oder dem ersten und dem zweiten Wasserbasislack, wird kontrolliert und für den Basislack-Schichtdickenkeil werden die Bereiche von 15-20 µm sowie 20-25 µm bzw. von 10-15 µm, 15-20 µm, 20-25 µm, 25-30 µm sowie gegebenenfalls 30-35 µm auf dem Stahlblech markiert.

Die Bestimmung beziehungsweise Beurteilung des schichtdickenabhängigen Verlaufs erfolgt mit Hilfe des Messgerätes Wave scan der Firma Byk/Gardner innerhalb der vier zuvor ermittelten Basislack-Schichtdickenbereiche. Zu diesem Zweck wird ein Laserstrahl unter einem Winkel von 60° auf die zu untersuchende Oberfläche gerichtet, und es werden auf einer Messstrecke von 10 cm die Schwankungen des reflektierten Lichts im sogenannten short wave-Bereich (0,3 bis 1,2 mm) und im sogenannten long wave-Bereich (1,2 bis 12 mm) mit Hilfe des Messgeräts registriert (long wave = LW; short wave = SW; je niedriger die Werte, desto besser ist das Erscheinungsbild). Außerdem wird als Maß der Schärfe eines in der Oberfläche des Mehrschichtaufbaus reflektierten Bildes mit Hilfe des Messgerätes die Kenngröße "distinctness of image" (DOI) bestimmt (je höher der Wert, desto besser ist das Erscheinungsbild).

### 7. Beurteilung des schichtdickenunabhängigen Verlaufs

Zur Beurteilung des schichtdickenunabhängigen Verlaufs werden Mehrschichtlackierungen nach der folgenden allgemeinen Vorschrift hergestellt:
Auf mit einer gehärteten Standard-KTL (CathoGuard^{®} 800 der Firma BASF Coatings) beschichtetes Stahlblech der Abmessungen 30 x 50 cm wird der erste Wasserbasislack elektrostatisch mit einer Zielschichtdicke (Schichtdicke des getrockneten Materials) von 18 µm aufgetragen. Nach einer Ablüftzeit von 7 Minuten 30 Sekunden bei Raumtemperatur wird der zweite Wasserbasislack elektrostatisch mit einer Zielschichtdicke von 12-13 µm aufgetragen. Nach einer erneuten Ablüftzeit bei Raumtemperatur von 4 Minuten 30 Sekunden wird der Aufbau im Umluftofen für 7 Minuten 30 Sekunden bei 70 °C zwischengetrocknet.

Auf die zwischengetrocknete Wasserbasislackschicht wird elektrostatisch ein handelsüblicher kratzfester Zweikomponenten-Klarlack (Ceramiclear^{®} 5.1 der Firma PPG) mit einer Zielschichtdicke (Schichtdicke des getrockneten Materials) von 40-45 µm aufgetragen. Die resultierende Klarlackschicht wird während 8 Minuten bei Raumtemperatur abgelüftet; anschließend erfolgt die Härtung im Umluftofen bei 140 °C für weitere 20 Minuten.

Die messtechnische Erfassung des Verlaufs erfolgt gemäß der oben beschriebenen Methode (siehe Beurteilung des schichtdickenabhängigen Verlaufs).

### 8. Beurteilung der Haftungseigenschaften nach Schwitzwasser

Zur Beurteilung der Haftungseigenschaften nach Schwitzwasser werden Mehrschichtlackierungen nach der folgenden allgemeinen Vorschrift hergestellt:
Auf mit einer gehärteten Standard-KTL (CathoGuard^{®} 800 der Firma BASF Coatings) beschichtetes Stahlblech der Abmessungen 30 x 50 cm wird der Wasserbasislack elektrostatisch mit einer Zielschichtdicke (Schichtdicke des getrockneten Materials) von 18 µm aufgetragen.

Nach einer Ablüftzeit von 4 Minuten bei Raumtemperatur wird der Aufbau im Umluftofen für 10 Minuten bei 80 °C zwischengetrocknet.

Auf die zwischengetrocknete Wasserbasislackschicht wird per Fließbecherpistole manuell ein handelsüblicher Zweikomponenten-Klarlack (ProGloss^{®} der Firma BASF Coatings GmbH) mit einer Zielschichtdicke (Schichtdicke des getrockneten Materials) von 40-45 µm aufgetragen. Die resultierende Klarlackschicht wird während 10 Minuten bei Raumtemperatur (18 bis 23 °C) abgelüftet; anschließend erfolgt die Härtung im Umluftofen bei 140 °C für weitere 20 Minuten.

Die Proben mit den jeweiligen Mehrschichtaufbauten werden anschließend über einen Zeitraum von 10 Tagen in einer Klimakammer nach Prüfklima CH nach DIN EN ISO 6270-2:2005-09 gelagert.

Zur Beurteilung der technologischen Eigenschaften der Mehrschichtaufbauten wurden Gitterschnitte nach DIN EN ISO 2409 durchgeführt (Note GT 0 bis GT 5; 0 = bester Wert; 5 = schlechtester Wert). Die Beurteilung der Mehrschichtlackierungen hinsichtlich Steinschlaghaftung erfolgt nach DIN EN ISO 20567-1, Verfahren B. Die Beurteilung des sich ergebenden Schadensbildes erfolgt ebenfalls nach DIN EN ISO 20567-1. Des Weiteren wurden Dampfstrahltests nach DIN 55662, Verfahren B durchgeführt. Das Anbringen der Ritze (Andreaskreuz) erfolgte dabei mit einem Ritzstichel nach Sikkens (siehe DIN EN ISO 17872 Anhang A). Die Beurteilung der Ergebnisse Dampfstrahltests wurde nach DIN 55662 durchgeführt, wobei insbesondere maximale Breite der Ablösungen in Millimetern bestimmt wurde.

### Herstellung von wässrigen Dispersionen

### Die in der Folge beschriebene Herstellvorschrift bezieht sich auf Tabelle A.

### Monomerenmischung (A), Stufe i.

80 Gew.-% der Positionen 1 und 2 aus Tabelle A werden -in einen Stahlreaktor (5 L Volumen) mit Rückflusskühler gegeben und auf 80°C aufgeheizt. Die restlichen Anteile der unter "Vorlage" in Tabelle A aufgeführten -Komponenten werden in einem separaten Gefäß vorgemischt. Dieses Gemisch und davon getrennt die Initiatorlösung (Tabelle A, Position 5 und 6) werden zeitgleich innerhalb von 20 min in den Reaktor zu getropft, wobei in der Reaktionslösung ein Anteil der Monomere, bezogen auf die Gesamtmenge an in Stufe i. eingesetzten Monomeren, von 6,0 Gew.-% während der gesamten Reaktionsdauer nicht überschritten wird. Im Anschluss wird 30 min gerührt.

### Monomerenmischung (B), Stufe ii.

Die in Tabelle A unter "Mono 1" angegebenen Komponenten werden in einem separaten Gefäß vorgemischt. Dieses Gemisch wird innerhalb von 2 Stunden in den Reaktor zu getropft, wobei in der Reaktionslösung ein Anteil der Monomere, bezogen auf die Gesamtmenge an in Stufe ii. eingesetzten Monomeren, von 6,0 Gew.-% während der gesamten Reaktionsdauer nicht überschritten wird. Im Anschluss wird 1 Stunde gerührt.

### Monomerenmischung (C), Stufe iii.

Die in Tabelle A unter "Mono 2" angegebenen Komponenten werden in einem separaten Gefäß vorgemischt. Dieses Gemisch wird innerhalb von 1 Stunde in den Reaktor zu getropft, wobei in der Reaktionslösung ein Anteil der Monomere, bezogen auf die Gesamtmenge an in Stufe iii. eingesetzten Monomeren, von 6,0 Gew.-% während der gesamten Reaktionsdauer nicht überschritten wird. Im Anschluss wird 2 Stunden gerührt. Danach wird das Reaktionsgemisch auf 60°C abgekühlt und das Neutralisationsgemisch (Tabelle A, Positionen 20, 21 und 22) in einem separaten Gefäß vorgemischt. Das Neutralisationsgemisch wird innerhalb von 40 min in den Reaktor zu getropft, wobei der pH-Wert der Reaktionslösung auf einen pH-Wert von 7,5 bis 8,5 eingestellt wird. Anschließend wird das Reaktionsprodukt noch 30 min gerührt, auf 25°C abgekühlt und filtriert.

**Tabelle A: Wässrige Dispersionen**

| | | **BM2*** | **BM3*** | **BM4** | **BM5** | **BM6** | **BM7** |
|---|---|---|---|---|---|---|---|
| | **Vorlage** | | | | | | |
| 1 | VE-Wasser | 41,81 | 41,81 | 41,81 | 41,81 | 41,81 | 41,81 |
| 2 | EF 800 | 0,18 | 0,18 | 0,18 | 0,18 | 0,18 | 0,18 |
| 3 | Styrol | 0,68 | 0,93 | 0,93 | 0,93 | 0,23 | 0,23 |
| 4 | n-Butylacrylat | 0,48 | 0,23 | 0,23 | 0,23 | 0,93 | 0,93 |

| | **Initiatorlösung** | | | | | | |
|---|---|---|---|---|---|---|---|
| 5 | VE-Wasser | 0,53 | 0,53 | 0,53 | 0,53 | 0,53 | 0,53 |
| 6 | APS | 0,02 | 0,02 | 0,02 | 0,02 | 0,02 | 0,02 |

| | **Mono 1** | | | | | | |
|---|---|---|---|---|---|---|---|
| 7 | VE-Wasser | 12,78 | 12,78 | 12,78 | 12,78 | 12,78 | 12,78 |
| 8 | EF 800 | 0,15 | 0,15 | 0,15 | 0,15 | 0,15 | 0,15 |
| 9 | APS | 0,02 | 0,02 | 0,02 | 0,02 | 0,02 | 0,02 |
| 10 | Styrol | 5,61 | 5,61 | 12,41 | 12,41 | 12,41 | 12,41 |
| 11 | n-Butylacrylat | 13,6 | 13,6 | 6,8 | 6,8 | 6,8 | 6,8 |
| 12 | 1,6-HDDA | 0,34 | 0,34 | 0,34 | 0,34 | 0,34 | 0,34 |

| | **Mono 2** | | | | | | |
|---|---|---|---|---|---|---|---|
| 13 | VE-Wasser | 5,73 | 5,73 | 5,73 | 5,73 | 5,73 | 5,73 |
| 14 | EF 800 | 0,07 | 0,07 | 0,07 | 0,07 | 0,07 | 0,07 |
| 15 | APS | 0,02 | 0,02 | 0,02 | 0,02 | 0,02 | 0,02 |
| 16 | Methacrylsäure | 0,71 | 0,71 | 0,71 | 0,71 | 0,71 | 0,71 |
| 17 | 2-HEA | 0,95 | 0,95 | 0,95 | 0,95 | 0,95 | 0,95 |
| 18 | n-Butylacrylat | 3,74 | 1,87 | 3,74 | 1,87 | 3,74 | 1,87 |
| 19 | MMA | 0,58 | 2,45 | 0,58 | 2,45 | 0,58 | 2,45 |

| | **Neutralisation** | | | | | | |
|---|---|---|---|---|---|---|---|
| 20 | VE-Wasser | 6,48 | 6,48 | 6,48 | 6,48 | 6,48 | 6,48 |
| 21 | Butylglykol | 4,76 | 4,76 | 4,76 | 4,76 | 4,76 | 4,76 |
| 22 | DMEA | 0,76 | 0,76 | 0,76 | 0,76 | 0,76 | 0,76 |

| | | | | | | | |
|---|---|---|---|---|---|---|---|
| * **erfindungsgemäß einsetzbar** | | | | | | | |

Der Festkörper wurde zur Reaktionskontrolle bestimmt. Die Ergebnisse sind in Tabelle B angeben:

**Tabelle B: Festkörper der wässrigen Dispersionen**

| | **BM2*** | **BM3*** | **BM4** | **BM5** | **BM6** | **BM7** |
|---|---|---|---|---|---|---|
| **Festkörpergehalt [%]** | 25,5 | 25,5 | 25,5 | 26 | 27,4 | 26,1 |

| | | | | | | |
|---|---|---|---|---|---|---|
| * **erfindungsgemäß einsetzbar** | | | | | | |

Nach jeder Stufe und nach der abschließenden Neutralisation wurde die Teilchengröße bestimmt. Die Ergebnisse sind in Tabelle C wiedergegeben.

**Tabelle C: Teilchengrößen in Nanometer**

| | | **BM2*** | **BM3*** | **BM4** | **BM5** | **BM6** | **BM7** |
|---|---|---|---|---|---|---|---|
| i | **Nach "Vorlage"** | 90 | 70 | 70 | 70 | 120 | 120 |
| ii | **Nach "Mono 1"** | 150 | 160 | 160 | 180 | 150 | 160 |
| iii | **Nach "Mono 2"** | 190 | 230 | 230 | 250 | 220 | 200 |
| iiii | **nach Neutralisation** | 240 | 290 | 275 | 300 | 250 | 245 |

| | | | | | | | |
|---|---|---|---|---|---|---|---|
| * **erfindungsgemäß einsetzbar** | | | | | | | |

Jede der angegebenen Monomermischungen (A), (B) und (C) (entspricht "Vorlage", "Mono 1" und "Mono 2") wurde einzeln polymerisiert und im Anschluss die jeweilige Glasübergangstemperatur des erhaltenen Polymerisats bestimmt. Zusätzlich wurde die Glasübergangstemperatur für das gesamte Polymerisat nach Neutralisation bestimmt.

Die Ergebnisse sind in Tabelle D angegeben.

**Tabelle D: Glasübergangstemperaturen in °C**

| | | **BM2*** | **BM3*** | **BM4** | **BM5** | **BM6** | **BM7** |
|---|---|---|---|---|---|---|---|
| i | **"Vorlage"** | 30 | 50 | 48 | 50 | -9 | -9 |
| ii | **"Mono 1"** | -11 | -12 | 45 | 45 | 47 | 48 |
| iii | **"Mono 2"** | 4 | 6 | 4 | 4 | 5 | 4 |
| | **gesamtes Polymerisat** | -9 | -7 | 46 | 47 | 45 | 46 |

| | | | | | | | |
|---|---|---|---|---|---|---|---|
| * **erfindungsgemäß einsetzbar** | | | | | | | |

Herstellung einer weiteren wässrigen Dispersion BM8 (gemäß Korea Polym. J., Vol. 7, No. 4, S. 213-222)
Die Komponenten 1 bis 4 aus Tabelle E werden in einen Stahlreaktor (5 L Volumen) mit Rückflusskühler gegeben und auf 80°C aufgeheizt. Die Initiatorlösung (Tabelle E, Position 5 und 6) wird innerhalb von 5 min in den Reaktor zu getropft. Im Anschluss wird 30 min gerührt.

Die in Tabelle E unter "Mono 1" angegebenen Komponenten werden in einem separaten Gefäß vorgemischt. Dieses Gemisch wird innerhalb von 2 Stunden in den Reaktor zu getropft. Im Anschluss wird 1 Stunde gerührt.

Die in Tabelle E unter "Mono 2" angegebenen Komponenten werden in einem separaten Gefäß vorgemischt. Dieses Gemisch wird innerhalb von 1 Stunde in den Reaktor zu getropft. Im Anschluss wird 1 Stunde gerührt.

Danach wird da Reaktionsgemisch auf 60°C abgekühlt und das Neutralisationsgemisch (Tabelle E, Positionen 21 und 22) in einem separaten Gefäß vorgemischt. Das Neutralisationsgemisch wird innerhalb von 40 min in den Reaktor zu getropft. Anschließend wird das Reaktionsprodukt noch 30 min gerührt, auf 25°C abgekühlt.

**Tabelle E: Wässrige Dispersion BM8**

| | | **BM8** |
|---|---|---|
| | **Vorlage** | |
| 1 | VE-Wasser | 43,54 |
| 2 | Rhodapex CO 436 | 0,16 |
| 3 | Styrol | 0,5 |
| 4 | Ethylacrylat | 0,55 |

| | **Initiatorlösung** | |
|---|---|---|
| 5 | VE-Wasser | 0,55 |
| 6 | APS | 0,02 |

| | **Mono 1** | |
|---|---|---|
| 7 | VE-Wasser | 13,31 |
| 8 | Rhodapex CO 436 | 0,13 |
| 9 | APS | 0,02 |
| 10 | Styrol | 5,84 |
| 11 | Ethylacrylat | 11,05 |
| 12 | 1,6-HDDA | 0,35 |

| | **Mono 2** | |
|---|---|---|
| 13 | VE-Wasser | 5,97 |
| 14 | Rhodapex CO 436 | 0,06 |
| 15 | APS | 0,02 |
| 16 | Methacrylsäure | 0,74 |
| 17 | 2-HEA | 0,99 |
| 18 | Ethylacrylat | 3,04 |
| 19 | MMA | 0,6 |

| | **Neutralisation** | |
|---|---|---|
| 20 | VE-Wasser | 6,75 |
| 21 | Butylglykol | 4,96 |
| 22 | DMEA | 0,79 |
| | **pH-Wert** | 8,1 |

Der Festkörpergehalt betrug 23,4 %.

Nach jeder Stufe und nach der abschließenden Neutralisation wurde die Teilchengröße bestimmt. Die Ergebnisse sind in Tabelle F wiedergegeben.

**Tabelle F: Teilchengrößen in Nanometer**

| | | **BM8** |
|---|---|---|
| i | **Nach "Vorlage"** | 110 |
| ii | **Nach "Mono 1"** | 196 |
| iii | **Nach "Mono 2"** | 223 |
| iiii | **nach Neutralisation** | 310 |

Jede der angegebenen Monomermischungen wurde einzeln polymerisiert und im Anschluss die jeweilige Glasübergangstemperatur des erhaltenen Polymerisats bestimmt. Zusätzlich wurde die Glasübergangstemperatur für das gesamte Polymerisat nach Neutralisation bestimmt.

Die Ergebnisse sind in Tabelle G angegeben.

**Tabelle G: Glasübergangstemperaturen in °C**

| | | **BM8** |
|---|---|---|
| i | **"Vorlage"** | 32 |
| ii | **"Mono 1"** | 26 |
| iii | **"Mono 2"** | 35 |
| | **gesamtes Polymerisat** | 26 |

### Herstellung von wässrigen Basislacken

Hinsichtlich der in den nachstehenden Tabellen angegebenen Formulierungsbestandteile und deren Mengen ist folgendes zu berücksichtigen. Wird auf ein Handelsprodukt oder eine anderswo beschriebene Herstellvorschrift verwiesen, ist unabhängig von der jeweils gewählten Hauptbenennung des Bestandteils genau dieses Handelsprodukt oder genau das bei der referenzierten Vorschrift hergestellte Produkt gemeint.

Besitzt also ein Formulierungsbestandteil die Hauptbenennung "Melaminformaldehydharz" und ist dazu ein Handelsprodukt angegeben, so wird das Melaminformaldehydharz als genau dieses Handelsprodukt eingesetzt. Gegebenenfalls im Handelsprodukt vorhandene weitere Bestandteile wie Lösemittel sind also zu berücksichtigen, wenn auf die Menge der Wirksubstanz (des Melaminformaldehydharzes) zurückgeschlossen werden soll.

Wird also für einen Formulierungsbestandteil auf eine Herstellvorschrift verwiesen und resultiert bei dieser Herstellung beispielsweise eine Polymer-Dispersion mit einem bestimmten Festkörper, so wird genau diese Dispersion eingesetzt. Es ist nicht maßgeblich, ob als Hauptbenennung der Begriff "Polymer-Dispersion" oder lediglich die Wirksubstanz, beispielsweise "Polymer", "Polyester" oder "polyurethanmodifiziertes Polyacrylat" gewählt wurde. Dies ist zu berücksichtigen, wenn auf die Menge der Wirksubstanz (des Polymers) zurückgeschlossen werden soll.

Alle in den Tabellen angegebenen Anteile sind Gewichtsteile.

1.1a Herstellung eines nicht erfindungsgemäßen Wasserbasislackes **WBL A1,** eines nicht erfindungsgemäßen Wasserbasislackes **WBL A2** sowie eines erfindungsgemäßen Wasserbasislackes **WBL A3**

Die in der Tabelle 1.1a unter "wässrige Phase" aufgeführten Komponenten werden in der angegebenen Reihenfolge zu einer wässrigen Mischung zusammengerührt. Sodann wird 10 min lang gerührt und mit Hilfe von deionisiertem Wasser und Dimethylethanolamin auf einen pH Wert von 8 und eine Spritzviskosität von 90 mPa·s bei einer Scherbelastung von 1291 s⁻¹, gemessen mit einem Rotations-Viskosimeter (Gerät Rheolab QC mit Temperiersystem C-LTD80/QC der Firma Anton Paar) bei 23 °C, eingestellt.

**Tabelle 1.1a: Herstellung der Wasserbasislacke WBL A1 und WBL A2 (nicht erfindungsgemäß) sowie WBL A3 (erfindungsgemäß)**

| | **WBL A1** | **WBL A2** | **WBL A3** |
|---|---|---|---|
| **Wässrige Phase:** | | | |
| 3%ige Na-Mg-Schichtsilikatlösung | 15,23 | 15,23 | 15,23 |
| deionisiertes Wasser | 5,68 | | |
| 1-Propoxy-2-propanol | 1,41 | 1,41 | 1,41 |
| 2-Ethylhexanol | 0,87 | 0,87 | 0,87 |
| Pfropfmischpolymerisat auf Polyurethanbasis; | | | |
| hergestellt gemäß Seite 35, Zeile 33 bis Seite 36, Zeile 22 (Beispiel D-B2) der WO 2015/007427 A1 | 26,51 | | |
| Mehrstufiges Acrylat, hergestellt gemäß Korea Polym. J., Vol. 7, No. 4, S. 213-222) (Wässrige Dispersion BM8) | | 34,03 | |
| Wässrige Dispersion (wD) BM2 | | | 31,23 |
| Polyester; hergestellt gemäß Seite 28, Zeilen 13 bis 33 | | | |
| (Beispiel BE1) WO 2014/033135 A2 | 3,66 | | |
| Polyester; hergestellt gemäß Beispiel D, Spalte 16, Z. 37-59 der DE 40 09 858 A1 | | | |
| | | 4,85 | 4,85 |
| Melaminformaldehydharz (Cymel^{®} 203 der Firma | | | |
| Allnex) | 5,44 | 5,44 | 5,44 |
| 10%iges Dimethylethanolamin in Wasser | 0,55 | 0,30 | 0,30 |
| 2,4,7,9-Tetramethyl-5-decindiol, 52%ig in BG (erhältlich | | | |
| von BASF SE) | 1,09 | 1,09 | 1,09 |
| Triisobutylphosphat | 1,63 | 1,63 | 1,63 |
| Polyurethanmodifiziertes Polyacrylat; hergestellt gemäß S. 7, Z. 55 bis S.8, Z. 23 der DE 4437535 A1 | | | |
| | 2,91 | 2,91 | 2,91 |
| Butylglykol | 4,35 | 4,35 | 4,35 |
| Isopar^{®} L, erhältlich von Exxon Mobile | 1,84 | 1,84 | 1,84 |
| Pluriol^{®} P900, erhältlich von BASF SE | 0,54 | 0,54 | 0,54 |
| Hydrosol A170, erhältlich von DHC Solvent Chemie | | | |
| GmbH | 0,54 | 0,54 | 0,54 |
| Weißpaste | 25,68 | 25,68 | 25,68 |
| Schwarzpaste | 1,53 | 1,52 | 1,52 |
| Gelbpaste | 0,54 | 0,54 | 0,54 |

### Herstellung der Weißpaste

Die Weißpaste wird aus 50 Gewichtsteilen Titan Rutil 2310, 6 Gewichtsteilen eines gemäß Beispiel D, Spalte 16, Z. 37-59 der DE 40 09 858 A1 hergestellten Polyesters, 24,7 Gewichtsteilen einer gemäß der Patentanmeldung EP 022 8003 B2, S. 8, Z. 6 bis 18 hergestellten Bindemitteldispersion, 10,5 Gewichtsteilen deionisiertes Wasser, 4 Gewichtsteilen 2,4,7,9-Tetramethyl-5-decindiol, 52%ig in BG (erhältlich von BASF SE), 4,1 Gewichtsteilen Butylglykol, 0,4 Gewichtsteilen 10%iges Dimethylethanolamin in Wasser sowie 0,3 Gewichtsteilen Acrysol RM-8 (erhältlich von der Firma The Dow Chemical Company) hergestellt.

### Herstellung der Schwarzpaste

Die Schwarzpaste wird aus 57 Gewichtsteilen einer gemäß WO 92/15405, S. 13, Z. 13 bis S. 15, Z. 13 hergestellten Polyurethandispersion, 10 Gewichtsteilen Ruß (Ruß Monarch^{®} 1400 der Firma Cabot Corporation), 5 Gewichtsteilen eines Polyesters, hergestellt gemäß Beispiel D, Spalte 16, Z. 37-59 der DE 40 09 858 A1, 6,5 Gewichtsteilen einer 10%igen wässrigen Dimethylethanolamin-Lösung, 2,5 Gewichtsteilen eines handelsüblichen Polyethers (Pluriol^{®} P900, erhältlich von BASF SE), 7 Gewichtsteilen Butyldiglykol und 12 Gewichtsteilen deionisiertem Wasser hergestellt.

### Herstellung der Gelbpaste

Die Gelbpaste wird aus 37 Gewichtsteilen Bayferrox 3910 (erhältlich von der Firma Lanxess), 49,5 Gewichtsteilen einer gemäß WO 91/15528, S. 23, Z. 26 bis S. 25, Z. 24 hergestellten wässrigen Bindemitteldispersion, 7,5 Gewichtsteilen Disperbyk^{®}-184 (erhältlich von BYK-Chemie GmbH) und 6 Gewichtsteilen deionisiertem Wasser hergestellt.

### 1.1b Herstellung eines nicht erfindungsgemäßen Wasserbasislackes WBL A4 sowie eines erfindungsgemäßen Wasserbasislackes WBL A5

Die in der Tabelle 1.1b unter "wässrige Phase" aufgeführten Komponenten werden in der angegebenen Reihenfolge zu einer wässrigen Mischung zusammengerührt. Sodann wird 10 min lang gerührt und mit Hilfe von deionisiertem Wasser und Dimethylethanolamin auf einen pH Wert von 8 und eine Spritzviskosität von 105 mPa·s bei einer Scherbelastung von 1000 s⁻¹, gemessen mit einem Rotations-Viskosimeter (Gerät Rheolab QC mit Temperiersystem C-LTD80/QC der Firma Anton Paar) bei 23 °C, eingestellt.

**Tabelle 1.1b: Herstellung der Wasserbasislacke WBL A4 (nicht erfindungsgemäß) sowie WBL A5 (erfindungsgemäß)**

| | **WBL A4** | **WBL A5** |
|---|---|---|
| **Wässrige Phase:** | | |
| deionisiertes Wasser | 14,60 | 13,00 |
| 2-Ethylhexanol | 1,30 | 1,90 |
| Wässrige Bindemitteldispersion; hergestellt gemäß WO 92/15405, S. 13, Z. 13 bis S. 15, Z. 13 | 9,00 | |
| Wässrige Dispersion (wD) BM2 | | 33,00 |
| Polyester; hergestellt gemäß Seite 28, Zeilen 13 bis 33 (Beispiel BE1) WO 2014/033135 A2 | 1,00 | 3,00 |
| Polyester; hergestellt gemäß Beispiel D, Spalte 16, Z. 37-59 der DE 40 09 858 A1 | | 4,50 |
| Melaminformaldehydharz (Cymel^{®} 203 der Firma | | |
| Allnex) | 7,20 | 8,50 |
| 10%iges Dimethylethanolamin in Wasser | 0,90 | 0,40 |
| Triisobutylphosphat | 1,00 | |
| Butylglykol | | 3,00 |
| Isopar^{®} L, erhältlich von Exxon Mobile | 2,20 | 2,40 |
| Isotridecylalkohol | 1,80 | 1,90 |
| Weißpaste 1 | 22,00 | |
| Weißpaste 2 | | 21,50 |
| Schwarzpaste | 22,00 | 21,50 |
| Bariumsulfatpaste | 17,00 | |

### Herstellung der Weißpaste 1

Die Weißpaste wird aus 50 Gewichtsteilen Titan Rutil R-960-38, 11 Gewichtsteilen eines gemäß Beispiel D, Spalte 16, Z. 37-59 der DE 40 09 858 A1 hergestellten Polyesters, 16 Gewichtsteilen einer gemäß der internationalen Patentanmeldung WO 92/15405, Seite 15, Zeile 23-28 hergestellten Bindemitteldispersion, 16,5 Gewichtsteilen deionisiertes Wasser, 3 Gewichtsteilen Butylglykol, 1,5 Gewichtsteilen 10%iges Dimethylethanolamin in Wasser sowie 1,5 Gewichtsteilen Pluriol^{®} P900, erhältlich von BASF SE, hergestellt.

### Herstellung der Weißpaste 2

Die Weißpaste wird aus 50 Gewichtsteilen Titan Rutil 2310, 6 Gewichtsteilen eines gemäß Beispiel D, Spalte 16, Z. 37-59 der DE 40 09 858 A1 hergestellten Polyesters, 24,7 Gewichtsteilen einer gemäß der Patentanmeldung EP 022 8003 B2, S. 8, Z. 6 bis 18 hergestellten Bindemitteldispersion, 10,5 Gewichtsteilen deionisiertes Wasser, 4 Gewichtsteilen 2,4,7,9-Tetramethyl-5-decindiol, 52%ig in BG (erhältlich von BASF SE), 4,1 Gewichtsteilen Butylglykol, 0,4 Gewichtsteilen 10%iges Dimethylethanolamin in Wasser sowie 0,3 Gewichtsteilen Acrysol RM-8 (erhältlich von der Firma The Dow Chemical Company) hergestellt.

### Herstellung der Schwarzpaste

Die Schwarzpaste wird aus 58,9 Gewichtsteilen einer gemäß WO 92/15405, S. 13, Z. 13 bis S. 15, Z. 13 hergestellten Polyurethandispersion, 10,1 Gewichtsteilen Ruß (Color Black FW2 der Firma Orion Engineered Carbons), 5 Gewichtsteilen eines Polyesters, hergestellt gemäß Beispiel D, Spalte 16, Z. 37-59 der DE 40 09 858 A1, 7,8 Gewichtsteilen einer 10%igen wässrigen Dimethylethanolamin-Lösung, 2,2 Gewichtsteilen eines handelsüblichen Polyethers (Pluriol^{®} P900, erhältlich von BASF SE), 7,6 Gewichtsteilen Butyldiglykol und 8,4 Gewichtsteilen deionisiertem Wasser hergestellt.

### Herstellung der Bariumsulfatpaste

Die Bariumsulfatpaste wird aus 39 Gewichtsteilen einer gemäß EP 0228003 B2, S. 8, Z. 6 bis 18 hergestellten Polyurethandispersion, 54 Gewichtsteilen Bariumsulfat (Blanc fixe micro der Firma Sachtleben Chemie GmbH), 3,7 Gewichtsteilen Butyl-glykol und 0,3 Gewichtsteilen Agitan 282 (erhältlich von Münzing Chemie GmbH) und 3 Gewichtsteilen deionisiertem Wasser hergestellt.

1.2 Herstellung eines nicht erfindungsgemäßen Wasserbasislackes **WBL B1,** eines nicht erfindungsgemäßen Wasserbasislackes **WBL B2** sowie eines erfindungsgemäßen Wasserbasislackes **WBL B3**

Die in der Tabelle 1.2 unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 80±5 mPa·s bei einer Scherbelastung von 1000 s⁻¹, gemessen mit einem Rotations-Viskosimeter (Gerät Rheolab QC mit Temperiersystem C-LTD80/QC der Firma Anton Paar) bei 23 °C, eingestellt.

**Tabelle 1.2: Herstellung der Wasserbasislacke WBL B1 und WBL B2 (nicht erfindungsgemäß) sowie WBL B3 (erfindungsgemäß)**

| | **WBL B1** | **WBL B2** | **WBL B3** |
|---|---|---|---|
| **Wässrige Phase:** | | | |
| 3%ige Na-Mg-Schichtsilikatlösung | 15,70 | 15,70 | 15,70 |
| deionisiertes Wasser | 17,20 | 13,65 | 13,65 |
| Isopropanol | 1,50 | 1,50 | 1,50 |
| 2-Ethylhexanol Wässrige Bindemitteldispersion; hergestellt gemäß WO | 1,70 | 1,70 | 1,70 |
| 92/15405, S. 13, Z. 13 bis S. 15, Z. 13 | 22,25 | | |
| Daotan^{®} VTW 6464, erhältlich von Allnex | 1,50 | | |
| Mehrstufiges Acrylat, hergestellt gemäß Korea Polym. J., Vol. 7, No. 4, S. 213-222 (Wässrige Dispersion BM8) | | 29,75 | |
| Wässrige Dispersion (wD) BM2 | | | 27,30 |
| 3 Gew.-%ige wässrige Rheovis^{®} AS 1130 Lösung, Rheovis^{®} AS 1130 erhältlich von BASF SE | 4,40 | 4,40 | 4,40 |
| Melaminformaldehydharz (Cymel^{®} 1133 der Firma Allnex) | 3,10 | 3,10 | 3,10 |
| 2,4,7,9-Tetramethyl-5-decindiol, 52%ig in BG (erhältlich von BASF SE) | 1,15 | 1,15 | 1,15 |
| 10%iges Dimethylethanolamin in Wasser | 0,50 | 0,50 | 0,50 |
| BYK-347^{®} der Firma Altana/BYK-Chemie GmbH | 0,50 | 0,50 | 0,50 |
| Pluriol^{®} P900, erhältlich von BASF SE | 0,35 | 0,35 | 0,35 |
| Triisobutylphosphat | 1,00 | 1,00 | 1,00 |
| Polyurethanmodifiziertes Polyacrylat; hergestellt gemäß S. 7, Z. 55 bis S.8, Z. 23 der DE 4437535 A1 | 2,50 | 2,50 | 2,50 |
| Butylglykol | 2,20 | 2,20 | 2,20 |
| 50 Gew.-%ige Lösung von Rheovis^{®} PU1250 in Butylglykol (Rheovis^{®} PU1250 erhältlich von BASF SE) | 0,20 | 0,20 | 0,20 |
| Tinuvin^{®} 384-2, erhältlich von BASF SE | 0,55 | 0,55 | 0,55 |
| Tinuvin^{®} 123, erhältlich von BASF SE | 0,35 | 0,35 | 0,35 |
| Rotpaste | 9,00 | 9,00 | 9,00 |
| Schwarzpaste | 0,60 | 0,60 | 0,60 |
| Micapaste 1 | 4,80 | 4,80 | 4,80 |
| Micapaste 2 | 1,60 | 1,60 | 1,60 |

| **Organische Phase:** | | | |
|---|---|---|---|
| Paliocrom Orange L2804, erhältlich von BASF SE | 0,60 | 0,60 | 0,60 |
| Butylglykol | 3,00 | 3,00 | 3,00 |
| Polyester; hergestellt gemäß Beispiel D, Spalte 16, Z. 37-59 der DE 40 09 858 A1 | 3,45 | 3,45 | 3,45 |
| 10%iges Dimethylethanolamin in Wasser | 0,30 | 0,30 | 0,30 |

### Herstellung Rotpaste

Die Rotpaste wird aus 21 Gewichtsteilen Paliogen-Rot L 3885, 45 Gewichtsteilen einer gemäß WO 91/15528, S. 23, Z. 26 bis S. 25, Z. 24 hergestellten wässrigen Bindemitteldispersion, 2,5 Gewichtsprozent 1-Propoxy-2-propanol, 0,7 Gewichtsteilen 10%iges Dimethylethanolamin in Wasser und 30,8 Gewichtsteilen deionisiertem Wasser hergestellt.

### Herstellung Schwarzpaste

Die Schwarzpaste wird aus 57 Gewichtsteilen einer gemäß WO 92/15405, S. 13, Z. 13 bis S. 15, Z. 13 hergestellten Polyurethandispersion, 10 Gewichtsteilen Ruß (Ruß Monarch^{®} 1400 der Firma Cabot Corporation), 5 Gewichtsteilen eines Polyesters, hergestellt gemäß Beispiel D, Spalte 16, Z. 37-59 der DE 40 09 858 A1, 6,5 Gewichtsteilen einer 10%igen wässrigen Dimethylethanolamin-Lösung, 2,5 Gewichtsteilen eines handelsüblichen Polyethers (Pluriol^{®} P900, erhältlich von BASF SE), 7 Gewichtsteilen Butyldiglykol und 12 Gewichtsteilen deionisiertem Wasser hergestellt.

### Herstellung Micapaste 1

Die Micapaste 1 wird durch Vermischen mittels eines Rührorgans von 75 Gewichtsteilen eines Mischlacks, hergestellt nach EP 1534792 - B1, Spalte 11, Zeile 1-17, und 25 Gewichtsteilen der handelsüblichen Mica Mearlin Ext. Fine Russet 459V der Firma BASF SE erhalten.

### Herstellung Micapaste 2

Die Micapaste 2 wird durch Vermischen mittels eines Rührorgans von 75 Gewichtsteilen eines Mischlacks, hergestellt nach EP 1534792 - B1, Spalte 11, Zeile 1-17, und 25 Gewichtsteilen der handelsüblichen Mica Mearlin Ext. Super Russet 459V der Firma BASF SE erhalten.

### 1.3 Herstellung eines nicht erfindungsgemäßen Wasserbasislackes WBL B4 sowie eines erfindungsgemäßen Wasserbasislackes WBL B5

Die in der Tabelle 1.3 unter "wässrige Phase" aufgeführten Komponenten werden in der angegebenen Reihenfolge zu einer wässrigen Mischung zusammengerührt. Sodann wird 10 min lang gerührt und mit Hilfe von deionisiertem Wasser und Dimethylethanolamin auf einen pH Wert von 8 und eine Spritzviskosität von 95±5 mPa·s bei einer Scherbelastung von 1000 s⁻¹, gemessen mit einem Rotations-Viskosimeter (Gerät Rheolab QC mit Temperiersystem C-LTD80/QC der Firma Anton Paar) bei 23 °C, eingestellt.

**Tabelle 1.3: Herstellung der Wasserbasislacke WBL B4 (nicht erfindungsgemäß) sowie WBL B5 (erfindungsgemäß)**

| | **WBL B4** | **WBL BS** |
|---|---|---|
| **Wässrige Phase:** | | |
| 3%ige Na-Mg-Schichtsilikatlösung | 4,20 | 4,20 |
| deionisiertes Wasser | 6,36 | 6,36 |
| Butylglykol | 4,00 | 4,00 |
| 2-Ethylhexanol | 3,55 | 3,55 |
| Wässrige Bindemitteldispersion; hergestellt gemäß WO | | |
| 92/15405, S. 13, Z. 13 bis S. 15, Z. 13 | 15,50 | |
| Daotan^{®} VTW 6462, erhältlich von Allnex | 7,00 | |
| Wässrige Dispersion (wD) BM2 | | 29,65 |
| Polyester; hergestellt gemäß Beispiel D, Spalte 16, Z. 37-59 der | | |
| DE 40 09 858 A1 | 1,00 | 1,00 |
| deionisiertes Wasser | 4,20 | 4,20 |
| 30 Gew.-%ige wässrige Rheovis^{®} AS 1130 Lösung, erhältlich von | | |
| BASF SE | 0,42 | 0,42 |
| Melaminformaldehydharz (Cymel^{®} 203 der Firma Allnex) | 7,70 | 7,80 |
| 2,4,7,9-Tetramethyl-5-decindiol, 52%ig in BG (erhältlich von BASF SE) | 1,80 | 1,80 |
| 10%iges Dimethylethanolamin in Wasser | 0,68 | 0,68 |
| Pluriol^{®} P900, erhältlich von BASF SE | 0,10 | 0,10 |
| Triisobutylphosphat | 2,50 | 2,50 |
| Polyurethanmodifiziertes Polyacrylat; hergestellt gemäß S. 7, Z. 55 bis S.8, Z. 23 der DE 4437535 A1 | 3,60 | |
| Weißpaste | 35,00 | 35,00 |
| Gelbpaste | 0,12 | 0,12 |
| Schwarzpaste | 0,11 | 0,11 |
| Steatitpaste | 2,40 | 2,40 |

### Herstellung Weißpaste

Die Weißpaste wird aus 50 Gewichtsteilen Titan Rutil R-960-38, 11 Gewichtsteilen eines gemäß Beispiel D, Spalte 16, Z. 37-59 der DE 40 09 858 A1 hergestellten Polyesters, 16 Gewichtsteilen einer gemäß der internationalen Patentanmeldung WO 92/15405, Seite 15, Zeile 23-28 hergestellten Bindemitteldispersion, 16,5 Gewichtsteilen deionisiertes Wasser, 3 Gewichtsteilen Butylglykol, 1,5 Gewichtsteilen 10%iges Dimethylethanolamin in Wasser sowie 1,5 Gewichtsteilen Pluriol^{®} P900, erhältlich von BASF SE, hergestellt.

### Herstellung Gelbpaste

Die Gelbpaste wird aus 47 Gewichtsteilen Sicotan-Gelb L 1912, 45 Gewichtsteilen einer gemäß WO 91/15528, S. 23, Z. 26 bis S. 25, Z. 24 hergestellten wässrigen Bindemitteldispersion, 2,7 Gewichtsprozent 1-Propoxy-2-propanol, 2,8 Gewichtsteilen deionisiertem Wasser, 1,5 Gewichtsteilen Disperbyk^{®}-184 (erhältlich von BYK-Chemie GmbH) und 1 Gewichtsteil Aerosil R 972 (erhältlich von der Firma Evonik Industries) hergestellt.

### Herstellung Schwarzpaste

Die Schwarzpaste wird aus 40 Gewichtsteilen Bayferrox 318 M (erhältlich von der Firma Lanxess), 39 Gewichtsteilen einer gemäß WO 91/15528, S. 23, Z. 26 bis S. 25, Z. 24 hergestellten wässrigen Bindemitteldispersion, 2,0 Gewichtsprozent 1-Propoxy-2-propanol, 11,1 Gewichtsteilen deionisiertem Wasser, 0,5 Gewichtsteilen Agitan 282 (erhältlich von Münzing Chemie GmbH), 4,4 Gewichtsteilen Pluriol^{®} P900 (erhältlich von BASF SE) und 3 Gewichtsteilen 10%iges Dimethylethanolamin in Wasser hergestellt.

### Herstellung Steatitpaste

Die Steatitpaste wird aus 49,7 Gewichtsteilen einer gemäß WO 91/15528, S. 23, Z. 26 bis S. 25, Z. 24 hergestellten wässrigen Bindemitteldispersion, 28,9 Gewichtsteile Steatit (Microtalc IT extra der Firma Mondo Minerals B.V.), 0,4 Gewichtsteilen Agitan 282 (erhältlich von Münzing Chemie GmbH), 1,45 Gewichtsteilen Disperbyk^{®}-184 (erhältlich von BYK-Chemie GmbH), 3,1 Gewichtsteilen eines handelsüblichen Polyethers (Pluriol^{®} P900, erhältlich von BASF SE) und 16,45 Gewichtsteilen deionisiertem Wasser hergestellt.

### 1.4 Herstellung der nicht erfindungsgemäßen Wasserbasislacke WBL B6 und WBL B8 sowie der erfindungsgemäßen Wasserbasislacke WBL B7 und WBL B9

Die in der Tabelle 1.4 unter "wässrige Phase" aufgeführten Komponenten werden in der angegebenen Reihenfolge zu einer wässrigen Mischung zusammengerührt. Sodann wird 10 min lang gerührt und mit Hilfe von deionisiertem Wasser und Dimethylethanolamin auf einen pH Wert von 8 und eine Spritzviskosität von 120±10 mPa·s **(WBL B6** und **WBL B8)** bzw. 110±10 mPa·s **(WBL B7** und **WBL B9)** bei einer Scherbelastung von 1000 s⁻¹, gemessen mit einem Rotations-Viskosimeter (Gerät Rheolab QC mit Temperiersystem C-LTD80/QC der Firma Anton Paar) bei 23 °C, eingestellt.

**Tabelle 1.4: Herstellung der Wasserbasislacke WBL B6 und WBL B8 (nicht erfindungsgemäß) sowie WBL B7 und WBL B9 (erfindungsgemäß)**

| | **WBL B6** | **WBL B7** | **WBL B8** | **WBL B9** |
|---|---|---|---|---|
| **Wässrige Phase:** | | | | |
| 3%ige Na-Mg-Schichtsilikatlösung | 13,71 | 13,71 | 13,54 | 13,54 |
| deionisiertes Wasser | 14,37 | 10,15 | 12,93 | 8,03 |
| 2-Ethylhexanol | 1,40 | 1,40 | 1,54 | 1,54 |
| Wässrige Bindemitteldispersion; hergestellt | | | | |
| gemäß WO 92/15405, S. 13, Z. 13 bis S. 15, Z. | | | | |
| 13 | 33,80 | | 39,14 | |
| Wässrige Dispersion (wD) BM2 | | 38,02 | | 44,04 |
| Polyester; hergestellt gemäß Beispiel D, Spalte | | | | |
| 16, Z. 37-59 der DE 40 09 858 A1 | 4,45 | 4,45 | 4,40 | 4,40 |
| Melaminformaldehydharz (Cymel^{®} 3020 der | | | | |
| Firma Allnex) | 4,10 | 4,10 | | |
| Melaminformaldehydharz (Cymel^{®} 303 der | | | | |
| Firma Allnex) | | | 3,96 | 3,96 |
| 10%iges Dimethylethanolamin in Wasser | 1,22 | 1,22 | 1,21 | 1,21 |
| 2,4,7,9-Tetramethyl-5-decindiol, 52%ig in BG | | | | |
| (erhältlich von BASF SE) | 1,14 | 1,14 | 0,63 | 0,63 |
| Pluriol^{®} P900, erhältlich von BASF SE | 1,14 | 1,14 | 1,26 | 1,26 |
| Triisobutylphosphat | 0,50 | 0,50 | 0,55 | 0,55 |
| NACURE 2500, erhältlich von King Industries, | | | | |
| Inc | 0,66 | 0,66 | 0,72 | 0,72 |
| Polyurethanmodifiziertes Polyacrylat; | | | | |
| hergestellt gemäß S. 7, Z. 55 bis S.8, Z. 23 der | | | | |
| DE 4437535 A1 | 3,70 | 3,70 | | |
| Butylglykol | 5,24 | 5,24 | 5,18 | 5,18 |
| 50 Gew.-%ige Lösung von Rheovis^{®} PU1250 in | | | | |
| Butylglykol (Rheovis^{®} PU1250 erhältlich von | | | | |
| BASF SE) | 0,57 | 0,57 | 0,63 | 0,63 |
| Schwarzpaste | 14,00 | 14,00 | 14,31 | 14,31 |

### Herstellung Schwarzpaste

Die Schwarzpaste wird aus 57 Gewichtsteilen einer gemäß WO 92/15405, S. 13, Z. 13 bis S. 15, Z. 13 hergestellten Polyurethandispersion, 10 Gewichtsteilen Ruß (Ruß Monarch^{®} 1400 der Firma Cabot Corporation), 5 Gewichtsteilen eines Polyesters, hergestellt gemäß Beispiel D, Spalte 16, Z. 37-59 der DE 40 09 858 A1, 6,5 Gewichtsteilen einer 10%igen wässrigen Dimethylethanolamin-Lösung, 2,5 Gewichtsteilen eines handelsüblichen Polyethers (Pluriol^{®} P900, erhältlich von BASF SE), 7 Gewichtsteilen Butyldiglykol und 12 Gewichtsteilen deionisiertem Wasser hergestellt.

### 1.5 Herstellung der nicht erfindungsgemäßen Wasserbasislacke WBL B10 und WBL B12 sowie der erfindungsgemäßen Wasserbasislacke WBL B11 und WBL B13

Die in der Tabelle 1.5 unter "wässrige Phase" aufgeführten Komponenten werden in der angegebenen Reihenfolge zu einer wässrigen Mischung zusammengerührt. Sodann wird 10 min lang gerührt und mit Hilfe von deionisiertem Wasser und Dimethylethanolamin auf einen pH Wert von 8 und eine Spritzviskosität von 115±5 mPa·s **(WBL B10** und **WBL B12)** bzw. 90±5 mPa·s **(WBL B11** und **WBL B13)** bei einer Scherbelastung von 1000 s⁻¹, gemessen mit einem Rotations-Viskosimeter (Gerät Rheolab QC mit Temperiersystem C-LTD80/QC der Firma Anton Paar) bei 23 °C, eingestellt.

**Tabelle 1.5: Herstellung der Wasserbasislacke WBL B10 und WBL B12 (nicht erfindungsgemäß) sowie WBL B11 und WBL B13 (erfindungsgemäß)**

| | **WBL B10** | **WBL B11** | **WBL B12** | **WBL B13** |
|---|---|---|---|---|
| **Wässrige Phase:** | | | | |
| 3%ige Na-Mg-Schichtsilikatlösung | 13,10 | 13,10 | 11,790 | 11,790 |
| deionisiertes Wasser | 9,49 | 10,53 | 12,96 | 8,39 |
| n-Propanol | 0,87 | 0,87 | 0,79 | 0,79 |
| n-Butoxipropanol | 1,38 | 1,38 | 1,24 | 1,24 |
| 2-Ethylhexanol | 2,77 | 2,77 | 2,49 | 2,49 |
| Wässrige Bindemitteldispersion; hergestellt | | | | |
| gemäß WO 92/15405, S. 13, Z. 13 bis S. 15, Z. | | | | |
| 13 | 36,28 | | 36,44 | |
| Wässrige Dispersion (wD) BM2 | | 35,24 | | 41,00 |
| Polyester; hergestellt gemäß Beispiel D, Spalte | | | | |
| 16, Z. 37-59 der DE 40 09 858 A1 | 2,95 | 2,95 | 2,66 | 2,66 |
| Melaminformaldehydharz (Resimene^{®} HM | | | | |
| 2608 der Firma Ineos) | 4,10 | 4,10 | | |
| | | | 3,70 | 3,70 |
| 10%iges Dimethylethanolamin in Wasser | 0,30 | 0,30 | 0,27 | 0,27 |
| 2,4,7,9-Tetramethyl-5-decindiol, 52%ig in BG | | | | |
| (erhältlich von BASF SE) | 1,38 | 1,38 | 1,25 | 1,25 |
| BYK-346, erhältlich von Altana/BYK-Chemie | | | | |
| GmbH | 0,46 | 0,46 | 0,41 | 0,41 |
| Polyurethanmodifiziertes Polyacrylat; | | | | |
| hergestellt gemäß S. 7, Z. 55 bis S.8, Z. 23 der | | | | |
| DE 4437535 A1 | 2,77 | 2,77 | | |
| Isopropanol | 1,64 | 1,64 | 1,48 | 1,48 |
| Butylglykol | 1,00 | 1,00 | 0,90 | 0,90 |
| Isopar^{®} L, erhältlich von Exxon Mobile | 0,87 | 0,87 | 0,79 | 0,79 |
| NACURE 2500, erhältlich von King Industries, | | | | |
| Inc | 0,42 | 0,42 | 0,38 | 0,38 |
| Schwarzpaste | 12,99 | 12,99 | 12,60 | 12,60 |
| Blaupaste | 0,78 | 0,78 | | |
| Bariumsulfatpaste | 3,21 | 3,21 | 2,88 | 2,88 |
| Steatitpaste | 3,25 | 3,25 | 2,93 | 2,93 |

### Herstellung Schwarzpaste

Die Schwarzpaste wird aus 57 Gewichtsteilen einer gemäß WO 92/15405, S. 13, Z. 13 bis S. 15, Z. 13 hergestellten Polyurethandispersion, 10 Gewichtsteilen Ruß (Ruß Monarch^{®} 1400 der Firma Cabot Corporation), 5 Gewichtsteilen eines Polyesters, hergestellt gemäß Beispiel D, Spalte 16, Z. 37-59 der DE 40 09 858 A1, 6,5 Gewichtsteilen einer 10%igen wässrigen Dimethylethanolamin-Lösung, 2,5 Gewichtsteilen eines handelsüblichen Polyethers (Pluriol^{®} P900, erhältlich von BASF SE), 7 Gewichtsteilen Butyldiglykol und 12 Gewichtsteilen deionisiertem Wasser hergestellt.

### Herstellung Blaupaste

Die Blaupaste wurde aus 69.8 Gewichtsteilen einer gemäß WO 92/15405, S. 13, Z. 13 bis S. 15, Z. 13 hergestellten Polyurethandispersion, 12,5 Gewichtsteilen Paliogen^{®} Blau L 6482 (erhältlich von BASF SE), 1,5 Gewichtsteilen einer 10%igen wässrigen Dimethylethanolamin-Lösung, 1,2 Gewichtsteilen eines handelsüblichen Polyethers (Pluriol^{®} P900, erhältlich von BASF SE) und 15 Gewichtsteilen deionisiertem Wasser hergestellt.

### Herstellung Bariumsulfatpaste

Die Bariumsulfatpaste wird aus 39 Gewichtsteilen einer gemäß EP 0228003 B2, S. 8, Z. 6 bis 18 hergestellten Polyurethandispersion, 54 Gewichtsteilen Bariumsulfat (Blanc fixe micro der Firma Sachtleben Chemie GmbH), 3,7 Gewichtsteilen Butyl-glykol und 0,3 Gewichtsteilen Agitan 282 (erhältlich von Münzing Chemie GmbH) und 3 Gewichtsteilen deionisiertem Wasser hergestellt.

### Herstellung Steatitpaste

Die Steatitpaste wird aus 49,7 Gewichtsteilen einer gemäß WO 91/15528, S. 23, Z. 26 bis S. 25, Z. 24 hergestellten wässrigen Bindemitteldispersion, 28,9 Gewichtsteile Steatit (Microtalc IT extra der Firma Mondo Minerals B.V.), 0,4 Gewichtsteilen Agitan 282 (erhältlich von Münzing Chemie GmbH), 1,45 Gewichtsteilen Disperbyk^{®}-184 (erhältlich von BYK-Chemie GmbH), 3,1 Gewichtsteilen eines handelsüblichen Polyethers (Pluriol^{®} P900, erhältlich von BASF SE) und 16,45 Gewichtsteilen deionisiertem Wasser hergestellt.

### Vergleich der Wasserbasislacke WBL A2 und WBL A3

Die zur Einstellung der Spritzviskosität für die Wasserbasislacke **WBL A2** und **WBL A3** benötigte Menge deionisiertes Wasser und der sich daraus ergebende Festkörpergehalt der jeweiligen Formulierung sind in Tabelle 1.6 zusammengefasst.

**Tabelle 1.6: Menge Wasser zur Einstellung der Spritzviskosität sowie resultierender Festkörper der Basislacke WBL A2 und WBL A3**

| | **WBL A2** | **WBL,A3** |
|---|---|---|
| **Zugabe Wasser [Gew.-Teile] zum Einstellen der Spritzviskosität** | 85,00 | 2,75 |
| | | |
| **Spritzviskosität [mPa·s], gemessen bei 1291/s** | 90 | 90 |
| | | |
| **Festkörpergehalt [%]** | 19,1 | 32,6 |

Die Ergebnisse belegen, dass der Einsatz des zum Vergleich eingesetzten mehrstufigen Acrylats in Basislacken aufgrund der hohen Menge an deionisiertem Wasser, die zur Einstellung der Spritzviskosität benötigt werden, zu einem Festkörpergehalt führt, welcher deutlich unter dem des erfindungsgemäßen Wasserbasislacks **WBL A3** liegt.

Eine Beurteilung der Läufer- und Kochergrenze für die Wasserbasislacke **WBL A2** und **WBL A3** erfolgte gemäß vorstehend beschriebener Methoden. Dabei zeigte sich, dass bei Einsatz eines erfindungsgemäß einzusetzenden Basislacks eine signifikant höhere Kocher- und Läufergrenze resultiert. (siehe Tabelle 1.7).

**Tabelle 1.7: Kocher- und Läufergrenze der Basislacke WBL A2 und WBL A3**

| | **WBL A2** | **WBL A3** |
|---|---|---|
| **Läufergrenze [µm]** | 6 µm | >50 µm |
| | | |
| **Kochergrenze** | 9 µm | >40 µm |

### Vergleich zwischen den Wasserbasislacken WBL B1 und WBL B2 sowie dem Wasserbasislack WBL B3

Die zur Einstellung der Spritzviskosität für die Wasserbasislacke **WBL B1, WBL B2** und **WBL B3** benötigte Menge deionisiertes Wasser und der sich daraus ergebende Festkörpergehalt der jeweiligen Formulierung sind in Tabelle 1.8 zusammengefasst.

**Tabelle 1.8: Menge Wasser zur Einstellung der Spritzviskosität sowie resultierender Festkörper der Basislacke WBL B1, WBL B2 und WBL B3**

| | **WBL B1** | **WBL B2** | **WBL B3** |
|---|---|---|---|
| **Zugabe Wasser [%] zum Einstellen der Spritzviskosität** | 0 | 70 | 0 |
| | | | |
| **Spritzviskosität [mPa·s], gemessen bei 1000 1/s** | 76 | 83 | 77 |
| | | | |
| **Festkörpergehalt [%]** | 21,9 | 13,1 | 21,2 |

Die Beurteilung der Nadelstichsensitivität erfolgte gemäß der vorstehend beschriebenen Methode. Die Ergebnisse sind in Tabelle 1.9 zusammengefasst.

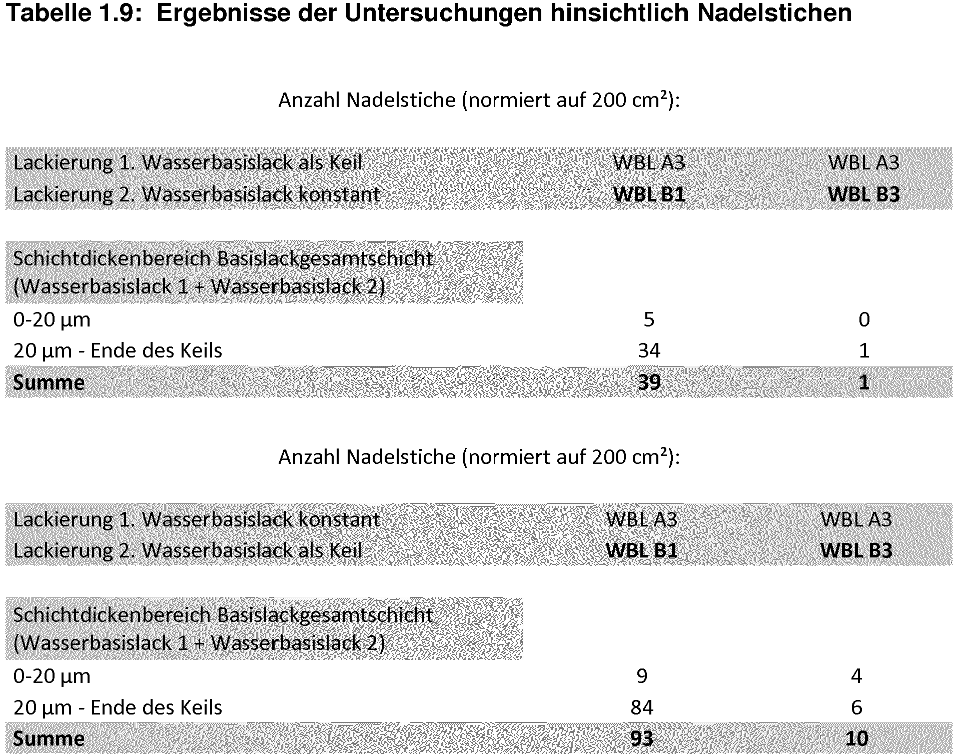

Die Ergebnisse aus Tabelle 1.8 belegen, dass bei Einsatz des zum Vergleich eingesetzten mehrstufigen Acrylats **(WBL B2)** in Basislacken aufgrund der hohen Menge deionisiertem Wasser, die zur Einstellung der Spritzviskosität benötigt werden, zu einem Festkörpergehalt führt, welcher für die Anwendung in mehrschichtigen modernen Lackaufbauten, wie sie in der Automobilindustrie eingesetzt werden, nicht mehr akzeptabel ist. Es wurde versucht, die benötigte Menge Wasser zur Einstellung Spritzviskosität (das heißt circa 80 mPas bei 1000 1/s) durch deutliche Verringerung des Verdickeranteils (der 3%ige Na-Mg-Schichtsilikatlösung) zu verringern und dadurch den Festkörper zu erhöhen. Hierdurch ergab sich aber, dass der Lack nach der Applikation und dann gegebenen Niedrigscher-Bedingungen eine viel zu niedrige Viskosität aufwies und somit zu massiven Läufern führte.

Die Ergebnisse aus Tabelle 1.8 und 1.9 zeigen, dass der vergleichende Basislack **WBL B1** zwar auch ohne Wasserzusatz eine annehmbare Spritzviskosität aufweist, jedoch hinsichtlich des Nadelstichverhaltens bei hohen Schichtdicken deutliche Mängel aufweist. Insbesondere bei Einsatz von erfindungsgemäß einzusetzenden Wasserbasislacken zur Herstellung aller vorhandenen Basislackschichten besteht eine qualitativ enorm hochwertige Nadelstichrobustheit auch bei hohen Schichtdicken.

### Vergleich zwischen Wasserbasislack WBL B4 sowie WBL B5

Die Untersuchungen an den Wasserbasislacken **WBL B4** sowie **WBL B5** erfolgten gemäß der vorstehend beschriebenen Methode "Schichtdickenabhängiger Verlauf, Variante B".

**Tabelle 1.10: Ergebnisse der Untersuchungen hinsichtlich des schichtdickenabhängigen Verlaufs**

| | Lackierung 1. Wasserbasislack konstant | WBL A3 | WBL A3 |
|---|---|---|---|
| | Lackierung 2. Wasserbasislack als Keil | **WBL B4** | **WBL B5** |
| | | | |

| **Kennwert Appearance** | **Schichtdickenbereich 2.** | | |
|---|---|---|---|
| | **Wasserbasislack** | | |
| SW | 15-20 µm | 30,7 | 28,9 |
| | 20-25 µm | 33,9 | 31,1 |
| | | | |
| LW | 15-20 µm | 11,0 | 11,6 |
| | 20-25 µm | 10,9 | 11,7 |
| | | | |
| DOI | 15-20 µm | 71,4 | 75,3 |
| | 20-25 µm | 70,0 | 73,1 |

Die Ergebnisse zeigen, dass insbesondere bei Einsatz von erfindungsgemäß einzusetzenden Wasserbasislacken zur Herstellung aller vorhandenen Basislackschichten die Mehrschichtlackierung insbesondere hinsichtlich short wave und DOI qualitativ extrem hochwertig ist.

### Vergleich zwischen den Wasserbasislacken WBL B6 und WBL B8 sowie den Wasserbasislacken WBL B7 und WBL B9

Die Untersuchungen an den Wasserbasislacken **WBL B6** und **WBL B8** sowie **WBL B7** und **WBL B9** erfolgen gemäß der vorstehend beschriebenen Methoden "Nadelstiche, Variante A und B", "Läufer" sowie "Schichtdickenabhängiger Verlauf, Variante A und B".

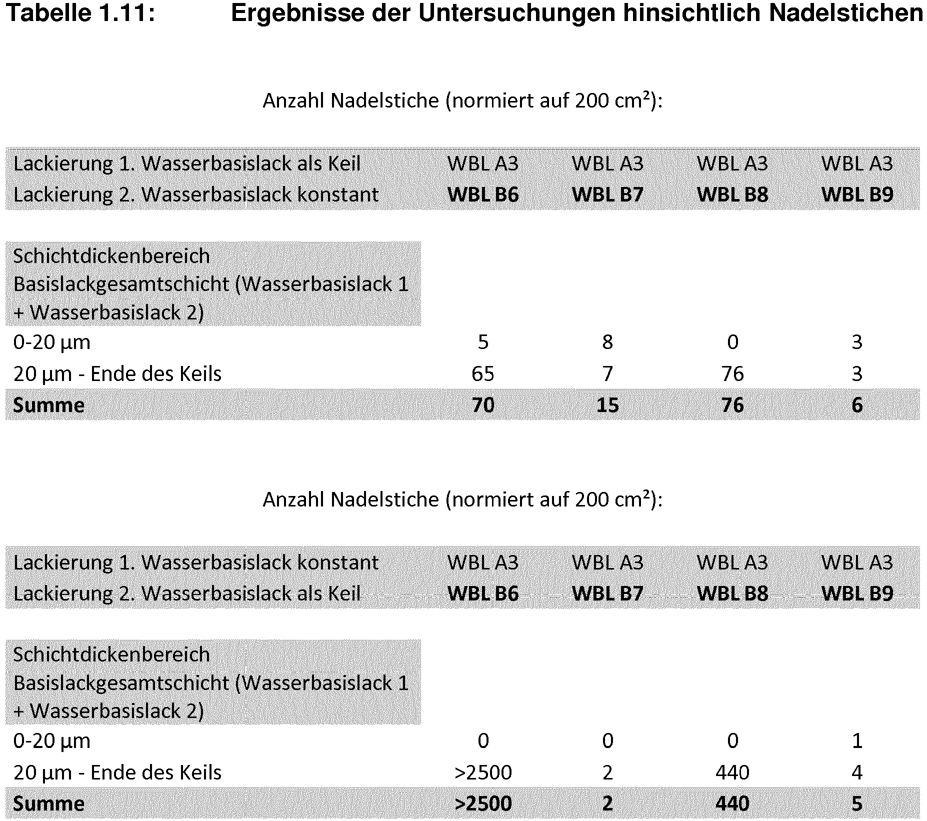

Alle hergestellten Mehrschichtlackierungen wiesen im niedrigen Bereich der Gesamtschichtdicke aller vorhandenen Basislackschichten eine gute Nadelstichrobustheit auf. Die besonders bevorzugten Systeme, in denen jeder eingesetzte Basislack eine erfindungsgemäße Dispersion enthält, weisen auch bei sehr hohen Gesamtschichtdicken eine entsprechend gute Nadelstichrobustheit auf.

**Tabelle 1.12: Ergebnisse der Untersuchungen hinsichtlich Läuferstabilität**

| | **WBL B6** | **WBL B7** | **WBL B8** | **WBL B9** |
|---|---|---|---|---|
| Läufergrenze (> 0 mm): | 11 µm | 15 µm | 17 µm | > 30 µm |
| Läufergrenze (> 10 mm): | 23 µm | 32 µm | 31 µm | > 50 µm |

Die erfindungsgemäß einzusetzenden Wasserbasislacke **(WBL B7** und **WBL B9)** weisen im Vergleich zu den jeweiligen nicht erfindungsgemäßen Referenzen **(WBL B6** als Referenz für **WBL B7** und **WBL B8** als Referenz für **WBL B9)** eine geringere Läuferneigung auf.

**Tabelle 1.13: Ergebnisse der Untersuchungen hinsichtlich schichtdickenabhängigem Verlauf**

| | Lackierung 1. Wasserbasislack konstant | WBL A3 | WBL A3 |
|---|---|---|---|
| | Lackierung 2. Wasserbasislack als Keil | **WBL B6** | **WBL B7** |
| | | | |

| **Kennwert Appearance** | **Schichtdickenbereicht 2. Basislack** | | |
|---|---|---|---|
| SW | 10 µm -15 µm | 17,0 | 10,6 |
| | 15 µm - 20 µm | 17,4 | 13,0 |
| | 20 µm - 25 µm | 17,7 | 14,1 |
| | 25 µm - 30 µm | 23,8 | 17,5 |
| | 30 µm - 35 µm | 28,2 | 19,0 |
| | | | |
| LW | 10 µm -15 µm | 8,5 | 10,3 |
| | 15 µm - 20 µm | 7,2 | 11,2 |
| | 20 µm - 25 µm | 6,1 | 11,9 |
| | 25 µm - 30 µm | 16,4 | 11,4 |
| | 30 µm - 35 µm | 34,9 | 11,2 |
| DOI | 10 µm -15 µm | 90,5 | 96,0 |
| | 15 µm - 20 µm | 90,9 | 95,4 |
| | 20 µm - 25 µm | 90,7 | 94,8 |
| | 25 µm - 30 µm | 84,1 | 93,2 |
| | 30 µm - 35 µm | 71,1 | 92,5 |

Gegenüber dem **WBL A3/WBL B6** System werden für das **WBL A3/WBL B7** System Vorteile hinsichtlich short wave (SW) und long wave (LW) im höheren Schichtdickenbereich gefunden. Dabei zeigt sich für den LW, der für den Keil des Wasserbasislackes **WBL B7** gemessen wird, dass dieser im Vergleich zum Wasserbasislack **WBL B6** nahezu unabhängig von der Schichtdicke ist, während der LW bei **WBL B6** mit steigender Schichtdicke drastisch ansteigt. Der Einsatz des **WBL A3/WBL B7** Systems bewirkt gegenüber dem **WBL A3/WBL B6** System des Weiteren eine Verbesserung der Abbildungsschärfe (DOI); das entsprechende besonders bevorzugte System zeigt mit steigender Schichtdicke des 2. Wasserbasislackes eine signifikant geringere Abnahme des DOI-Wertes.

### Vergleich zwischen den Wasserbasislacken WBL B10 und WBL B12 sowie den Wasserbasislacken WBL B11 und WBL B13

Die Untersuchungen an den Wasserbasislacken **WBL B10** und **WBL B12** sowie **WBL B11** und **WBL B13** erfolgen gemäß der vorstehend beschriebenen Methoden "Nadelstiche, Variante A und B" sowie "Schichtdickenabhängiger Verlauf, Variante A und B".

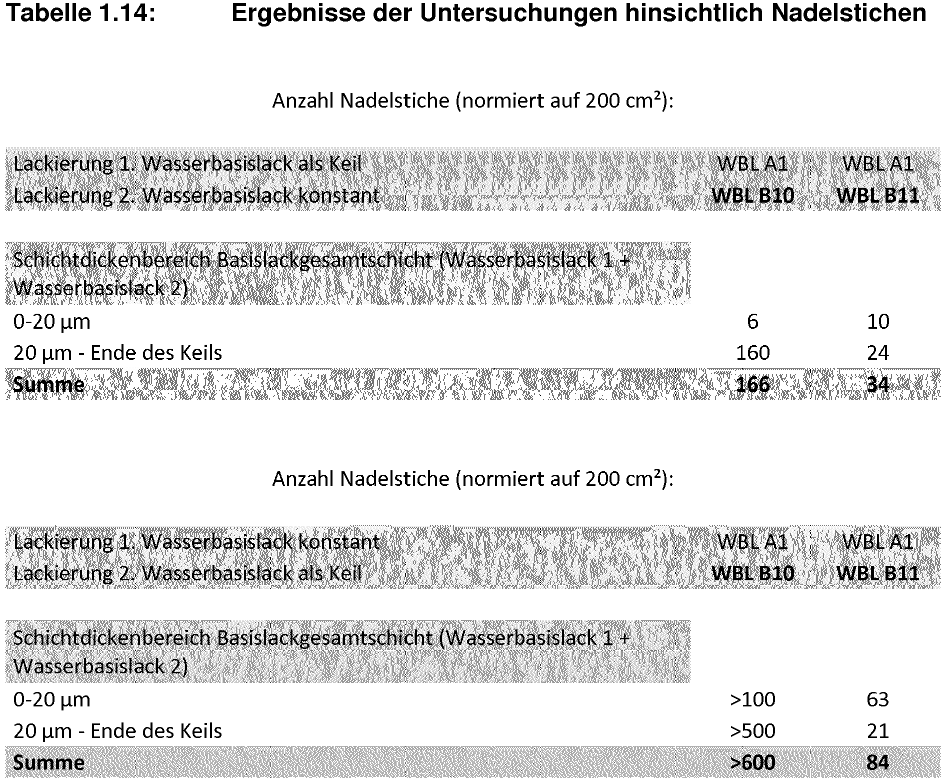

Die Ergebnisse zeigen, dass das erfindungsgemäße System hinsichtlich der Nadelstichstabilität deutliche Vorteile aufweist, insbesondere im Bereich hoher Schichtdicken.

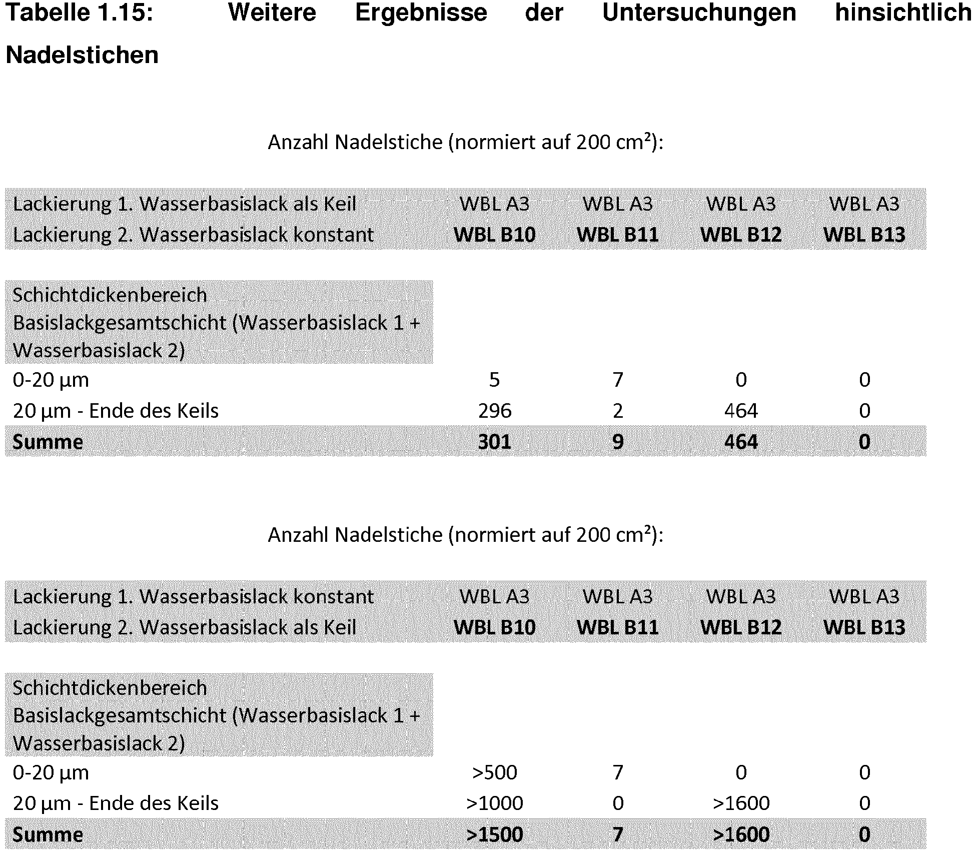

Die meisten hergestellten Mehrschichtlackierungen weisen im niedrigen Bereich der Gesamtschichtdicke aller vorhandenen Basislackschichten eine gute Nadelstichrobustheit auf. Die besonders bevorzugten Systeme, in denen jeder eingesetzte Basislack eine erfindungsgemäße Dispersion enthält, weisen auch bei sehr hohen Gesamtschichtdicken eine entsprechend gute Nadelstichrobustheit auf.

**Tabelle 1.16: Ergebnisse der Untersuchungen hinsichtlich schichtdickenabhängigem Verlauf**

| | Lackierung 1. Wasserbasislack als Keil | WBL A3 | WBL A3 | WBL A3 | WBL A3 |
|---|---|---|---|---|---|
| | Lackierung 2. Wasserbasislack konstant | **WBL B10** | **WBL B11** | **WBL B12** | **WBL B13** |
| | | | | | |

| **Kennwert Appearance** | **Schichtdickenbereicht 2. Basislack** | **WBL B10** | **WBL B11** | **WBL B12** | **WBL B13** |
|---|---|---|---|---|---|
| SW | 5 µm - 10 µm | 19,6 | 18,0 | 19,3 | 17,2 |
| | 10 µm - 15 µm | 24,1 | 15,9 | 20,8 | 17,4 |
| | 15 µm - 20 µm | 29,3 | 16,2 | 23,2 | 18,2 |
| | 20 µm - 25 µm | 34,1 | 18,0 | 25,9 | 19,7 |
| | 25 µm - 30 µm | 35,1 | 20,9 | 27,8 | 20,9 |
| | | | | | |
| LW | 5 µm - 10 µm | 4,2 | 4,9 | 7,6 | 12,6 |
| | 10 µm - 15 µm | 4,6 | 4,5 | 8,3 | 11,1 |
| | 15 µm - 20 µm | 5,6 | 4,7 | 9,3 | 11,2 |
| | 20 µm - 25 µm | 10,4 | 5,1 | 10,3 | 10,2 |
| | 25 µm - 30 µm | 12,3 | 5,3 | 14,1 | 9,2 |
| | | | | | |
| DOI | 5 µm - 10 µm | 90,9 | 93,0 | 92,3 | 92,8 |
| | 10 µm - 15 µm | 84,6 | 93,0 | 87,9 | 92,9 |
| | 15 µm - 20 µm | 78,6 | 91,6 | 86,8 | 92,5 |
| | 20 µm - 25 µm | 72,2 | 89,6 | 84,3 | 91,7 |
| | 25 µm - 30 µm | 70,5 | 87,2 | 81,5 | 91,3 |

Die Ergebnisse untermauern wiederum, dass die besonders bevorzugten Systeme, in denen alle eingesetzten Basislacke eine wässrige Dispersion (wD) enthalten, Vorteile haben. Während alle erfindungsgemäßen Mehrschichtlackierungen gute Werte im niedrigeren Schichtdickenbereich aufweisen, sind die Vorteile der besonders bevorzugten Systeme bei short wave (SW) sowie beim long wave (LW) oder der Abbildungsschärfe (DOI) insbesondere bei höheren Schichtdicken zu erkennen.

### Vergleich zwischen dem Wasserbasislack WBL A4 sowie dem Wasserbasislack WBL A5

Die Untersuchungen an den Wasserbasislacken **WBL A4** und **WBL A5,** jeweils in Kombination mit dem Wasserbasislack **WBL B4,** erfolgen gemäß der vorstehend beschriebenen Methode "schichtdickenunabhängiger Verlauf"

**Tabelle 1.17: Ergebnisse der Untersuchungen hinsichtlich schichtdickenunabhängigem Verlauf**

| Lackierung 1. Wasserbasislack | WBL A4 | WBL A5 |
|---|---|---|
| Lackierung 2. Wasserbasislack | **WBL B4** | **WBL B4** |
| | | |
| SW | 28,0 | 22,0 |
| | | |
| LW | 5,0 | 4,7 |
| | | |
| DOI | 88,6 | 92,8 |

Die Ergebnisse untermauern wiederum, dass die erfindungsgemäßen Systeme, in denen mindestens ein eingesetzter Basislack eine wässrige Dispersion (wD) enthält, Vorteile haben. Alle erfindungsgemäßen Mehrschichtlackierungen haben bei short wave (SW) sowie beim long wave (LW) und auch der Abbildungsschärfe (DOI) klare Vorteile.

### Vergleich zwischen dem Wasserbasislack WBL B10 sowie dem Wasserbasislack WBL B11

Die Untersuchungen an den Wasserbasislacken **WBL B10** und **WBL B11** erfolgen gemäß den vorstehend beschriebenen Methoden "Haftungseigenschaften nach Schwitzwasser", "Läufer" sowie "schichtdickenabhängigem Verlauf (Variante C)".

**Tabelle 1.18: Haftung nach Schwitzwasserlagerung**

| | Wasserbasislack | |
|---|---|---|
| | **WBL B10** | **WBL B11** |
| **Haftung nach Schwitzwasserlagerung** | | |
| Gitterschnitt | 0,5 | 0,5 |
| Dampfstrahl | 1 | 1 |
| Steinschlag | 2 | 1,5 |

Der Wasserbasislack **WBL B11** ist bezüglich Gitterschnitt und Dampfstrahl vergleichbar zur Referenz **WBL B10,** zeigt jedoch Vorteile hinsichtlich Steinschlag.

**Tabelle 1.19: Läuferverhalten**

| | Wasserbasislack | |
|---|---|---|
| | **WBL B10** | **WBL B11** |
| **Läufer** | | |
| Läufer Start | 10 µm | >30 µm |
| Läufer 10 mm | 28 µm | >30 µm |

Die Ergebnisse belegen, dass die erfindungsgemäßen Systeme, in denen der eingesetzte Basislack eine wässrige Dispersion (wD) enthält **(WBL B11),** Vorteile hinsichtlich des Läuferverhaltens aufweisen. Bei Einsatz des **WBL B11** sind auch bei der maximalen Schichtdicke noch keine Tendenzen zur Ausbildung von Läufern festzustellen.

**Tabelle 1.20: Ergebnisse der Untersuchungen hinsichtlich schichtdickenabhängigem Verlauf**

| | | Wasserbasislack | |
|---|---|---|---|
| **Kennwert Appearance** | **Schichtdickenbereich Basislack** | **WBL B10** | **WBL B11** |
| SW | 10 µm -15 µm | 13,2 | 12,8 |
| | 15 µm - 20 µm | 15,0 | 12,9 |
| | 20 µm - 25 µm | 15,7 | 12,1 |
| | 25 µm - 30 µm | 15,8 | 12,0 |
| | | | |
| LW | 10 µm -15 µm | 3,6 | 2,7 |
| | 15 µm - 20 µm | 3,0 | 2,4 |
| | 20 µm - 25 µm | 2,7 | 2,6 |
| | 25 µm - 30 µm | 2,9 | 2,7 |
| | | | |
| DOI | 10 µm -15 µm | 93,3 | 94,4 |
| | 15 µm - 20 µm | 93,0 | 94,4 |
| | 20 µm - 25 µm | 92,7 | 94,7 |
| | 25 µm - 30 µm | 92,2 | 94,8 |

Die Ergebnisse untermauern wiederum, dass die erfindungsgemäßen Systeme, in denen der eingesetzte Basislack eine wässrige Dispersion (wD) enthält, Vorteile haben. Die erfindungsgemäße Mehrschichtlackierung hat bei short wave (SW) sowie beim long wave (LW) und auch der Abbildungsschärfe (DOI) deutliche Vorteile.

### Kurzbeschreibung der Abbildungen

Abbildung 1:
Schematischer Aufbau einer auf einem metallischen Substrat (S) angeordneten erfindungsgemäßen Mehrschichtlackierung (M) umfassend eine gehärtete Elektrotauchlackschicht (E.1) sowie eine Basislackschicht (B.2.1) und eine Klarlackschicht (K), welche gemeinsam gehärtet wurden.

Abbildung 2:
Schematischer Aufbau einer auf einem metallischen Substrat (S) angeordneten erfindungsgemäßen Mehrschichtlackierung (M) umfassend eine gehärtete Elektrotauchlackschicht (E.1), zwei Basislackschichten (B.2.2.x), nämlich eine erste Basislackschicht (B.2.2.a) und eine darüber angeordnete, oberste Basislackschicht (B.2.2.z), sowie eine Klarlackschicht (K), welche gemeinsam gehärtet wurden.

Abbildung 3:
Schematischer Aufbau einer auf einem metallischen Substrat (S) angeordneten erfindungsgemäßen Mehrschichtlackierung (M) umfassend eine gehärtete Elektrotauchlackschicht (E.1), drei Basislackschichten (B.2.2.x), nämlich eine erste Basislackschicht (B.2.2.a), eine darüber angeordnete Basislackschicht (B.2.2.b) und eine oberste Basislackschicht (B.2.2.z), sowie eine Klarlackschicht (K), welche gemeinsam gehärtet wurden.

## Patentansprüche

1. Verfahren zur Herstellung einer Mehrschichtlackierung (M) auf einem metallischen Substrat (S) umfassend
(1) Herstellung einer gehärteten Elektrotauchlackschicht (E.1) auf dem metallischen Substrat (S) durch elektrophoretisches Aufbringen eines Elektrotauchlacks (e.1) auf das Substrat (S) und anschließende Härtung des Elektrotauchlacks (e.1),
(2) Herstellung (2.1) einer Basislackschicht (B.2.1) oder (2.2) mehrerer direkt aufeinander folgender Basislackschichten (B.2.2.x) direkt auf der gehärteten Elektrotauchlackschicht (E.1) durch (2.1) Aufbringen eines wässrigen Basislacks (b.2.1) direkt auf die Elektrotauchlackschicht (E.1) oder (2.2) direkt aufeinanderfolgendes Aufbringen von mehreren Basislacken (b.2.2.x) auf die Elektrotauchlackschicht (E.1),
(3) Herstellung einer Klarlackschicht (K) direkt auf (3.1) der Basislackschicht (B.2.1) oder (3.2) der obersten Basislackschicht (B.2.2.x) durch Aufbringen eines Klarlacks (k) direkt auf (3.1) die Basislackschicht (B.2.1) oder (3.2) die oberste Basislackschicht (B.2.2.x),
(4) gemeinsame Härtung der (4.1) Basislackschicht (B.2.1) und der Klarlackschicht (K) oder (4.2) der Basislackschichten (B.2.2.x) und der Klarlackschicht (K),
**dadurch gekennzeichnet, dass**
der Basislack (b.2.1) oder mindestens einer der Basislacke (b.2.2.x) mindestens eine wässrige Dispersion (wD) umfasst,
wobei die Dispersion (wD) mindestens ein Polymerisat mit einer Teilchengröße von 100 bis 500 nm umfasst, dessen Herstellung die aufeinanderfolgende radikalische Emulsionspolymerisation von drei voneinander unterschiedlichen Mischungen (A), (B) und (C) von olefinisch ungesättigten Monomeren umfasst,
wobei
- die Mischung (A) mindestens 50 Gew.-% von Monomeren mit einer Löslichkeit in Wasser von kleiner 0,5 g/l bei 25°C enthält und ein Polymer, welches aus der Mischung (A) hergestellt wird, eine Glasübergangstemperatur von 10 bis 65°C besitzt,
- die Mischung (B) mindestens ein mehrfach ungesättigtes Monomer enthält und ein Polymer, welches aus der Mischung (B) hergestellt wird, eine Glasübergangstemperatur von -35 bis 15°C besitzt,
und
- ein Polymer, welches aus der Mischung (C) hergestellt wird, eine Glasübergangstemperatur von -50 bis 15°C besitzt,
und wobei
i. zunächst die Mischung (A) polymerisiert wird,
ii. dann die Mischung (B) in Gegenwart des unter i. hergestellten Polymerisats polymerisiert wird,
und
iii. danach die Mischung (C) in Gegenwart des unter ii. hergestellten Polymerisats polymerisiert wird.

2. Verfahren nach Anspruch 1, **dadurch gekennzeichnet, dass** der Anteil der Monomermischung (A) von 0,1 bis 10 Gew.-%, der Anteil der Monomerenmischung (B) von 60 bis 80 Gew.-% und der Anteil der Monomerenmischung (C) von 10 bis 30 Gew.-%, jeweils bezogen auf die Summe der Einzelmengen der Mischungen (A), (B) und (C), beträgt.

3. Verfahren nach Anspruch 1 oder 2, **dadurch gekennzeichnet, dass** die Monomermischung (A) mindestens einen einfach ungesättigten Ester der (Meth)acrylsäure mit einem Alkylrest und mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind, enthält.

4. Verfahren nach einem der Ansprüche 1 bis 3, **dadurch gekennzeichnet, dass** die Monomermischung (B) neben dem mindestens einen mehrfach olefinisch ungesättigten Monomer noch mindestens einen einfach ungesättigten Ester der (Meth)acrylsäure mit einem Alkylrest und mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind, enthält.

5. Verfahren nach einem der Ansprüche 1 bis 4, **dadurch gekennzeichnet, dass** die Monomermischung (B) als mehrfach olefinisch ungesättigte Monomere ausschließlich zweifach olefinisch ungesättigte Monomere enthält.

6. Verfahren nach einem der Ansprüche 1 bis 5, **dadurch gekennzeichnet, dass** die Monomermischungen (A) und (B) keine hydroxyfunktionellen Monomere und keine säurefunktionellen Monomere enthalten.

7. Verfahren nach einem der Ansprüche 1 bis 6, **dadurch gekennzeichnet, dass** die Monomermischung (C) mindestens eine alpha-beta ungesättigte Carbonsäure, mindestens einen einfach ungesättigten Ester der (Meth)acrylsäure mit einem mit einer Hydroxylgruppe substituierten Alkylrest und mindestens einen einfach ungesättigten Ester der (Meth)acrylsäure mit einem Alkylrest enthält.

8. Verfahren nach einem der Ansprüche 1 bis 7, **dadurch gekennzeichnet, dass** in den Stufen i. bis iii. die Zudosierung der olefinisch ungesättigten Monomere so erfolgt, dass in der Reaktionslösung ein Anteil freier Monomere von 6,0 Gew.-%, bezogen auf die Gesamtmenge der in der jeweiligen Polymerisationsstufe eingesetzten Monomere, während der gesamten Reaktionsdauer nicht überschritten wird.

9. Verfahren nach einem der Ansprüche 1 bis 8, **dadurch gekennzeichnet, dass** der Basislack (b.2.1) oder mindestens einer der Basislacke (b.2.2.x), bevorzugt alle der Basislacke (b.2.2.x), zudem mindestens ein weiteres Polymer als Bindemittel ausgewählt aus der Gruppe bestehend aus hydroxyfunktionellen Polyurethanen, Polyestern, Polyacrylaten und Mischpolymerisaten dieser Polymere enthält.

10. Verfahren einem der Ansprüche 1 bis 9, **dadurch gekennzeichnet, dass** der Basislack (b.2.1) oder mindestens einer der Basislacke (b.2.2.x), bevorzugt alle der Basislacke (b.2.2.x), zudem ein Melaminharz als Vernetzungsmittel enthält.

11. Verfahren nach einem der Ansprüche 1 bis 10, **dadurch gekennzeichnet, dass** der Basislack (b.2.1) oder mindestens einer der Basislacke (b.2.2.x), bevorzugt alle Basislacke (b.2.2.x), mindestens ein Farb- und/oder Effektpigment enthält.

12. Verfahren nach einem der Ansprüche 1 bis 11, **dadurch gekennzeichnet, dass** der Basislack (b.2.1) oder mindestens einer der Basislacke (b.2.2.x), bevorzugt alle der Basislacke (b.2.2.x), Einkomponenten-Beschichtungsmittel sind.

13. Verfahren nach einem der Ansprüche 1 bis 12, **dadurch gekennzeichnet, dass** die gemeinsame Härtung (4) bei Temperaturen von 100 bis 250°C für eine Dauer von 5 bis 60 min durchgeführt wird.

14. Verfahren nach einem der Ansprüche 1 bis 13, **dadurch gekennzeichnet, dass** die prozentuale Summe aus dem Festkörper und dem Anteil Wasser des Basislacks (b.2.1) oder mindestens eines der Basislacke (b.2.2.x), bevorzugt aller der Basislacke (b.2.2.x), bei mindestens 70 Gew.-%, bevorzugt 80 bis 90 Gew.-%, liegt.

15. Mehrschichtlackierung (M), die nach dem Verfahren gemäß einem der Ansprüche 1 bis 14 hergestellt wurde.

## Claims

1. Method for producing a multicoat paint system (M) on a metallic substrate (S), comprising
(1) producing a cured electrocoat (E.1) on the metallic substrate (S) by electrophoretic application of an electrocoat material (e.1) to the substrate (S) and subsequent curing of the electrocoat material (e.1),
(2) producing (2.1) a basecoat (B.2.1) or (2.2) two or more directly successive basecoats (B.2.2.x) directly on the cured electrocoat (E.1) by (2.1) application of an aqueous basecoat material (b.2.1) directly to the electrocoat (E.1) or (2.2) directly successive application of two or more basecoat materials (b.2.2.x) to the electrocoat (E.1),
(3) producing a clearcoat (K) directly on (3.1) the basecoat (B.2.1) or (3.2) on the topmost basecoat (B.2.2.x) by application of a clearcoat material (k) directly to (3.1) the basecoat (B.2.1) or (3.2) to the topmost basecoat (B.2.2.x),
(4) jointly curing the (4.1) basecoat (B.2.1) and the clearcoat (K) or (4.2) the basecoats (B.2.2.x) and the clearcoat (K),
**characterized in that**
the basecoat material (b.2.1) or at least one of the basecoat materials (b.2.2.x) comprises at least one aqueous dispersion (wD),
the dispersion (wD) comprising at least one polymer having a particle size of 100 to 500 nm and produced by successive radical emulsion polymerization of three mixtures (A), (B), and (C), different from one another, of olefinically unsaturated monomers,
- the mixture (A) comprising at least 50 wt% of monomers having a solubility in water of less than 0.5 g/l at 25°C, and a polymer prepared from the mixture (A) possessing a glass transition temperature of 10 to 65°C,
- the mixture (B) comprising at least one polyunsaturated monomer, and a polymer prepared from the mixture (B) possessing a glass transition temperature of -35 to 15°C,
and
- a polymer prepared from the mixture (C) possessing a glass transition temperature of -50 to 15°C,
and
i. first mixture (A) being polymerized,
ii. then mixture (B) being polymerized in the presence of the polymer prepared under i.,
and
iii. thereafter mixture (C) being polymerized in the presence of the polymer prepared under ii.

2. Method according to Claim 1, **characterized in that** the fraction of the monomer mixture (A) is from 0.1 to 10 wt%, the fraction of the monomer mixture (B) is from 60 to 80 wt%, and the fraction of the monomer mixture (C) is from 10 to 30 wt%, based in each case on the sum of the individual amounts of the mixtures (A), (B), and (C).

3. Method according to Claim 1 or 2, **characterized in that** the monomer mixture (A) comprises at least one monounsaturated ester of (meth)acrylic acid having an alkyl radical, and at least one monoolefinically unsaturated monomer containing vinyl groups and having, located on the vinyl group, a radical which is aromatic or which is mixed saturated-aliphatic-aromatic, in which case the aliphatic moieties of the radical are alkyl groups.

4. Method according to any of Claims 1 to 3, **characterized in that** the monomer mixture (B) comprises, in addition to the at least one polyolefinically unsaturated monomer, at least one monounsaturated ester of (meth)acrylic acid having an alkyl radical and at least one monoolefinically unsaturated monomer containing vinyl groups and having, located on the vinyl group, a radical which is aromatic or which is mixed saturated-aliphatic-aromatic, in which case the aliphatic moieties of the radical are alkyl groups.

5. Method according to any of Claims 1 to 4, **characterized in that** the monomer mixture (B) comprises, as polyolefinically unsaturated monomers, exclusively diolefinically unsaturated monomers.

6. Method according to any of Claims 1 to 5, **characterized in that** the monomer mixtures (A) and (B) comprise no hydroxy-functional monomers and no acid-functional monomers.

7. Method according to any of Claims 1 to 6, **characterized in that** the monomer mixture (C) comprises at least one alpha-beta unsaturated carboxylic acid, at least one monounsaturated ester of (meth) acrylic acid having an alkyl radical substituted by a hydroxyl group, and at least one monounsaturated ester of (meth)acrylic acid having an alkyl radical.

8. Method according to any of Claims 1 to 7, **characterized in that** the metered addition of the olefinically unsaturated monomers in stages i. to iii. is such that in the reaction solution a fraction of free monomers of 6.0 wt%, based on the total amount of the monomers used in the respective polymerization stage, is not exceeded throughout the reaction time.

9. Method according to any of Claims 1 to 8, **characterized in that** the basecoat material (b.2.1) or at least one of the basecoat materials (b.2.2.x), preferably all of the basecoat materials (b.2.2.x), further comprises at least one further polymer as binder, selected from the group consisting of hydroxy-functional polyurethanes, polyesters, polyacrylates, and copolymers of these polymers.

10. Method according to any of Claims 1 to 9, **characterized in that** the basecoat material (b.2.1) or at least one of the basecoat materials (b.2.2.x), preferably all of the basecoat materials (b.2.2.x), further comprises a melamine resin as crosslinking agent.

11. Method according to any of Claims 1 to 10, **characterized in that** the basecoat material (b.2.1) or at least one of the basecoat materials (b.2.2.x), preferably all of the basecoat materials (b.2.2.x), comprises at least one color and/or effect pigment.

12. Method according to any of Claims 1 to 11, **characterized in that** the basecoat material (b.2.1) or at least one of the basecoat materials (b.2.2.x), preferably all of the basecoat materials (b.2.2.x), are one-component coating compositions.

13. Method according to any of Claims 1 to 12, **characterized in that** the joint curing (4) is carried out at temperatures of 100 to 250°C for a time of 5 to 60 min.

14. Method according to any of Claims 1 to 13, **characterized in that** the percentage sum of the solids content and the fraction of water of the basecoat material (b.2.1) or of at least one of the basecoat materials (b.2.2.x), preferably of all of the basecoat materials (b.2.2.x), is at least 70 wt%, preferably 80 to 90 wt%.

15. Multicoat paint system (M) produced by the method according to any of Claims 1 to 14.

## Revendications

1. Procédé pour la réalisation d'un laquage multicouche (M) sur un substrat métallique (S), comprenant
(1) la réalisation d'une couche de laque d'électro-immersion (E.1) durcie sur le substrat métallique (S) par application électrophorétique d'une laque d'électro-immersion (e.1) sur le substrat (S) et durcissement consécutif de la laque d'électro-immersion (e.1),
(2) la réalisation (2.1) d'une couche de laque de base (B.2.1) ou (2.2) de plusieurs couches de laque de base (B.2.2.x) directement consécutives directement sur la couche de laque d'électro-immersion (E.1) durcie par (2.1) application d'une laque de base aqueuse (b.2.1) directement sur la couche de laque d'électro-immersion (E.1) ou par (2.2) application directement consécutive de plusieurs couches de laque de base (b.2.2.x) sur la couche de laque d'électro-immersion (E.1),
(3) la réalisation d'une couche de laque claire (K) directement sur (3.1) la couche de laque de base (B.2.1) ou sur (3.2) la couche de laque de base supérieure (B.2.2.x) par application d'une laque claire (k) directement sur (3.1) la couche de laque de base (B.2.1) ou sur (3.2) la couche de laque de base supérieure (B.2.2.x),
(4) le durcissement commun de (4.1) la couche de laque de base (B.2.1) et de la couche de laque claire (K) ou (4.2) des couches de laque de base (B.2.2.x) et de la couche de laque claire (K),
**caractérisé en ce que** la laque de base (b.2.1) ou au moins l'une des laques de base (b.2.2.x) comprend au moins une dispersion aqueuse (wD),
la dispersion (wD) comprenant au moins un polymère présentant une grosseur de particule de 100 à 500 nm, dont la préparation comprend la polymérisation radicalaire en émulsion successive de trois mélanges différents les uns des autres (A), (B) et (C) de monomères oléfiniquement insaturés,
- le mélange (A) contenant au moins 50% en poids de monomères présentant une solubilité dans l'eau inférieure à 0,5 g/l à 25°C et un polymère qui est préparé à partir du mélange (A) présentant une température de transition vitreuse de 10 à 65°C,
- le mélange (B) contenant un monomère polyinsaturé et un polymère qui est préparé à partir du mélange (B) présentant une température de transition vitreuse de -35 à 15°C et
- un polymère qui est préparé à partir du mélange (C) présentant une température de transition vitreuse de -50°C à 15°C,
et
i. le mélange (A) étant d'abord polymérisé,
ii. ensuite, le mélange (B) étant polymérisé en présence du polymère préparé sous i. et
iii. ensuite, le mélange (C) étant polymérisé en présence du polymère préparé sous ii.

2. Procédé selon la revendication 1, **caractérisé en ce que** la proportion du mélange de monomères (A) est de 0,1 à 10% en poids, la proportion du mélange de monomères (B) est de 60 à 80% en poids et la proportion du mélange de monomères (C) est de 10 à 30% en poids, à chaque fois par rapport à la somme des quantités individuelles des mélanges (A), (B) et (C).

3. Procédé selon la revendication 1 ou 2, **caractérisé en ce que** le mélange de monomères (A) contient au moins un ester monoinsaturé de l'acide (méth)acrylique présentant un radical alkyle et au moins un monomère oléfiniquement monoinsaturé contenant des groupes vinyle présentant un radical disposé sur le groupe vinyle, qui est aromatique ou aliphatique saturé-aromatique mixte, les proportions aliphatiques du radical étant des groupes alkyle.

4. Procédé selon l'une quelconque des revendications 1 à 3, **caractérisé en ce que** le mélange de monomères (B) contient, outre ledit au moins un monomère oléfiniquement polyinsaturé, encore au moins un ester monoinsaturé de l'acide (méth)acrylique présentant un radical alkyle et au moins un monomère oléfiniquement monoinsaturé contenant des groupes vinyle présentant un radical disposé sur le groupe vinyle, qui est aromatique ou aliphatique saturé-aromatique mixte, les proportions aliphatiques du radical étant des groupes alkyle.

5. Procédé selon l'une quelconque des revendications 1 à 4, **caractérisé en ce que** le mélange de monomères (B) contient, comme monomères oléfiniquement polyinsaturés, exclusivement des monomères oléfiniquement di-insaturés.

6. Procédé selon l'une quelconque des revendications 1 à 5, **caractérisé en ce que** les mélanges de monomères (A) et (B) ne contiennent pas de monomères à fonctionnalité hydroxy ni de monomères à fonctionnalité acide.

7. Procédé selon l'une quelconque des revendications 1 à 6, **caractérisé en ce que** le mélange de monomères (C) contient au moins un acide carboxylique alpha-bêta-insaturé, au moins un ester monoinsaturé de l'acide (méth)acrylique présentant un radical alkyle substitué par un groupe hydroxyle et au moins un ester monoinsaturé de l'acide (méth)acrylique présentant un radical alkyle.

8. Procédé selon l'une quelconque des revendications 1 à 7, **caractérisé en ce que**, dans les étapes i. à iii., le dosage des monomères oléfiniquement insaturés a lieu de manière telle que dans la solution réactionnelle, une proportion de monomères libres de 6,0% en poids, par rapport à la quantité totale des monomères utilisés dans l'étage de polymérisation respectif, pendant toute la durée de réaction, n'est pas dépassée.

9. Procédé selon l'une quelconque des revendications 1 à 8, **caractérisé en ce que** la laque de base (b.2.1) ou au moins l'une des laques de base (b.2.2.x), de préférence toutes les laques de base (b.2.2.x) contiennent en outre au moins un autre polymère comme liant, choisi dans le groupe constitué par les polyuréthanes, les polyesters, les polyacrylates à fonctionnalité hydroxy et les polymères mixtes de ces polymères.

10. Procédé selon l'une quelconque des revendications 1 à 9, **caractérisé en ce que** la laque de base (b.2.1) ou au moins l'une des laques de base (b.2.2.x), de préférence toutes les laques de base (b.2.2.x), contiennent en outre une résine de mélamine comme réticulant.

11. Procédé selon l'une quelconque des revendications 1 à 10, caractérisé en ce la laque de base (b.2.1) ou au moins l'une des laques de base (b.2.2.x), de préférence toutes les laques de base (b.2.2.x), contiennent au moins un pigment colorant et/ou conférant un effet.

12. Procédé selon l'une quelconque des revendications 1 à 11, **caractérisé en ce que** la laque de base (b.2.1) ou au moins l'une des laques de base (b.2.2.x), de préférence toutes les laques de base (b.2.2.x) sont des agents de revêtement à un composant.

13. Procédé selon l'une quelconque des revendications 1 à 12, **caractérisé en ce que** le durcissement commun (4) est réalisé à des températures de 100 à 250°C pendant une durée de 5 à 60 minutes.

14. Procédé selon l'une quelconque des revendications 1 à 13, **caractérisé en ce que** la somme en pour cent du corps solide et de la proportion d'eau de laque de base (b.2.1) ou d'au moins l'une des laques de base (b.2.2.x), de préférence de toutes les laques de base (b.2.2.x), est d'au moins 70% en poids, de préférence de 80 à 90% en poids.

15. Laquage multicouche (M), qui a été réalisé selon le procédé selon l'une quelconque des revendications 1 à 14.
